(19) Europäisches Patentamt
European Patent Office
Office européen des brevets

(11) **EP 1 432 139 B1**

(12) **EUROPEAN PATENT SPECIFICATION**

(45) Date of publication and mention
of the grant of the patent:
**11.08.2010 Bulletin 2010/32**

(51) Int Cl.:
***H04B 3/54*** (2006.01)

(21) Application number: **03104705.3**

(22) Date of filing: **16.12.2003**

(54) **Digital data distribution system**

Digitaldatenverteilsystem

Système de distribution de données numérique

(84) Designated Contracting States:
**AT BE BG CH CY CZ DE DK EE ES FI FR GB GR
HU IE IT LI LU MC NL PT RO SE SI SK TR**

(30) Priority: **19.12.2002 EP 02102836**

(43) Date of publication of application:
**23.06.2004 Bulletin 2004/26**

(73) Proprietor: **Laboratoire Europeen ADSL Leacom
Fastnet
92400 Courbevoie (FR)**

(72) Inventors:
• **Fernandez, Thierry
92400 Courbevoie (FR)**
• **Grenie, Olivier
92300 Levallois Perret (FR)**
• **Buchoux, Vincent
75013 Paris (FR)**

(74) Representative: **Schmit, Christian Norbert Marie
SCHMIT CHRETIEN
8, place du Ponceau
95000 Cergy (FR)**

(56) References cited:
**EP-A- 0 921 658     WO-A-98/44651**

## Description

The present invention has as an object a digital data distribution system that set a waveform used for indoor power line communication systems. The aim of the invention is to provide a universal system able of adaptation to every environment found in power line networks.

Reference is herein made to following standards and prior art:

- WO 98/44651-A, 8 October 1998, and EP-A-0 921 658 9 June 1999,
- IEEE standard for information technology - telecommunications and information exchange between systems - local and metropolitan area networks - specific requirements part 3: carrier sense multiple access with collision detection (CSMA/CD) access method and physical layer specifications,
- IEEE Std 802.3-2000 (Revision of IEEE Std 802.3, 2000 edition), 2000,
- Digital Communications, John G. Proakis - McGraw-Hill, New York, third edition, 1995,
- CDMA for wireless personal communications, Ramjee PRASAD - Artech House Publishers, May 1996,
- Spread spectrum CDMA systems for wireless communications, Savo GLISIC, Branka VUCETIC - Artech House Publishers, April 1997,
- Frequenzbereichszuweisungsplanverordnung (German regulation for the use of frequencies in and along conductors and possible incompatibility between radio and cable applications), Bundesministerium für Wirtschaft und Technologie, 26th July 2002, a.k.a. NB30
- Publication of the Frequency band allocation ordinance (FreqBZPV), including Usage Provision 30, following approval by the federal government of the federal republic of Germany, Germany, CEPT/ERC PT SE35, May 2001, a.k.a. NB30
- Radio frequency devices, American federal communications commission, 22nd July 2002,
- MPT 1570 - radiation limits and measurement specification - electromagnetic radiation in the range 9 KHz to 1.6 MHz from material substances forming part of a telecommunication system, radiocommunications agency, 3rd August 2001,
- Appareils de traitement de l'information caractéristiques des perturbations radioélectriques limites et méthodes de mesure, CENELEC, 1999.

It is known from existing prior art, namely DE-A-197 16 011, and EP-A-0 975 097, multi carrier modulation (MCM) data transmission techniques for transmitting data on power lines. It is also known from "MV and LV powerline communications: new proposed IEC standards", due to Stefan RAMSEIER, Michael ARZBERGER, and Andreas HAUSER, in XP-002136480, IEEE 1999, different alternative schemes for transmitting data on power lines.

All the known techniques suffer however the drawbacks of not being enough flexible to correspond to any power line networks, or to any situations. Particularly, when a connection of a power line network to a dedicated transmission network is involved, for example a connection to a home specific data transmission network, a home telephone network or a cable, the needs may be so various that at each time a specific connection system has to be designed. It is an aim of the invention to provide for a universal transmission system, on power lines.

This is achieved, according to the invention by recognizing that the transmissions are generally unbalanced. Particularly when connecting to Internet, or more generally to a server, it has been noted that the amount of data transmitted is greater for a downlink transmission, from the server to the user, than for an uplink transmission, from a user equipment to the server. It has also been noted that the needs were different. For a downlink transmission, a real time transmission with a high bit rate is necessary. For uplink transmissions, a high bit rate transmission is also necessary, but with random access.

In the invention, it is taken advantage of this situation in providing a system in which a downlink transmission uses a CDMA coding scheme while, in an uplink transmission, use is made of a non CDMA coding scheme, typically a QAM modulation scheme. It then can be shown that that kind of unbalanced two directions transmission system is able to satisfy the request for a real time downlink multi users transmission. In particular, no delay and synchronism problems occur between user devices, which would happen if CDMA uplink transmission mode modes were used from these user devices. A CDMA solution would however theoretically be possible, but by the way of a very complicated algorithm, which would increase drastically the development costs.

With the invention, it may be achieved a downlink rate of 75 Ksymbols per second for each coding sequence of the CDMA transmission. That leads, with a ten codes channel, to a real rate of 1,5 Mbits per second (including signalisation signals), which is sufficient for downlink transmission, either video or audio transmissions, of course for data transmissions. Moreover, a dynamic attribution of coding sequence to one among several user equipments permits a rate of 3 Mbits per second, if twenty codes are temporarily attributed to a channel.

For an uplink channel, a narrow bandwidth of 2,5 MHz authorizes a rate of 2,5Mbauds per second. With a QPSK (as specified in this system), i.e. a QAM 2 modulation a 5 Mbits per second is obtained. This rate may go up to 15 Mbits per second with a QAM 6 (equivalent to a 64 QAM). Taking into account that the propagation range is decreasing with the modulation indicia, the complexity of the modulation constellation, this QAM 6 is well convenient for 5 to 10 meters propagation which are encountered in domestic networks.

The system of the invention thus allows allocating a fixed quality to the downlink channel. Eventually this quality may be negotiated with the server. For the uplink channel a contention system, an anti collision system, gives a full rate to every user, as and when this user is randomly requesting it. For example, for the uplink channel, an ethernet frame rythm is retained. An uplink interface then places ethernet frame data on the network (with encapsulation and modulation), ethernet frame by ethernet frame, listening to the availability of the network between each ethernet frames. This repartition between means for downlink channel and uplink channel solves all the problem of adequacy of the quality of the existing networks to the real time needs met in any situation.

As a result, the invention has for an object a method for the management of a network wherein

- data are sent between slave devices and a master device, **characterized in that**
- a managment of a transport of these data is performed by the master device,
- the master device performs a transport logical link
- said transport logical link comprising an allocation of time slots for an uplink data transport from each slave device to said master device, and
- said transport logical link comprising an allocation of codes for a downlink data transport from said master device to each user device.

The invention will be understood more clearly from the following description and the appended figures. These figures are given purely by way of an indication and in no way restrict the scope of the invention. These figures show:

- Figure 1: System configuration
- Figure 2: Spectrum occupancy
- Figure 3: downlink emission: framing
- Figure 4: downlink emission: spreading - filtering - up-sampling
- Figure 5: MII controller
- Figure 6: MII controller: state machine
- Figure 7: ethernet frame format
- Figure 8: MII interface: management frame
- Figure 9: downlink emission: formation of a CDMA frame
- Figure 10: downlink emission: SOF flag generation
- Figure 11: downlink emission: header generation
- Figure 12: downlink emission: header multiplexing
- Figure 13: downlink emission: header encoder
- Figure 14: downlink emission: header multiplexing
- Figure 15: downlink emission: header encoder (Reed-Solomon)
- Figure 16: downlink emission: Reed-Solomon encoder
- Figure 17: downlink emission: payload processing
- Figure 18: downlink emission: first convolutive encoder - block
- Figure 19: downlink emission: first convolutive encoder - principle
- Figure 20: downlink emission: second convolutive encoder - block
- Figure 21: downlink emission: second convolutive encoder - principle
- Figure 22: downlink emission: interleaver - block
- Figure 23: downlink emission: interleaver - writing
- Figure 24: downlink emission: interleaver - reading
- Figure 25: downlink emission: SOF header and payload multiplexing
- Figure 26: downlink emission: user to code demux - block
- Figure 27: downlink emission: spreading - principle
- Figure 28: downlink emission: Hadamard sequence generation
- Figure 29: downlink emission: spreader
- Figure 30: downlink emission: shaping filter
- Figure 31: downlink emission: first interpolation
- Figure 32: downlink emission: baseband to IF transposition (NCO)
- Figure 33: downlink emission: second interpolation
- Figure 34: downlink emission: second interpolation - phase and magnitude of the up-sampler filter
- Figure 35: downlink emission: second interpolation - filter response to a Dirac

- Figure 36: uplink reception: down-sampling & filtering
- Figure 37: uplink reception: synchronization, demodulation & de-framing
- Figure 38: uplink reception: IF to baseband transposition (NCO)
- Figure 39: uplink reception: down-sampler
- Figure 40: uplink reception: first and second down-samplers - down-sampling filter response
- Figure 41: uplink reception: third down-sampler - down-sampling filter response
- Figure 42: uplink reception: SRRC filter
- Figure 43: uplink reception: SRRC filter - implementation
- Figure 44: uplink reception: synchronization & demodulation
- Figure 45: uplink reception: synchronization & demodulation - sequencer
- Figure 46: uplink reception: synchronization
- Figure 47: uplink reception: demodulation
- Figure 48: uplink reception: demodulation - delay line
- Figure 49: uplink reception: demodulation - phase correction
- Figure 50: uplink reception: demodulation - QPSK de-mapping
- Figure 51: uplink reception: demodulation - reformat output samples
- Figure 52: uplink reception: demodulation - update synchronization position
- Figure 53: uplink reception: demodulation - update phase
- Figure 54: uplink reception: demodulation - update phase - phase computation
- Figure 55: uplink reception: de-framing
- Figure 56: uplink reception: de-framing - decode header
- Figure 57: uplink reception: de-framing - de-interleaver
- Figure 58: uplink reception: de-framing - first payload decoder (Viterbi decoder)
- Figure 59: uplink reception: de-framing - second payload decoder (Viterbi decoder)
- Figure 60: uplink reception: de-framing - data buffer
- Figure 61: downlink reception: down-sampling & filtering
- Figure 62: downlink reception: synchronization - demodulation
- Figure 63: downlink reception: de-framing
- Figure 64: downlink reception: automatic gain control
- Figure 65: downlink reception: first decimation
- Figure 66: downlink reception: first decimation - phase and magnitude of the down-sampler filter
- Figure 67: downlink reception: first decimation - filter response to a Dirac
- Figure 68: downlink reception: IF to baseband transposition (NCO)
- Figure 69: downlink reception: second decimation
- Figure 70: downlink reception: second decimation - phase and magnitude of the down-sampler filter
- Figure 71: downlink reception: second decimation- filter response to a Dirac
- Figure 72: downlink reception: shaping filter
- Figure 73: downlink reception: synchronization
- Figure 74: downlink reception: synchronization - synchro block - block
- Figure 75: downlink reception: synchronization - synchro block - principle
- Figure 76: downlink reception: synchronization - correlation points computation - block
- Figure 77: downlink reception: synchronization - correlation points computation - principle
- Figure 78: downlink reception: synchronization - maximum searcher
- Figure 79: downlink reception: synchronization - synchronization position filter - block
- Figure 80: downlink reception: synchronization - synchronization position filter - principle
- Figure 81: downlink reception: synchronization - delay line - block
- Figure 82: downlink reception: synchronization - delay line - principle
- Figure 83: downlink reception: demodulation - block
- Figure 84: downlink reception: demodulation - principle
- Figure 85: downlink reception: de-multiplexing
- Figure 86: downlink reception: de-framing - state machine
- Figure 87: downlink reception: de-framing - detect SOF flag
- Figure 88: downlink reception: de-framing - decode header
- Figure 89: downlink reception: de-framing - de-interleaver
- Figure 90: downlink reception: de-framing - first payload decoder (Viterbi decoder)
- Figure 91: downlink reception: de-framing - second payload decoder (Viterbi decoder)
- Figure 92: downlink reception: de-framing - data buffer
- Figure 93: uplink emission: framing

**EP 1 432 139 B1**

- Figure 94: uplink emission: spreading - filtering - up-sampling
- Figure 95: uplink emission - CDMA frame
- Figure 96: uplink emission: header generation
- Figure 97: uplink emission: header multiplexing
- Figure 98: uplink emission: header encoder
- Figure 99: uplink emission: header multiplexing
- Figure 100: uplink emission: header encoder (Reed-Solomon)
- Figure 101: uplink emission: Reed-Solomon encoder
- Figure 102: uplink emission: payload processing
- Figure 103: uplink emission: first convolutive encoder - block
- Figure 104: uplink emission: first convolutive encoder - principle
- Figure 105: uplink emission: second convolutive encoder - block
- Figure 106: uplink emission: second convolutive encoder - principle
- Figure 107: uplink emission: interleaver - block
- Figure 108: uplink emission: interleaver - writing
- Figure 109: uplink emission: interleaver - reading
- Figure 110: uplink emission: header and payload multiplexing
- Figure 111: uplink emission: spreading - filtering - up-sampling
- Figure 112: uplink emission: QPSK mapping
- Figure 113: uplink emission: QPSK mapping - detailed implementation
- Figure 114: uplink emission: QPSK mapping - sequencer - state machine
- Figure 115: uplink emission: SRRC filter
- Figure 116: uplink emission - SRRC filter - detailed implementation
- Figure 117: uplink emission: first interpolation
- Figure 118: uplink emission: baseband to IF transposition (NCO)
- Figure 119: one gateway several slaves
- Figure 120: services: state machine
- Figure 121 Frame format - Header uncoded
- Figure 122 Management frame format - Header uncoded
- Figure 123 transport frame format
- Figure 124 management frame format
- Figure 125 uplink division into Media Access Window
- Figure 126 Media Access: uplink
- Figure 127 Media Access: time sequence
- Figure 128 de-authentication request by a user
- Figure 129 de-authentication request by the gateway
- Figure 130 Media Access: declaration of new users - no collision
- Figure 131 Media Access: declaration of new users - collision
- Figure 132 PLT network
- Figure 133 control ethernet frame format
- Figure 134 control ethernet frame - detailed format
- Figure 135 MAC management sub-frame - resource plan
- Figure 136 user authentication time sequence
- Figure 137 user authentication MAC management sub-frame format
- Figure 138 user authentication - time sequence
- Figure 139 user de-authentication requested by the gateway
- Figure 140 user de-authentication requested by the slave node
- Figure 141 user authentication MAC management sub-frame format For understanding the invention use is made of the following definitions and abbreviations :

| | |
|---|---|
| ADC: | Analogue to Digital Converter |
| AFE: | Analogue Front End |
| AGC: | Automatic Gain Controller |
| BPSK: | Binary Phase Shift Keying |
| CDMA: | Code Division Multiple Access |
| CDMA_HMC: | CDMA Header Multiplexing and Coding : block, which generates the CDMA frame header |
| DAC: | Digital to Analogue Converter |
| DBCh: | Downlink Broadcast Channel |

| | |
|---|---|
| DDSCh: | Downlink Dedicated Synchronization Channel |
| DDTCh: | Downlink Dedicated Transport Channels |
| DEMUX: | De multiplexer : block, which distribute all the bits on the different CDMA codes |
| Dlk: | Downlink |
| DSSCh: | Downlink Symbol Synchronization Channel |
| Fc: | Chip Frequency (5MHz) |
| FIFO: | First In First Out |
| FIR: | Finite Impulse Response |
| GF: | Galois Field |
| HDMUX: | Header Data Multiplex: block, which concatenates all the fields of a CDMA frame |
| ISI: | Inter Symbol Interference |
| LFSR: | Linear Feedback Shift Registers |
| LSB: | Least Significant Bit |
| MAC: | Medium Access Control |
| MDI: | Management Data Interface |
| MII: | Media Independent Interface |
| MSB: | Most Significant Bit |
| NCO: | Numerically Controlled Oscillator |
| ISO: | International Organization for Standardization |
| OSI: | Open System Interconnection |
| PLT: | Powerline Telecommunications |
| ppm: | Part per million |
| PHY: | Physical |
| PLNC: | Powerline Network Controller |
| PLNIC: | Powerline Network Interface Card |
| QPSK: | Quadrature Phase Shift Keying |
| RS: | Reed-Solomon |
| SOF: | Start Of Frame flag |
| Rx: | Receiver |
| sfd: | Start of Frame Delimiter |
| Tc: | Time chip: duration of one chip (=0.2$\mu$s, in a preferred example) |
| Ts: | Time symbol: duration of one symbol, 64 chips (=12.8$\mu$s in a preferred example) |
| Tx: | Transmission |
| TX_NB_CODES: | Number of codes used on the downlink link |
| TX_NB_CODE_MAX: | Maximum number of codes on the downlink link (=63 in a preferred example) |
| TX_NB_CODE_Ui: | Number of active codes for the user *i* |
| TX_NB_USER: | Number of user |
| TX_NB_USER_MAX: | Maximum number of users (=10 in a preferred example). |

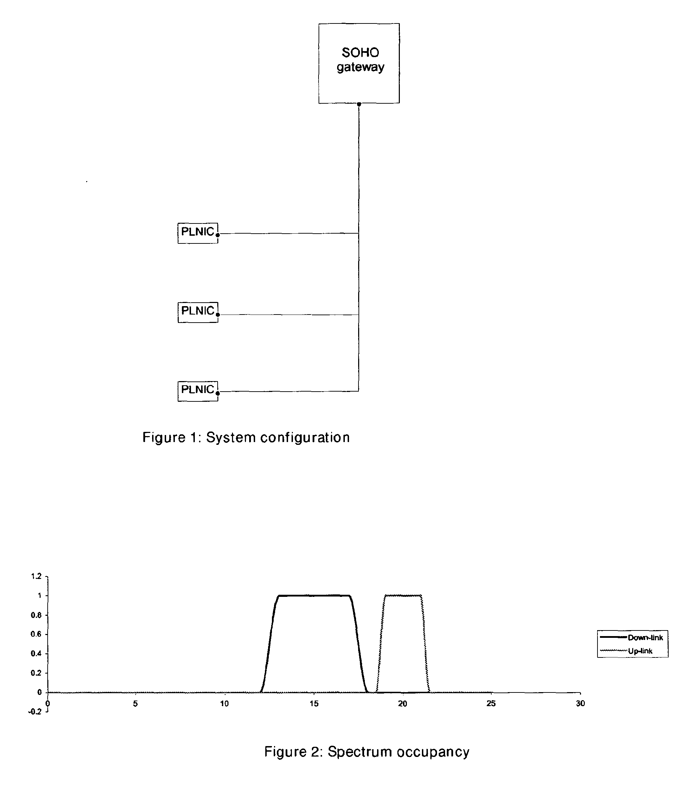

Fig 1 shows a CDMA system configuration according to the invention, where for one gateway (PLNC) up to ten different Powerline Network interface Controllers (PLNIC) corresponding to ten users may be used. Several slave nodes are connected to a single master node. The gateway clock of the Powerline Network Controller (PLNC) is a crystal oscillator at 50 MHz with an accuracy of 50 ppm. In the Powerline Network Interface Cards, PLNIC, a clock is provided by a VCXO with the following specifications: Frequency : 50 MHz, Accuracy : 50 ppm, Pulling : 100 ppm.

A physical layer interface standardizes the electrical, mechanical and functional control of data circuits that are connected to physical media.

The waveforms in the transmission are following

| | |
|---|---|
| Downlink access techniques: | DS-CDMA |
| Downlink code length: | 64 chips |
| Downlink chip rate: | 5 Mchip/s |
| Downlink center frequency: | 15 MHz |
| Downlink roll-off: | 0.22 |
| Uplink access technique: | QAM Modulation |
| Uplink symbol rate: | 2.5Msymbol/s |
| Uplink center frequency: | 20MHz |

Uplink roll-off: 0.22

In the spectra shown in Fig 2, the low bandwidth is dedicated to downlink transmissions, between around 12MHz and 18MHz, the high narrow bandwidth is dedicated to the uplink transmissions, between 18MHz and 22MHz. The downlink and uplink communications are asymmetric. The goal of the system is to primary guaranty a sufficient QoS on the downlink in order to enable multimedia streaming (video or audio) or web pages browsing. Compared to the uplink, the downlink is implemented on a lower frequency bandwidth enabling a better QoS on the downlink.

As concern the transmitter scheduling, at every symbol time, 2 x TX_NB_CODES coded bits are sent on the channel. As concern a receiver scheduling for the nodes, at every symbol time, 2 x TX_NB_CODES coded bits are received. As concern a receiver scheduling for the Hub, the hub may receive several frames at a time.

The downlink channel specification is now presented. The access mechanism for the downlink channel is the DS-CDMA. The downlink is divided into 64 different logical channels. Each channel is differentiated by one CDMA code. The codes used are 64-bit Hadamard codes.

As a bandwidth allocation protocol, each downlink channel has a bandwidth of 128 Kbps.

Channels D0 to D59 are downlink channels.

The Gateway PLNC is responsible for channel allocation.

At any time, the communication between remote power-line interface card and the Gateway uses up to 50 codes for the downlink (i.e. 7.8 Mbps). It shall be noticed that the first Hadamard spreading code (that equals to +1) is never used for spectrum purposes.

A Common Symbol Synchronization signal is emitted on the downlink to synchronize the devices with the Gateway. The synchronization signal is defined as a constant BPSK modulated sequence, namely '+1'. This signal is then spread using dedicated spreading codes (the 31st and 63rd Hadamard codes).

Among the 63 Hadamard codes, one is dedicated to the broadcast channel. This channel is demodulated by every remote interface and carries network management information such as the allocation of the code (activation and de-activation).

The downlink transport channels are numbered D1 to D63. Each channel carries 156 Kbps from the Gateway to the remote powerline interface card. The channels number D31 and D63 are dedicated for the synchronization and therefore are not enable for transport channels.

The uplink channel is designed as a common bus for each PLNIC (end users). Only one PLNIC can access the medium at each time.

In order to handle several users, the gateway is responsible to allow to the different users (PLNIC) to emit or not on the medium. The technique used to allow these users is not specified in the present claim ..

On the gateway side, the chipset is referenced herein below as LK12001 chipset, while on the user side the slave chipset is referenced to as LK12011.

MASTER LK12001 DOWNLINK TRANSMISSION CHIP

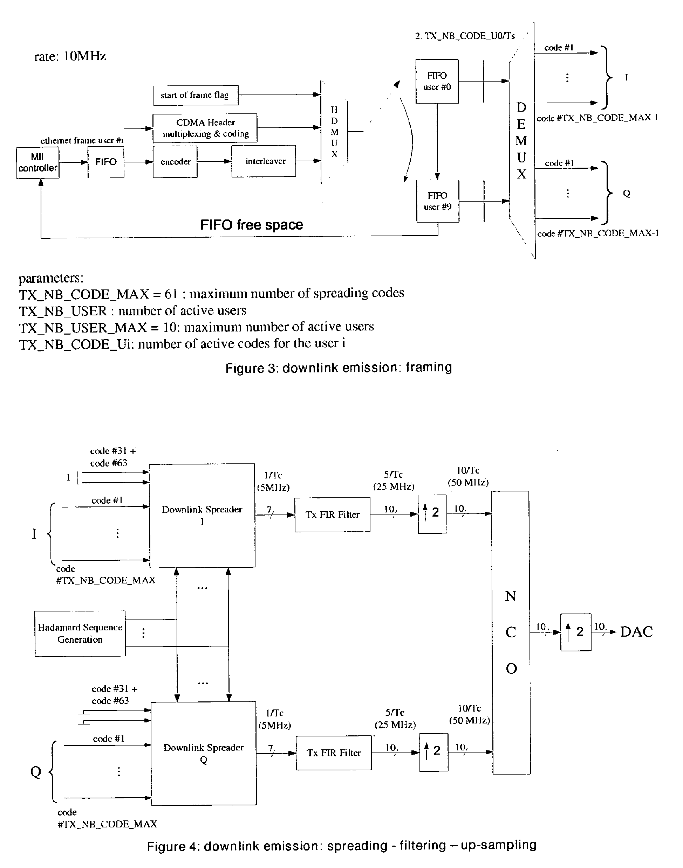

The principle of the CDMA chipset, in downlink emission framing, is depicted according to Fig 3. In Fig 3 a HDMUX receives a start of flag signal, a CDMA header and a coded and interleaved signal . These HDMUX feeds in one example ten FIFO circuits dedicated to ten users, numbered 0 to 9. A controlling signal from these FIFO circuits is processed for providing the interleaved signal. A controlling signal also drives the feeding of the FIFO circuits by the HDMUX. An interleaver and encoder are providing the interleaved signal. They aim at preventing the error due to the channel. A DEMUX provides for TX_NB_CODE_MAX coded signals.

Fig 4 is showing downlink emission: spreading, filtering, and up-sampling operation of TX_NB_CODE_MAX signals provided by the circuit of Fig 3. Two downlink spreaders receive these signals together with Hadamard sequences. Signals output of these spreaders are filtered and are controlling a digitally controlled oscillator NCO.

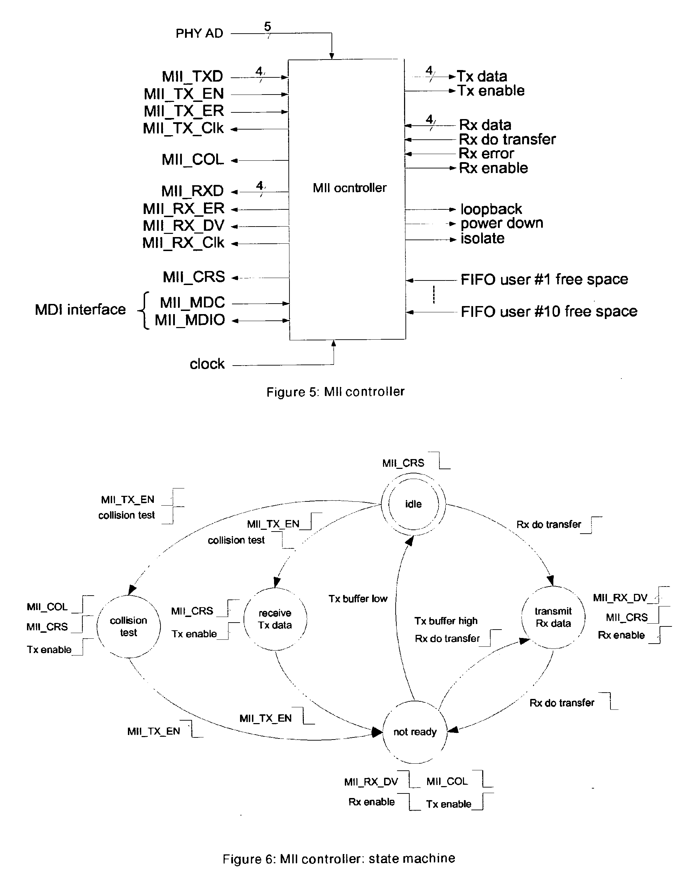

The MII controller of Fig 3 is depicted on Fig 5. It plays the interface between the MAC layer (external controller) and the CDMA chipset (LK12001 or LK12011). It performs an implementation of the norm 802.3 clause 22 (MII bus) on the PLT-CDMA system. These two modules exchange Ethernet frames. There are two kinds of Ethernet frames:

  ? data frames: have to be transmitted using the power line transmission, PLT, medium
  ? management frames: these frames are not transmitted on the PLT medium. Their aim is to manage the CDMA chipset (LK12001 or LK12011).

The utilized signals are in transmission:

  MII_TX_Clk : This clock provides the timing reference for the transmission of the data - MII_TXD - and for other signals - MII_TX_EN and MII_TX_ER - from the external controller through the MII interface to the CDMA chipset (LK12001 or LK12011). As the bit rate is 10Mb/s then this clock is a 2.5MHz clock.

MII_TXD : this pin is used to transmit actual data to the CDMA chipset (LK12001 or LK12011). MII_TXD is a bundle of four signals. The LSB is the bit number 0. The transmission is done synchronously with the MII_TX_Clk.

MII_TX_EN: this pin indicates, that there are valid nibbles on the MII_TXD. This pin has to be asserted synchronously with the clock MII_TX_Clk.

MII_TX_ER: this pin indicates error in the frame transmission. If this pin is asserted while the MII_TX_EN pin is asserted, then the data - MII_TXD - are ignored. This pin is asserted synchronously with the clock MII_TX_Clk.

The utilized signals are in reception :

MII_RX_Clk: This clock gives the timing reference for the transmission of the received data from the CDMA chipset (LK12001 or LK12011) - MII_RXD - and some other signals - MII_RXDV and MII_RX_ER - to the external controller through the MII interface. As the bit rate is 10Mb/s then this clock is a 2.5MHz clock.

MII_RXD: this pin is used to transmit the received bits from the CDMA chipset (LK12001 or LK12011). MII_RXD is a bundle of four signals. The LSB is the bit number 0. The transmission is done synchronously with the MII_TX_Clk.

MII_RX_DV: this pin indicates that the data transmitted on the MII_RXD are valid. This pin is asserted synchronously with the MII_RX_Clk clock. This pin have to be negated prior to the first non-valid nibble transmit on the MII_RXD pins.

MII_RX_ER: this pin indicates that the PHY layer detected an error somewhere into the frame transmitted (e.g., a coding error, or any error that the PHY is capable of detecting, and that may otherwise be undetectable at the MAC sublayer). This pin is asserted synchronously with the MII_RX_Clk clock.

The medium status signals are :

MII_COL: this pin is asserted when a collision has occurred. This pin is asserted asynchronously. For the downlink, there are no collisions. Therefore, the MII_COL is kept low except if the register 0.7 is set (cf. indications below on a control register).

MII_CRS: this pin indicates that the new frame can be transmitted by the external controller to the CDMA chipset (LK12001 or LK12011). This pin is asserted asynchronously. Just after the beginning of the transmission of a new frame to the CDMA chipset (LK12001 or LK12011), the MII_CRS is asserted. It is kept high until the whole frame has been transmitted - MII_TX_EN is asserted low just after the end of the transmission of the frame - AND the LK12001 is ready to receive a new frame - the previous frame has been processed and the internal memory has enough free space to store this new frame.

When a received frame is transmitted by the CDMA chipset (LK12001 or LK12011) to the external controller then the MII_CRS is asserted.

The management signals (MDI interface) are :

MII_MDC: this pin gives the clock reference for the transmission of the data on the MII_MDIO pins. The external controller to the CDMA chipset (LK12001 or LK12011) generates this signal. It is an asymmetric signal. The minimum high and low times for MDC shall be 160 ns each, and the minimum period for MDC shall be 400 ns.

MII_MDIO: these pins are used to transfer control and status information between the external controller and the CDMA chipset (LK12001 or LK12011).

The PHY address signal, PHY AD, gives the physical address of the CDMA chipset (LK12001 or LK12011).

On the CDMA chipset side, transmission signals are :

Tx data: a 4-bit bus. These pins are used to transfer the data from the MII controller to an *ethernet framebuffer* FIFO.

Tx enable: this pin is set, when the data on the *tx data* bus are valid. This pin remains set until a whole ethernet frame has been transferred. Then, this pin is lowered to signal the end of an ethernet frame.

On the CDMA chipset side, reception signals are :

Rx data: a 4-bit bus. These pins are used to transfer the data from the ethernet frame buffer to the MII controller.

Rx do transfer: it is set when the data on the Rx data bus are valid. This pin is kept high, while transferring an entire ethernet frame. Then, this pin is lowered to signal the MII controller that, the whole ethernet frame has been transferred even if there are other ethernet frames to be transferred.

Rx error: if the current frame contains an error (due demodulation, decoding, ...), then this pin is set to high.

Rx enable: this pin is set by the MII controller in order to signal to the CDMA chipset, that an ethernet frame can be transferred. As soon as this pin is set, the pin *Rx do transfer* can be set in order to signal to the MII controller, that a new ethernet frame is being transferred to the MII controller.

As a user FIFO information, a space available in each user FIFO is signaled to the MII controller. As soon as only one user has no more memory left on his FIFO, the reception and transmission of ethernet frames from the MII controller to the ethernet frame buffer is stopped

The management signals are :

Loopback: if this pin is set, then no signal shall be emitted on the PLT medium. The MII_TXD signal has to be looped back to the MII_RXD signal.

Power down: if this pin is set, then no signal is emitted and received.

Isolate: this pin is set in order to isolate electrically the CDMA chipset from the MII bus. A high impedance is presented on the outputs MII_TX_Clk, MII_RX_Clk, MII_RX_DV, MII_RX_ER, MII_RXD, MII_COL, MII_CRS. The CDMA chipset does not respond to MII_TXD, MII_TX_EN, MII_TX_ER. (cf. control register).

Collision test, MII_COL : if this pin is set, then the CDMA chipset must respond to the assertion of the MII_TX_EN by the assertion of the MII_COL. The CDMA chipset must respond to the de-assertion of the MII_TX_EN by the de-assertion of the MII_COL (cf. control register).

The MII controller is acting as a state machine shown in Fig 6. When in state not ready, the sequencer checks the Tx memory if there is not enough space to store new data (the FIFO free space for one user is lower than an encoded CDMA frame, 24636):

? if there are some received data to transfer then the MII_CRS is lowered during one Rx clock period and then set again. The signal MII_Rx_DV is set and the received data are transferred using the RXD bus (state *transmit Rx data*).
? otherwise the state remains *not ready.*

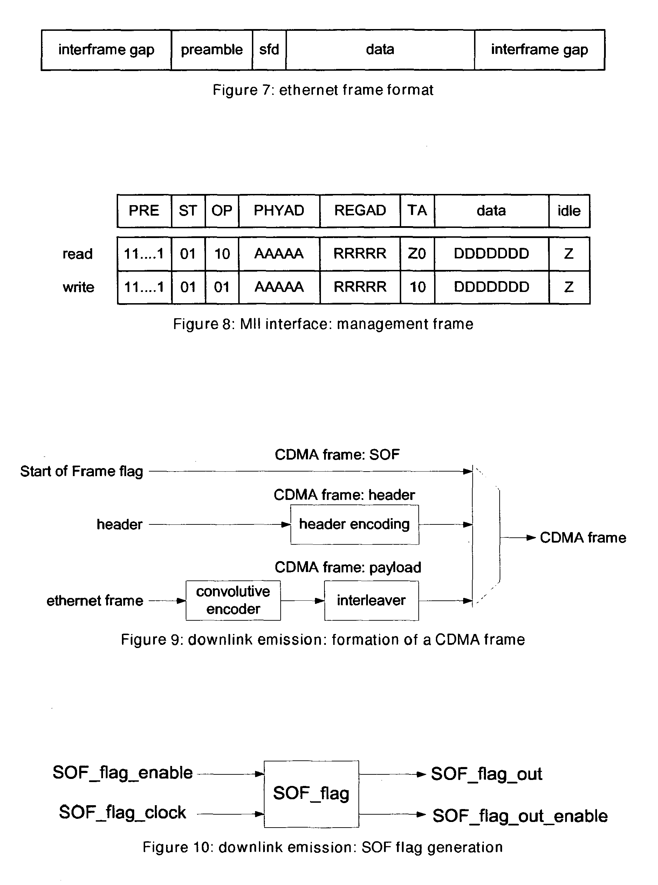

The data transferred between the external controller and the LK12001 are ethernet frames whose data format is according to Fig 7, where sfd is the *start of frame delimiter.* The de-assertion of the MII_TX_EN or the MII_RXDV signals the end of the frame.

The Management Data interface - MDI are used to transfer control and status information between the external controller and the LK12001 via the MDI interface. The data transferred must have the format given in Fig 8. This frame is used for either read or write the register *RRRRR* of the PHY, whose address is AAAAA.

PRE (preamble): the preamble consists of 32 continuous 1. It is used to synchronize the LK12001. The LK12001 shall observe a sequence of 32 contiguous one bits on MDIO with 32 corresponding cycles on MDC before it responds to any transaction.

ST (start of frame): the pattern is <01 >

OP (operation code): for reading, the operation code is <10> and for writing, the operation code is <01>.

PHYAD (PHY address): this is a 5 bits field allowing up to 32 unique PHY addresses. The first bit received is the MSB of the address. If the PHYAD field is the same as the PHY AD - input pins - of the CDMA chipset, then the CDMA chipset will respond to this management frame.

REGAD (register address): the *register address* is a five bits field allowing up to 32 different registers to be addressed within each CDMA chipset. The first bit is the MSB. The register addressed at the address 0 is the control register and the register addressed at the address 1 is the status register.

TA (turnaround): The turnaround time is a 2 bit time spacing between the Register Address field and the Data field of a management frame to avoid contention during a read transaction. For the read transaction, the external controller remains in a high impedance state during one bit then, for the second bit, the CDMA chipset will drive a 0. For the write transaction, the external controller will emit the pattern <10>.

DATA: the data field is a 16 bits field. The first bit transmitted is the bit 15 of the register being addressed.

IDLE (idle condition): it is not actually part of the management frame. It is a high impedance state.

Only the two first registers are used, the control register and the status register. If a write or read transaction for other registers is received through the MDI, then the management frame have to be dropped.

The control register is stored at the address 0. Its content is :

| Register address | Register name | Description |
|---|---|---|
| 0.15 | Reset | When set, reset and set the control register and the status register to their default values. This value must remain set until the operation is accomplished. Any read transactions or write transactions to other bit than 0.15 are ignored until the reset is completed. The reset have to be completed within 0.5s from the setting of the bit 0.15. The default value is 0. |
| 0.14 | Loopback | Loopback mode when the bit 0.14 is set (isolation from the PLT network). The data from the MII transmit data have to be looped back the MII received data within $51.2\mu s$. The MII_COL remains unset unless bit 0.7 is set. The default value is 0. |
| 0.13 | Speed selection (LSB) | The data rate is 10Mb/s. Therefore, this bit is not set. |
| 0.12 | Auto-negotiation enable | The auto-negotiation facility is not implemented. Then, this bit is not set. |
| 0.11 | Power down | When this bit is set, then there are no bit received or transmitted on the PLT medium. The default value is 0. |
| 0.10 | Isolate | When set, the CDMA chipset is electrically isolated from the MII. It must not respond to MII_TXD, MII_TX_EN, MII_TX_ER. It must present a high impedance on the outputs MII TX Clk, MII RX Clk, MII_RX_DV, MII_RX_ER, MII_RXD, MII_COL, MII_CRS. The default value is 0. |
| 0.9 | Restart auto-negotiation | The auto-negotiation facility is not implemented. Then, this bit is not set. |
| 0.8 | Duplex mode | The CDMA chipset operates in half-duplex mode. Then, this bit is not set. |
| 0.7 | Collision test | When set, the CDMA chipset must respond to the assertion of the MII_TX_EN by the assertion of the MII_COL within $51.2\mu$. The CDMA chipset must respond to the de-assertion of the MII_TX_EN by the de-assertion of the MII_COL within $0.4\mu s$. The default value is 0. |
| 0.6 | Speed selection (MSB) | The data rate is 10Mb/s. Therefore, this bit is not set. |
| 0.5 to 0 | Reserved | Reserved - always reads 0. |

The status register is stored at the address 1. All these registers are read only. They can not be written using the management interface.

| Register address | Register name | Description |
|---|---|---|
| 1.15 | 100base-T4 | Reads 0 indicating that the CDMA chipset lacks the ability to perform link transmission and reception using the 100BASE-T4 signaling specification. |
| 1.14 | 100base-X full duplex | Reads 0 indicating that the CDMA chipset lacks the ability to perform full duplex link transmission and reception using the 100BASE-X signaling specification. |
| 1.13 | 100base- X half duplex | Reads 0 indicating that the CDMA chipset lacks the ability to perform half-duplex link transmission and reception using the 100BASE-X signaling specification. |
| 1.12 | 10Mb/s full duplex | Reads 0 indicating that the CDMA chipset lacks the ability to perform full duplex link transmission and reception while operating at 10Mb/s. |

(continued)

| Register address | Register name | Description |
|---|---|---|
| 1.11 | 10Mb/s half duplex | Reads 1 indicating that the CDMA chipset have the ability to perform half-duplex link transmission and reception while operating at 10Mb/s. |
| 1.10 | 100base-T2 full duplex | Reads 0 indicating that the CDMA chipset lacks the ability to perform full duplex link transmission and reception using the 100BASE-T2 signaling specification. |
| 1.9 | 100base-T2 half duplex | Reads 0 indicating that the CDMA chipset lacks the ability to perform half-duplex link transmission and reception using the 100BASE-T2 signaling specification. |
| 1.8 | Extended status | Reads 0 indicating that the extended status is not implemented |
| 1.7 | Reserved | Reserved - always reads 0. |
| 1.6 | MF preamble suppression | Reads 0 indicating that the CDMA chipset is not able to accept management frames unless they are preceded by the preamble pattern. |
| 1.5 | Auto-negotiation complete | Reads 0. The CDMA chipset lacks the auto-negotiation capability. |
| 1.4 | Remote fault | Reads 0. The CDMA chipset has no provision for remote fault detection. |
| 1.3 | Auto-negotiation ability | Reads 0 indicating that the CDMA chipset lacks the ability to perform auto-negotiation. |
| 1.2 | link status | If the link is up, reads 1. If there is a link failure, this bit must be unset and remains unset until this register is read via the management interface. Always reads 1. |
| 1.1 | Jabber detect | Reads 0 indicating that the CDMA chipset lacks the ability to perform jabber detect. |
| 1.0 | Extended capability | Reads 0 indicating that the CDMA chipset does not include the extended register set but only the basic register set. |

The principle of the CDMA frame generation is following. The LK12001 communicates with several users (up to 10) by sending to these users some ethernet frames. The frames emitted on the PLT medium are CDMA frames.

The CDMA frame includes the three different fields: a start of frame flag (SOF), a header and a payload. The two latter are obtained from the MII controller or the system controller. These three frames are serially concatenated in this order (SOF first, then the header and finally the payload), and encoded so as to protect them against error bursts when transmitted.

The Start of Frame Flag (SOF) is used at reception end to detect the beginning of a frame.

The header contains some key of the payload scrambler and has a specific structure (see below). This header is protected with a Reed-Solomon error correcting code and is sent directly on the channel without interleaving.

The payload encapsulates a whole Ethernet frame that is convolutionally encoded and interleaved (see below).

A multiplexer (see Fig 9, HDMUX block) then concatenates these three fields so as to generate a CDMA frame system information (data frame length, kind of payload encoding, initialization). The different fields of the downlink CDMA frame are concatenated.

The block presented in Fig 10 produces the *start of frame* flag . There is a SOF flag at the beginning of each CDMA frame. This SOF flag allows, on the receiver side, to detect the beginning of a downlink CDMA frame.

This SOF could be mandatory. The beginning of a downlink CDMA frame could be detected only with the presence of a good header (an header with few error corrected by the Reed-Solomon decoder and a decoded header with the correct field values). The search of a good header implies an heavy use of the Reed-Solomon decoder and thus a more complex hardware implementation with a need for more resources. Therefore, the presence of this SOF ease the hardware implementation. The flag value is 011010010110. The description of the input and output signal of this block is following :

| Name | Description |
|---|---|
| SOF flag enable | If high, this blocks works. |
| SOF flag clock | Its rate is the output bit rate: $1/T_s$ |
| SOF flag out | The output. |
| SOF flag out enable | If hiqh, the output is enable. |

The CDMA frame header is composed of 36 bits. This header includes the following fields :

- the type of the forward error correcting code, used to protect the data (4 bits),
- payload scrambler initialization (4 bits)
- the length of the data frame (16 bits)
- an unused field of 12 bits (for future use)

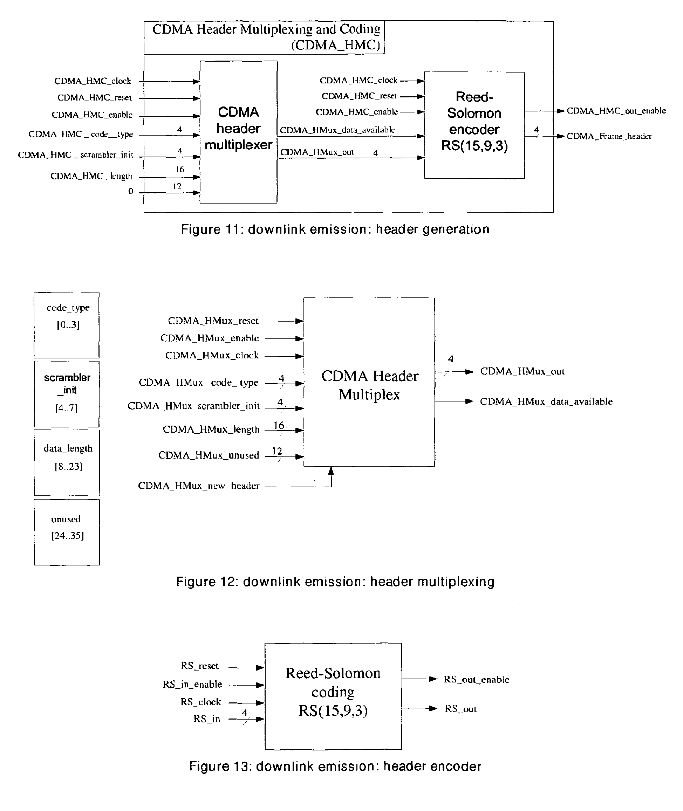

The header is received in parallel on a bus of size 36 bits and has to be sequentially output with 4-bit symbols. This is the role of the CDMA Header Multiplexer (CDMA_HMux). When multiplexed, the Header must be then encoded by a Reed-Solomon Encoder. As shown on Fig 11, the Reed Solomon Encoder works with 4-bit information words (see next paragraph for details). The header field of a downlink CDMA frame is encoded using a Reed-Solomon encoder.The global structure for downlink emission comprises a CDMA header multiplex, shown on Fig 12, and a downlink emission header encoder, Reed Solomon coding RS (15, 9, 3) shown on Fig 13.

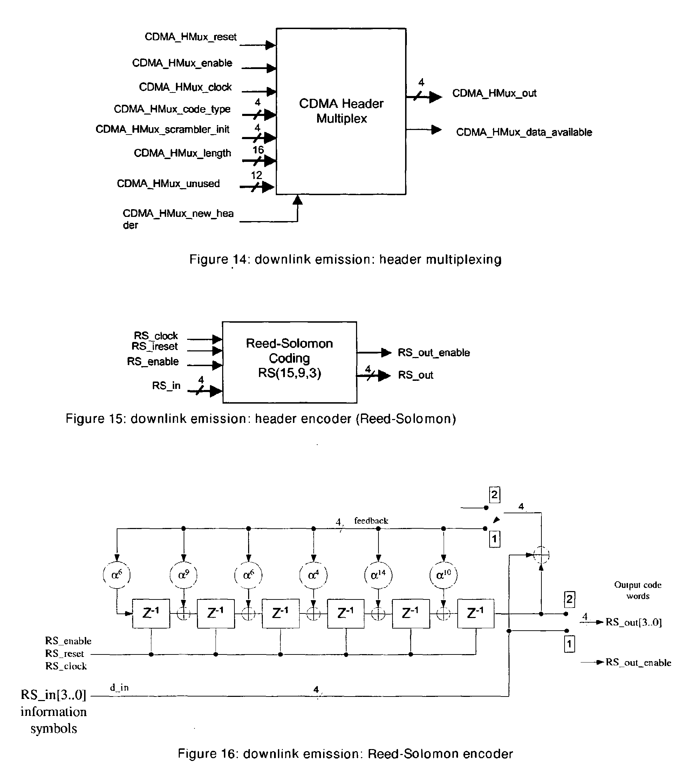

The goal of the CDMA Header Multiplexer is to sequentially output the header received on a 36-bit bus as shown on Fig 14.

The Functional Behavior of this multiplexer is the following :

```
if(CDMA_HMux_reset is low)

    ?    the internal register are set to 0
    ?    CDMA_HMux_data_available = 0
    ?    wait_for_new_header =1 // internal state
    ?    deliver_data =0 // internal state
 else
    if(CDMA_HMux_enable is high)
         if(CDMA_HMux_new_header is high)&(wait_for_new_header =
         1)
    ?    read new header on input
    ?    wait_for_new_header = 0
    ?    deliver_data = 1
    ?    count = 0
         end // if new_header
         if(deliver_data=1)
    ?         deliver data on output
    ?         CDMA_HMux_data_available =1
    ?         count = count+1
    ?         if(count=36)
    ○              wait_for_new_header =1
    ○              deliver_data =0
    ?         end // if count
         else // deliver_data =0
             CDMA_HMux_data_available = 0
         end // if deliver_data
    elseif(CDMA_HMux_enable is low)
    ? CDMA_HMux_data_available =0
    end // elseif enable
 end // else reset
```

The input and output signals for this multiplexer are given below.

| Name | Description |
|------|-------------|
| CDMA_HMux_clock | This clock corresponds to the chip clock. Its rate is 1/Tc. |
| CDMA_HMux_reset | Reset the Frame Header Multiplexer |
| CDMA_HMux_enable | A rising edge corresponds to the beginning of a frame. Therefore, the fields have to be read from the different input. |
| CDMA_HDR_code_type | Code Type field (4-bit bus) |
| CDMA_HMux_ scrambler init | The initialization state of the scrambler (4 bits) |
| CDMA_HMux_length | Data Length field (16-bit bus) |
| CDMA_HMux_unused | Unused field (12-bit bus) |
| CDMA_HMux_out | Frame Header Output |
| CDMA HMux outenable | Enable for next DeMultiplex module |

The header is protected against error bursts through the use of a (systematic) Reed-Solomon(15,9,3) encoder, shown in Fig 15, whose parameters are :

> ?    $m=4$            (dimension of the Galois Field GF(16))
> ?    $n=2^m-1=15$
> ?    $t=3$            (symbol-error correcting capability)
> ?    $k=n-2t$        (number of information symbol)
> ?    $dmin=n-k+1$    (minimum distance)

The Reed Solomon Encoder must be fed with 9 successive information symbols of m bits (m=4) on its input *RS_in*. The Encoder will output (on *RS_out*) the 9 input words (36 bits) as they are, and will produce 6 additional symbols of m bits leading thus to a an amount of 60 coded bits (structured as 4-bits words).
The representation of the encoder of Fig 15 is based on the extension Galois Field GF(16) created with the primitive polynomial $p(x) = x^4+x+1$ . The primary element of GF(16), denoted a, is a root of p(x), i.e. $p(a)= a^4 + a +1=0$ : the element a generates the Galois field GF(16) through the set of its powers :

$$GF(16) = \{0,1, a, a^2,..., a^{14}\}$$

where $14 = 2^m-2$. Let recall that the pri mary element satisfies $a^{15}=1$.
From p(a)=0 property, each element of GF(16) can be represented as a polynomial of a of degree less or equal to 3 (m-1) by taking the remainder of an element, considered as a power of a, modulo p(a). Equivalently we can take the binary coefficients of this polynomial representation so as to represent the elements of GF(16). For instance, as $a^4+ a +1=0$, we may write that $a^4 = a +1 =0. a^3 + 0. a^2 + 1.a +1. a^0$, or [0011]. Each element a? GF(16) thus writes :

$$a = a_0 + a_1.a + a_2. a^2 + a_3. a^3 = [a_3\ a_2\ a_1\ a_0]$$

with $a_i$, binary coefficients. We thus get the following binary representation table :

| Field element | Basis Representation [ $a^3\ a^2\ a\ a^0$ ] |
|---------------|---------------------------------------------|
| 0 | [ 0000 ] |
| 1 | [ 0001 ] |
| a | [ 0010 ] |
| $a^2$ | [ 0100 ] |
| $a^3$ | [ 1000 ] |

(continued)

| Field element | Basis Representation [ $a^3\, a^2\, a\, a^0$ ] |
|---|---|
| $a^4$ | [ 0011 ] |
| $a^5$ | [ 0110 ] |
| $a^6$ | [ 1100 ] |
| $a^7$ | [ 1011 ] |
| $a^8$ | [ 0101 ] |
| $a^9$ | [ 1010 ] |
| $a^{10}$ | [ 0111 ] |
| $a^{11}$ | [ 1110 ] |
| $a^{12}$ | [ 1111 ] |
| $a^{13}$ | [ 1101 ] |
| $a^{14}$ | [ 1001 ] |

This representation is useful for hardware representation. The binary representation of the elements of GF(16) is particularly convenient when performing sums of elements : only modulo-2 additions of the binary vector representation coefficients have to be performed (without considering any carry).

In the sequence, either the binary representation of the elements of GF(16) or their representation in terms of powers of a are indistinctly used.

The systematic RS(15,9,3) encoder is defined by the following polynomial:

$$g(x) = a^6 + a^9.x + a^6.x^2 + a^4.x^3 + a^{14}.x^4 + a^{10}.x^5 + x^6$$

A codeword c(x), seen as a polynomial of degree n-1 with coefficients in GF(16), associated with the information word m(x) (of degree k-1) may be expressed as :

$$c(x) = x^{n-k}.m(x) + ( \; x^{n-k}.m(x) \; \text{mod} \; g(x) \; )$$

Thus, the codeword has n-k more symbols than the information message m(x). This implementation of the encoder as a Reed-Solomon encoder can be implemented according to the following scheme shown in Fig 16 with 6 shift registers.

On position 1 (position 1 is set when reset is active), the information symbols from *RS_input[3..0]* are passed through the linear feedback shift registers (LFSR), but the result of the LFSR is not of interest : the information message feeds the output.

When the whole information message has fed the encoder, then position 2 is set : the remainder of the division of $x^{n-k}.m(x)$ by g(x) is contained in the LFSR and must be emptied to feed the output and complete the code word. At the same time, during position 2, the LFSR is fed back with null symbols.

Input and output signals of this Reed Solomon encoder are

| Name | Description |
|---|---|
| RS_clock | This clock corresponds to the chip clock. Its rate is 1/Tc. |
| RS_reset | Reset the Frame Header Multiplexer |
| RS_enable | If high, the encoder works. If low, the encoder does not work, and RS outenable must be set to low. |
| RS_in | Input information words (4-bit bus) |
| RS_out | Ouput Coded Words. (4-bits bus) |

(continued)

| Name | Description |
|------|-------------|
| RS_OutEnable | Output Enable for next module |

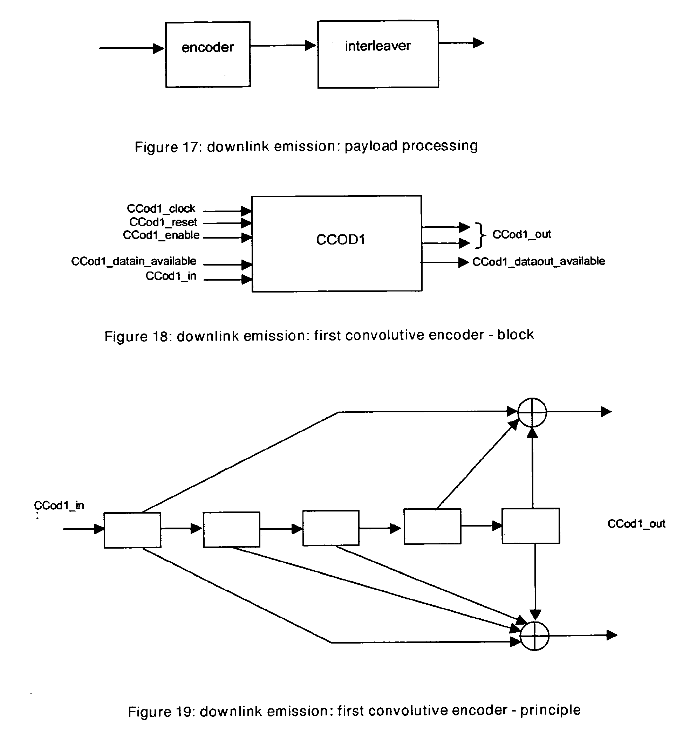

The received payload Ethernet Frame is first convolutionally encoded, then interleaved with a diagonal interleaver according to Fig 17. The payload field of a downlink CDMA frame is encoded and then interleaved. The encoding allows, on the reception side, to correct the transmission errors. The interleaver allows to spread the errors and, therefore, to avoid the burst of errors, which can introduce errors after the decoding process.

Different kind of convolutional encoders are used. The first encoder CCOD1 shown in Fig 18 has the following parameters : k=1, n=2, ?=2, and its generator matrix is:

$$G ? \begin{bmatrix} 1 & 0 & 0 & 1 & 1 \\ 1 & 1 & 1 & 0 & 1 \end{bmatrix}$$

The payload of the downlink CDMA frame is encoded using a convolutive encoder.

The principle coding structure of this first encoder is shown in Fig 19. with 5 shift registers. There are two kinds of convolutive encoders for the payload field of a downlink CDMA frame. For poor quality line, the first convolutive encoder is used in order to guaranty a minimum bit error rate. When the quality of the transmission line is better, the second encoder is used in order to increase the throughput. Here the data (1 bit) arrive bit per bit. The most recent data is stored into the first shift register. Then, it is shifted from the shift register to the next shift register (to the right side). The output data bits (2 bits) are computed using the content of the shift registers.

If the resetinput is high, then the registers' content are reset.

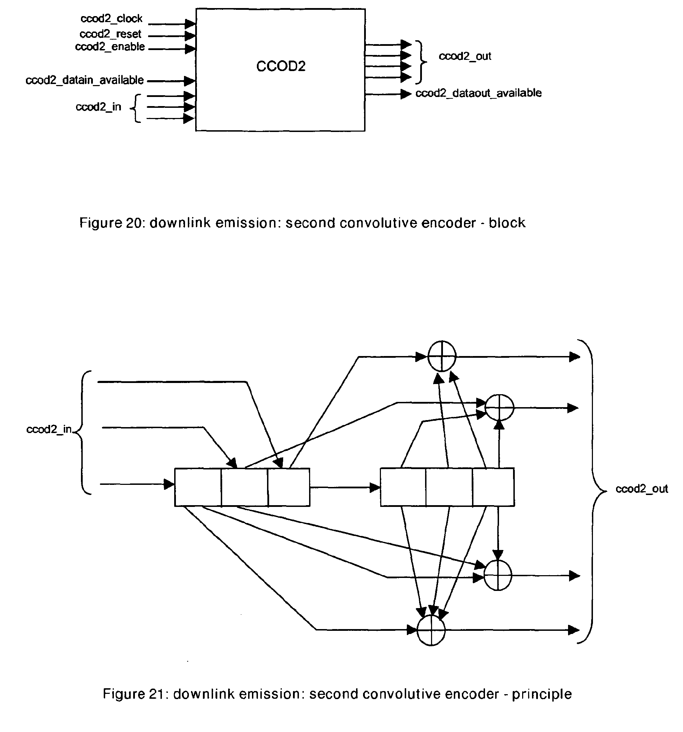

The second encoder CCOD2 is shown in Fig 20, has the following parameters : k=3, n=4, ? =2, and its generator matrix is:

$$G ? \begin{bmatrix} 0 & 0 & 1 & 0 & 1 & 1 \\ 0 & 1 & 0 & 1 & 0 & 1 \\ 1 & 1 & 0 & 0 & 0 & 1 \\ 1 & 0 & 0 & 1 & 1 & 1 \end{bmatrix}$$

The principle coding structure of this second encoder is shown in Fig 21 with two sets of three shift registers. The data are stored per block of three bits into the first three shift registers. The most recent data is stored into the rightmost shift register. The output data are calculated using the content of the six shift registers. Then, the three leftmost registers are shifted to the three rightmost registers. If the *reset* input is high, then the registers' content are reset.

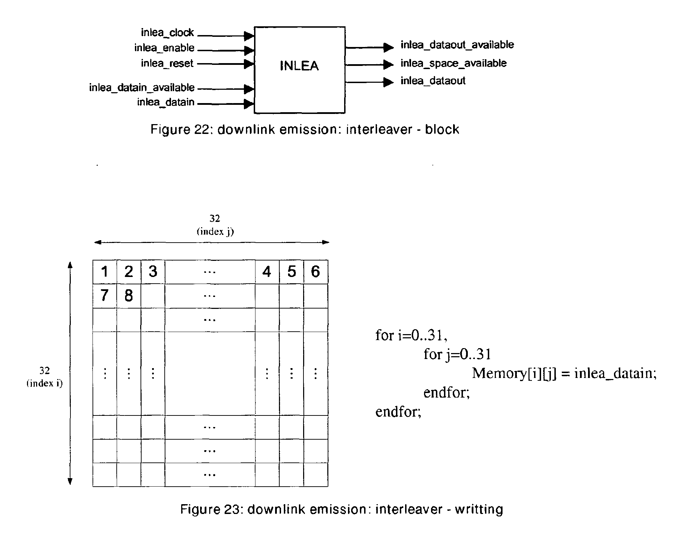

The interleaver block is shown on Fig 22. After having encoded the payload field, the data are interleaved using a diagonal interleaver. The length of the interleaver is 1024 bits. This choice of length helps to reduce the effects of the impulsive noise. Its Interleaving Depth is 1024 bits. The purpose of this block is to interleave a block of data of size 1024. It uses a memory (of the same size) in which the data are written linearly (sequentially) and read in another specific order.

In a preferred example, the data are first read on the input and stored into the whole internal memory. While there is some space into the internal memory (the output *inlea_space_available* is high) and some data are available on the input (the input *inlea_data_available* is high), some data can be read from the pin *inlea_datain* and stored sequentially into the internal memory.

The input reading process is described in Fig 23, where the matrix represents the internal memory.

```
for i=0..31,
        for j=0..31
                Memory[i][j] = inlea_datain;
        endfor;
endfor;
```

When the memory is full, he output *inlea_space_available* is set at low level and he output signal *inlea_data_available* is set at high level. The data have to be interleaved and output onto the output signal *inlea_dataout*.

The data are read diagonally from the internal memory and set sequentially to the output in the following way :

The process to read the lower diagonal number d is :

```
read_lower_diagonal(d)
{
for k=0..32-d,
    inlea_dataout = Memory[k+d][k];
endfor
}
```

The first index denotes the line number (into the matrix form of the memory) and the second index denotes the column number.

To read the upper diagonal number d:

```
read_upper_diagonal(d)
{
for k=0..32-d,
    inlea_dataout = Memory[k][k+d];
endfor
}
```

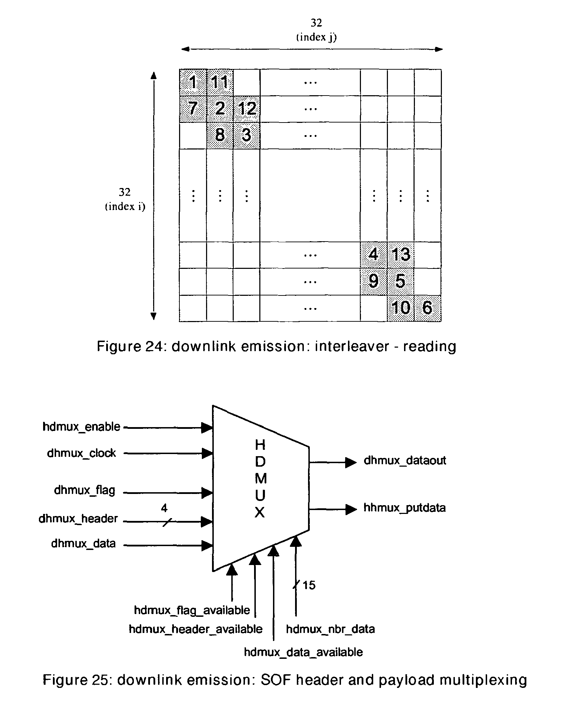

The algorithm used to read the whole memory and put the data onto the output pin *inlea_dataout* is, according to Fig 24 :

```
read_upper_diagonal(0) ; // read the main diagonal
for d=1..31, // read the other diagonals
    read_lower_diagonal(d);
    read_upper_diagonal(d);
    endfor
```

When the reading is done - at the same time, the writing is done - then the two memory blocks - the one that stores the data read and the one that stores the data written - are switched. There is no reset done.

32
(index j)

32
(index i)

The input and output signals of this interleaver are

| Name | Description |
|---|---|
| inlea_datain | The bit to be stored into the internal memory of the interleaver. |
| inlea_datain_available | Input data available |
| inlea_clock | The processing clock |
| inlea reset | If hiqh, the whole the memory is erase. |
| inlea_enable | If high, this block is working. |
| inlea_dataout | The bit read from the internal memory of the interleaver. |
| inlea_space_available | If high, a new bit can be put onto the input signal *inlea datain* and stored into the internal memory. |
| inlea_data_available | If high, a new data is read from the internal memory and present onto the output *inlea dataout*. |

Fig 25 shows the downlink emission: SOF header and payload multiplexing block. The purpose of this block is to serially concatenate the start of frame (SOF) flag, the frame header and the payload data. The different fields of a downlink CDMA frame are concatenated in order to obtain a downlink CDMA frame.

When a SOF flag is available - *hdmux_flag_available* is high - then the multiplexer reads the 8-bit flag.

After reading the SOF flag, the header have to be read. When a frame header is available - *hdmux_header_available* is high - then the multiplexer reads the 60-bit header per block of 4 bits. These data are placed onto the output - *dhmux_dataout*- and the pin *dhmux_putdata* is set high.

Finally, the data field is read. While the input *hdmux_data_available* is high, the multiplexer reads data from the *hdmux_data* input. The *hdmux_nbr_data* bits represent the length of the CDMA frame (SOF flag + header + data). The input and output signals are :

| Name | Description |
|---|---|
| hdmux_flag | Bits from the flag. |
| hdmux_header | Bits from the Data Header. |
| hdmux_data | Bits from the Data Frame. |
| hdmux_flag_available | If high, a bit from the flag is available. |

(continued)

| Name | Description |
|---|---|
| hdmux_header_available | If high, a block of 4 bits from the Frame Header is available. |
| hdmux_data_available | If high, a bit from the Data Frame is available. |
| hdmux nbr data | The number of bits of the Data Frame. |
| hdmux_enable | If high, the block works. |
| hdmux_clock | The processing clock. |
| hdmux dataout | The output data. |
| hdmux_putdata | High if there is some bits on the output (*dhmux dataout*). |

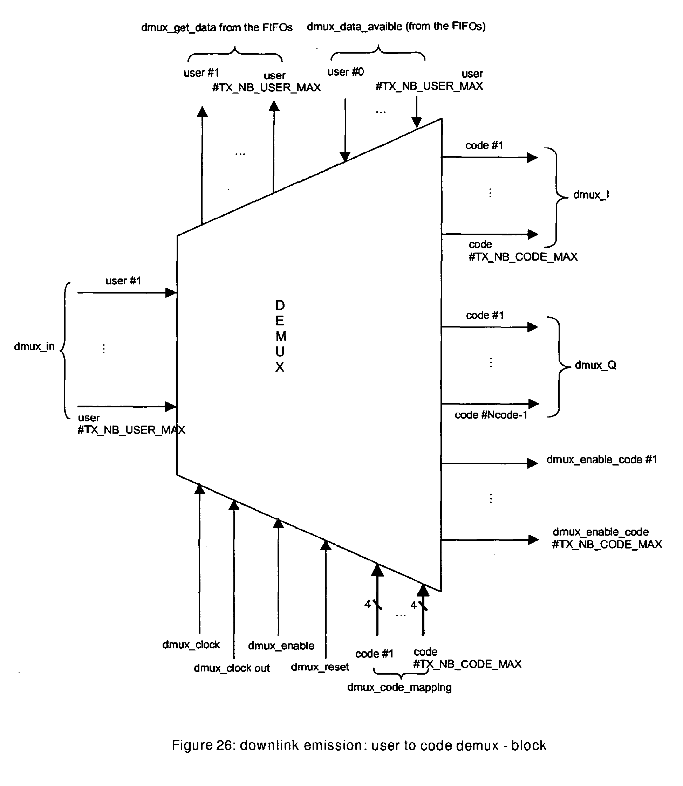

For the Demultiplexing (SSCode_Demux), the CDMA frames have been generated for each user and they are stored into a FIFO for each user. The aim of this block, shown on Fig 26, is to distribute these data on the set of codes for each user. Each code is QPSK modulated - I channel and Q channel - and thus each code can emit two bits each Tc. For each user, there is a set of codes. This set codes is defined by the system controller. The mapping between the user number and the code number is stored into the memory *code to user mapping.* Among the CDMA codes, some codes are dedicated to the synchronization, other are dedicated to the management and the rest are dedicated to the user data distribution. CDMA codes are attributed to each user. A given CDMA code can only be attributed to a single user. This demux block spread the binary data of each user (*demux_in* input pins) towards the output corresponding to a given CDMA code for the I&Q channels (*demux_I* and *demux_Q* output pins).

At each Ts, there must be two bits (I and Q) for each code (or the code is not active). There are Tx_NB_CODES inputs to work out, and Tx_NB_CODES_MAX is theoretically set to 61. For a particular code, the corresponding active user, if one, is defined through its corresponding *dmux_code_mapping bus* : this bus is 4-bit wide. For this code, 2 bits of data are solicited from the user FIFO, using the index of the allocated user. In response, the user FIFO indicates if any data are available or not (*dmux_data_available* inputs). If available, the user FIFO delivers 2 bits of data (*dmux_in* inputs), and the *Demux* delivers these data onto the corresponding I&Q outputs. If no data are available in FIFO, then the code is set *inactive* by the Demux (*dmux_enable_code* outputs).

The algorithm which is performed by this Demux is following :

for *code_index* = 1:Tx_NB_CODES_MAX-1,

- get user index :

read the *code_index*$^{th}$ dmux_code_mapping input (4-bit) ,

decode it so as to store the user index into the variable *UserNbr,*

?          if *UserNbr* = 0 then

the code # *code_index* is set to inactive,

the output dmux_enable_code # *code_index* is set to low

?          else

get the data from the FIFO corresponding to the user *UserNbr* :

set to high state the output dmux_get_data # *UserNbr*

wait for response from the corresponding # *UserNbr* FIFO

if the input dmux_data_available # *UserNbr* is low

set to low the output dmux_enable_code

#*code_index*

(the code #*code_index* is thus inactive)

else

enable the code #*code_index* : set the output

dmux_enable_code #*code_index* to high

read the data from input dmux_in #*UsrNbr*

output it onto the ouput dmux_I #*code_index*

- the same process as above is performed to get the data for the ouput

dmux_Q #*code_index*

end for

The input and output signals thereof are following :

| Name | Description |
| --- | --- |
| dmux_in | For each user, the symbols to be sent. |
| dmux_code mapping | For each code, the number of the corresponding user. |
| dmux_data available | If, for the corresponding user, there is no more data to be transmitted, then, this input is high. |
| dmux_reset | If high, reset all the memories. |
| dmux_enable | If low, the demux does not work. |
| output data (I&O) | The data to be sent using the corresponding code. |
| dmux_enable_code | If low, the corresponding code is deactivated. |
| dmux_get_data from the FIFOs | Command to the corresponding FIFO to deliver some new data. |

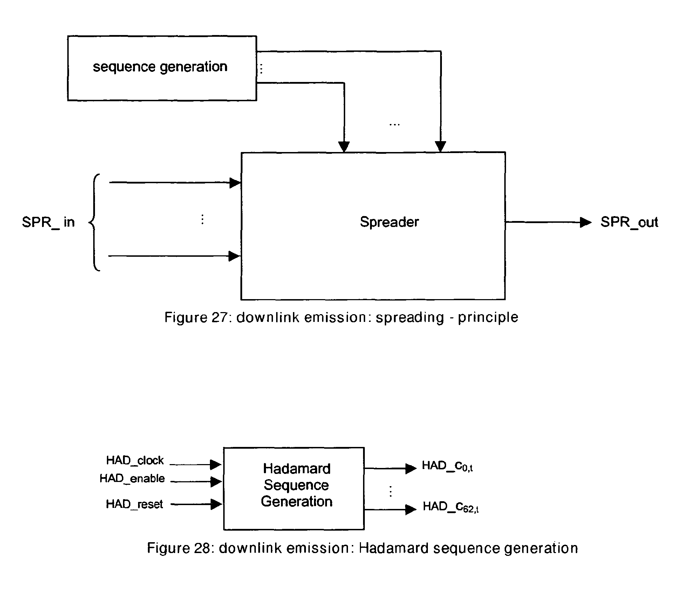

The output clock's rate is 1/Ts. A rising edge corresponds to a new data on the outputs. It is the processing clock.
For spreading and modulation, the spreading principle is following as shown on Fig 27 for downlink emission. The *sequence generation* generates the chips of each code. The *spreader* codes the data using the chips from the *sequence generation,* and the output signal is formed. The CDMA codes are generated by the *sequence generation* block and used by the *spreader* block.
The spreading sequences used for the downlink are the Hadamard sequences. Figure **Erreur! Argument de commutateur inconnu.** shows the downlink emission Hadamard sequence generation. The CDMA codes are Hadamard sequences. As the different CDMA codes on the downlink are sent by a single user (master node). All these CDMA codes are synchronous (there are no delay between the different CDMA codes). The use of the Hadamard codes allows to guaranty a perfect orthogonality between all the CDMA sequences. Thus, a large number of CDMA sequences can be used without any perturbation on the reception side.
All the Hadamard sequences are 64-chip sequences. To generate the matrix of the $2^k$-chip Hadamard sequences, $H_k$, the following iterative property is used:

$$? \quad H_0 = 1$$

$$? \quad H_k \quad ? \quad \begin{pmatrix} ?H_{k?1} & H_{k?1} & ? \\ ? & & ? \\ ?H_{k?1} & ? H_{k?1} & ? \end{pmatrix}$$

To generate the i-th Hadamard sequence of length $2^k$ - i.e. the i-th line of $H_k$ - the binary representation of i is required : let $[a_{k-1} \ldots a_0]$ the binary representation of index i where $i = a_{k-1}.2^{k-1} + \ldots a_1.2 + a_0$. In the sequel, the $i^{th}$ Hadamard sequence is denoted $C_i = [c_{i,0} \ldots c_{i,63}]$ :

? $c_{i,0} = 1$
? if $a_0=0$ : $c_{i,1}= c_{i,0}$ else $c_{i,1}= 1-c_{i,0}$ ($[c_{i,0}\ c_{i,0}]$ or $[c_{i,0}\ 1-c_{i,0}]$)
? for l=1 to k-1
o            stage l :
? code is already defined up to $[c_{i,0}...c_{i,2^l-1}]$
? code up to $[c_{i,0}...c_{i,2^{l+1}-1}]$ is defined as follows :
? if $a_l=0$ : $[c_{i,0} ... c_{i,2^{l+1}-1}] = [\ [c_{i,0} ...c_{i,2^l-1}]\ [c_{i,0} ...c_{i,2^l-1}]$
? if $a_l=1$ : $[c_{i,0} ... c_{i,2^{l+1}-1}] = [[c_{i,0} ... c_{i,2^l-1}]\ [1-c_{i,0} ...1-c_{i,2^l-1}]]$

The first Hadamard sequence is constant. Therefore, this sequence is discarded.

These 63 Hadamard sequences are stored into a memory and delivered in parallel, chips per chips, at the rate 1/Tc by the circuit shown on Fig 28.

The signal input, in this Hadamard sequence generator, are :

| Name | Description |
| --- | --- |
| HAD_clock | This clock corresponds to the chip clock. Its rate is 1/Tc. |
| HAD_enable | If high, this block works normally. |
| HAD_reset | If it high, then the internal memory and all the shift registers are reset. |

The output signals are the chips. Their rate is 1/Tc.

The spreader of Fig 27 receives TX_NB_CODES binary input streams (maximum 63) and spreads these inputs with the Hadamard spreading codes read from the spreading code generation module. The maximum number of inputs is equal to 63. Each input i must be considered as active if the signal *spr_enable[i]* is set to high.

There are two particular codes which are dedicated to the synchronization. These codes are the code #31 and the code #63. For these codes, a constant symbol "1" is BPSK modulated (no data on the Q channel).

The spreader first performs a binary chip-by-chip logical spreading (a binary logical sum) of the active inputs using the available spreading codes. Two nodes are used so as to count respectively the number of "1" 's (first node) and "0" 's (second node) in the digital spread signals. The result of each counter is unsigned and is coded on 6 bits. In order to generate a global BPSK modulated signal, the output of node 2 is subtracted to the output : the result is thus a signed integer on 8 bits.

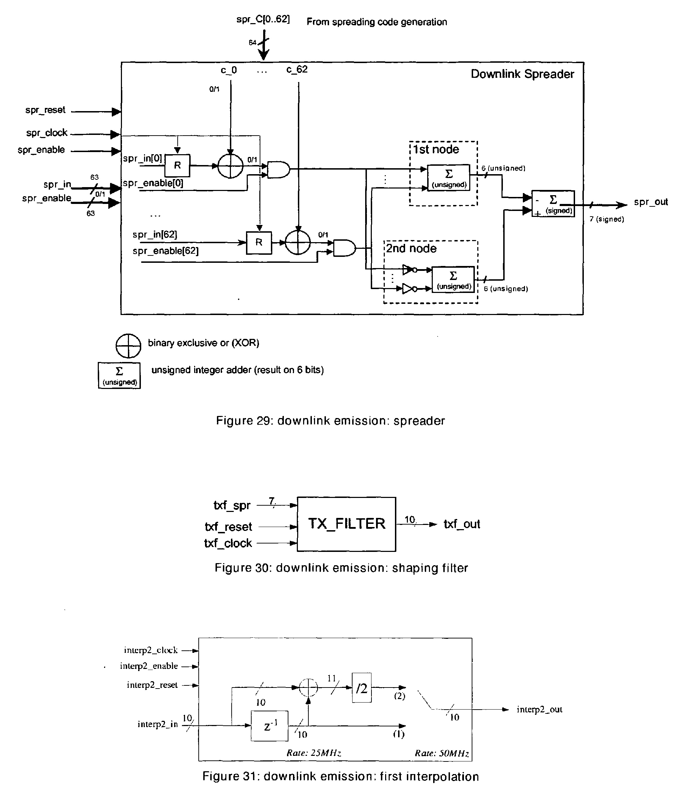

The functional description of the spreader is given below on Fig 29. This block allows to spread the binary input data on the different CDMA sequences and to add all the different contributions.

The input and output signals for this spreader are :

| Name | Description |
| --- | --- |
| spr_in[0..62] | Binary symbols' input bus of size 64 of binary symbols (0/1) |
| spr_enable[0..62] | Bus of active inputs' flags used to specify which inputs are active or not |
| spr_C[0..62] | Binary Hadamard Spreading Codes |
| spr_clock | Processing clock (Tc) |
| spr_reset | Reset the memory. |
| spr_enable | Active low state input used to specify the active state of the spreader |
| spr_out[0..6] | Output signal : the output signal is the modulated and spread signal coded on 8-bit signed integers. |

The following parameters are utilized :

TX_NB_CODES : the number of active inputs.
TX_NB_CODES_MAX : = 63 (maximum number of active inputs)

The in out timing is :

? Input bits (in_1,...,in_63) occur at rate Ts=64.Tc

? Output bits occur at rate Tc

? Code chips (c_1,...,c_63) occur at rate Tc

On the emission side, a shaping filter is used. The shaping filter is square root raised cosinus filter with a roll-off factor of 0.22. The Tx shaping filter shown on Fig 30 performs the filtering of the digital input data with a square root FIR raised cosine filter with a roll-off factor of 0.22. The filter's coefficients are stored into an internal memory (half filter is stored due to its symmetry) in a 10-bit fixed point format. The input data rate is 5 Mhz (Fc in downlink,) and the output data rate is 25 MHz. Thus, for a given input sample, 5 output samples are produced in the following time. The input data are first over-sampled by a factor 5 (insertion of 4 "0"s between two data), and then passed into the shift registers at rate 25 Mhz.

A *reset* signal is used to initialize the internal shift registers to the null value.

As a certain number of shift registers are zero valued at a given time, only the non-null valued shift registers will be processed at each time to compute the filter output. In other words, during a chip period, all the 5 phases components of the filter are processed sequentially and independently using the same state of the shift register.

The input and output signals are :

| Name | Description |
|------|-------------|
| txf_reset | Active low state input : initializes the internal state of the filter (null values for the shift register) |
| txf_clock | Processing clock (25MHz) |
| txf_enable | Active low state input : specify the active state of the filter |
| txf_in[7..0] | Input data |
| txf_out[0..9] | Output signal : the output signal is coding the modulated and spread signal on 10-bits signed integers. |

The output data rate is 25MHz. The output data are formatted in a 10-bit fixed point format.

The number of filter's coefficient is : N_coef = 13.

The filter's coefficients are formatted in a 10-bit signed format. There are 13 filter's coefficients.

| Filter's coefficient value (real) | Filter's coefficient value (fixed point) |
|-----------------------------------|------------------------------------------|
| 1 | 0111111111 (511) |
| 0.92566898454465 | 0111011001 (473) |
| 0.72303324392894 | 0101110001 (369) |
| 0.44636778638057 | 0011100100 (228) |
| 0.16599777270489 | 0001010100 (84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

The input data rate is 5 Mhz. The output data rate is 25 MHz.

Just after the *Tx FIR* filter block, the data are interpolated by a factor 2, according to Fig 31, in order to get a sampling rate of 50MHz. Fig 31. shows an implementation of an interpolator by a factor of 2. Between two input samples, a sample is inserted, which is equaled to the mean of the two input samples.The interpolator compute the mean sample between two consecutive input samples and insert this sample between these two samples to the output. Thus the output rate is twice the input rate.

The input and output signals of this interpolator are:

| Name | Description |
|---|---|
| interp2_clock | Processing clock |
| interp2_enable | Active low state input: specify the active state of the interpolator |
| interp2_reset | Active low state input : initializes the internal state of the interpolator (null values for the shift registers) |
| interp2_in | Input data. It is coded on n bits. |
| interp2_out | Input data. It is coded on n bits. |
| n : represents the input and the output dynamic. | |

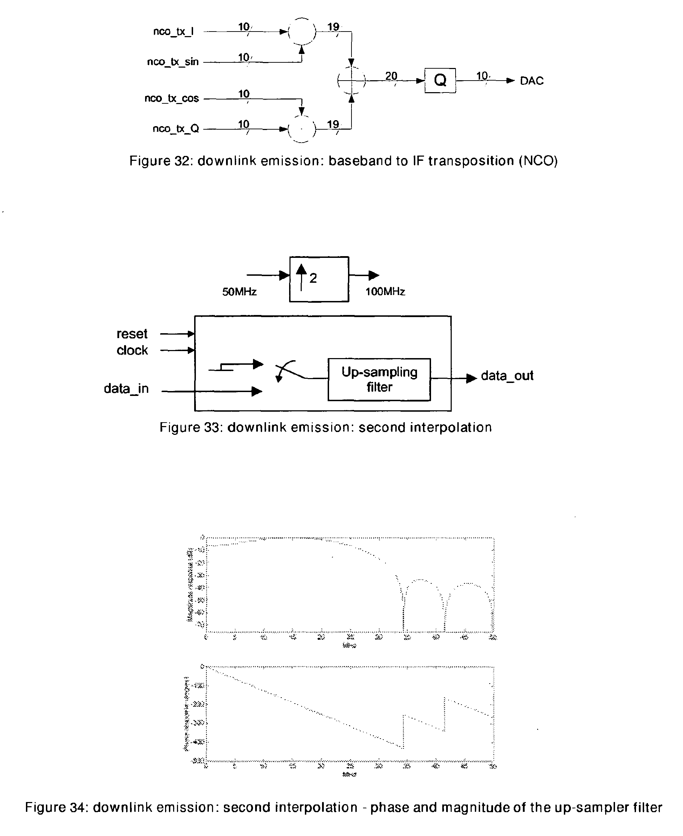

The NCO block of Fig 4 is shown in details on Fig 32. The signal is modulated around the center frequency (15MHz on the downlink). This block delivers an in-phase and in-quadrate carrier for the Tx path. Considering the PLNC side, Tx is downlink. The carrier frequency is defined as 15 MHz. The input and output sampling rate is 50MHz. It performs a baseband to IF transposition.

Input I&Q data are coming from the interpolator and are quantified on 10 bits. The input data rate is 50 MHz.

Tabulated values of the sine and cosine functions are given in the table below. These values are stored into an internal memory. Carrier frequency is set to 15MHz and values are generated at rate 50 MHz and quantified using a signed 10-bit format.

To compute these values:

$$\cos \text{ table}(k) = \cos(2p?_c(k/F_s)) = \cos(2pk.3/10)$$
$$\sin \text{ table}(k) = \sin(2p?_c(k/F_s)) = \sin(2pk.3/10)$$

where:

$?_c$, the carrier frequency (15 MHz)
$F_s$, the sampling frequency (50 MHz)

Only one period and a half is stored into the internal memory. To compute three periods:

$$\cos(k) = \cos \text{ table}(k) \text{ if } k? [[0; 4]]$$
$$\cos(k) = -\cos \text{ table}(k-5) \text{ if } k? [[5; 9]]$$

where: Cos table(k) the tabulated values of the cosine stored into the internal memory
$\sin(k) = \sin \text{ table}(k)$ if k? [[0; 4]]
$\sin(k) = -\sin \text{ table}(k-5)$ if k? [[5; 9]]
where: Sin table(k) the tabulated values of the sine stored into the internal memory

As the cosine and the sine are periodical functions with of period of 2?, only these values are useful : $\sin(k+10) = \sin(k)$ and $\cos(k+10) = \cos(k)$

Then, the result is: $\text{out}(k) = I(k).\sin(k)+Q(k).\cos(k)$

| Cos (real) | Cos (fixed point) | Sin (real) | Sin (fixed point) |
|---|---|---|---|
| 1.00000000000000 | 0111111111 (511) | 0 | 0000000000 (0) |
| -0.30901699437495 | 1101100010 (-158) | 0.95105651629515 | 0111100110 (486) |
| -0.80901699437495 | 1001100011 (-413) | -0.58778525229247 | 1011010100 (-300) |
| 0.80901699437495 | 0110011101 (413) | -0.58778525229247 | 1011010100 (-300) |
| 0.30901699437495 | 0010011110 (158) | 0.95105651629515 | 0111100110 (486) |

After the NCO Tx, the signal, which is around the carrier frequency (15 MHz), is up-sampled by a factor of 2, according to Fig 4, in order to have an output sampling frequency of 100MHz. To do so, a linear up-sampler according to Fig 33 is applied. The NCO output signal is over-sampled by a factor of 2.

First, a "0" bit is inserted between two data bits. Then, the signal is interpolated using a linear filter. This filter just delete the image signal around the frequency 35MHz (input sampling rate-carrier frequency = 50MHz-15MHz = 35MHz). This filter is a FIR filter. Its coefficients are:

-110 -174 99 511 511 99 -174 -110

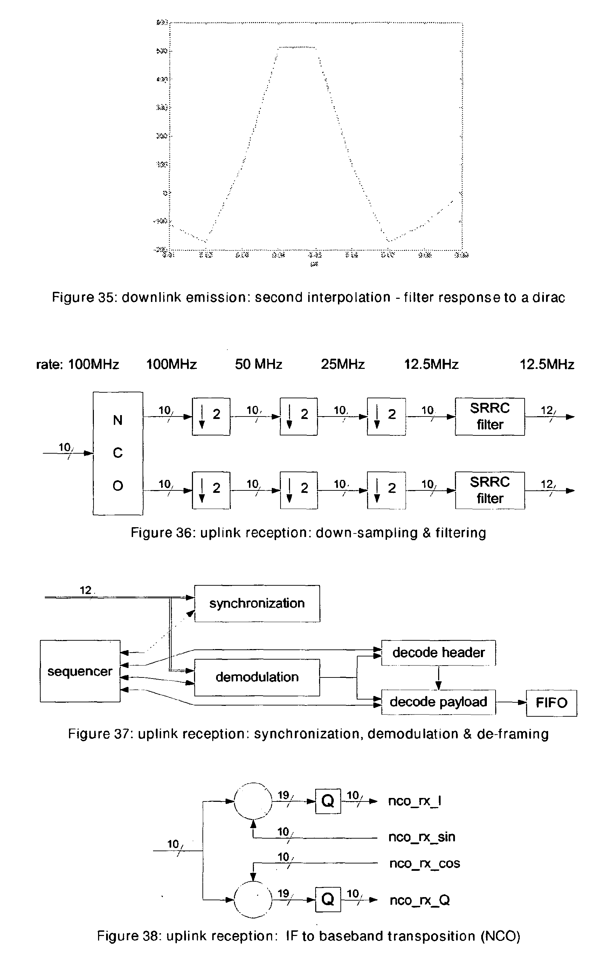

The over-sampling filter obtained has a magnitude and a phase response shown on fig 34. Its timing response to a Dirac is shown on Fig 35.

MASTER LK12001 UPLINK RECEPTION

Herein below, the specification of the RX uplink is given since it is included in the MASTER Chip LK12001. For the uplink - reception side, intermediate frequency (IF) transposition, down sampling and filtering and decimation according to Fig 36 and a synchronization, demodulation and de-framing according to Fig 37 are performed. On the uplink reception side, first the input signal is synchronized and then demodulated. While the demodulation process, the synchronization position and the phase of the channel are updated.

The goal of the signal processing subsystem is to perform

○ IF to baseband transposition (NCO block)
○ down-sampling
○ filtering (SRRC filter)

The input sample rate is 100MHz. The samples are quantified on 10 bits. The central frequency is 20MHz. The output sample rate is 12.5MHz. The samples are quantified on 12 bits. The output signal is a baseband signal.

For IF to baseband transposition, the NCO_Rx of Fig 36 is shown in details on Fig 38. First, the received signal is translated from the center frequency to the baseband. It delivers the in-phase and in-quadrate signals calculated from the input carrier signal. Considering the PLNC side, Rx is uplink. The carrier frequency is defined at 20 MHz for Rx uplink. The sample rate for the input and output samples is 100MHz.

Tabulated values of the sine and cosine functions are given in the table below. These values are stored into an internal memory. Carrier frequency is set to 20MHz for the Rx uplink and values are generated for a 100 MHz sample rate and quantified using a signed 10-bit format.

To compute these values:

Cos table(k) = cos(2p?$_c$(k/F$_s$)) = cos(2pk/5)
Sin table(k) = sin(2p?$_c$(k/F$_s$)) = sin(2pk/5)

where:

?$_c$, the carrier frequency (20 MHz)
F$_s$, the sampling frequency (100 MHz)

Only one period and a half is stored into the internal memory. To compute three periods:

Cos(k) = Cos table(k) if k? [[0; 4]]

where: Cos table(k) the tabulated values of the cosine stored into the internal memory
Sin(k) = Sin table(k) if k? [[0; 4]]
where: Sin table(k) the tabulated values of the sine stored into the internal memory

As the cosine and the sine are periodical functions with of period of 2?, only these values are useful : Sin(k+5) = Sin(k) and Cos(k+5) = Cos(k)

Then, the result is: out(k) = I(k).Sin(k)+Q(k).Cos(k)

| Cos (real) | Cos (fixed point) | Sin (real) | Sin (fixed point) |
|---|---|---|---|
| 1.00000000000000 | 0111111111 (511) | 0 | 0000000000 (0) |
| 0.30901699437494 | 0010011110 (158) | 0.95105651629515 | 0111100110 (486) |

(continued)

| Cos (real) | Cos (fixed point) | Sin (real) | Sin (fixed point) |
|---|---|---|---|
| -0.80901699437495 | 1001100011 (-413) | 0.58778525229247 | 0100101100 (300) |
| -0.80901699437495 | 1001100011 (-413) | -0.58778525229247 | 1011010100 (-300) |
| 0.30901699437495 | 0010011110 (158) | -0.95105651629515 | 1000011010 (-486) |

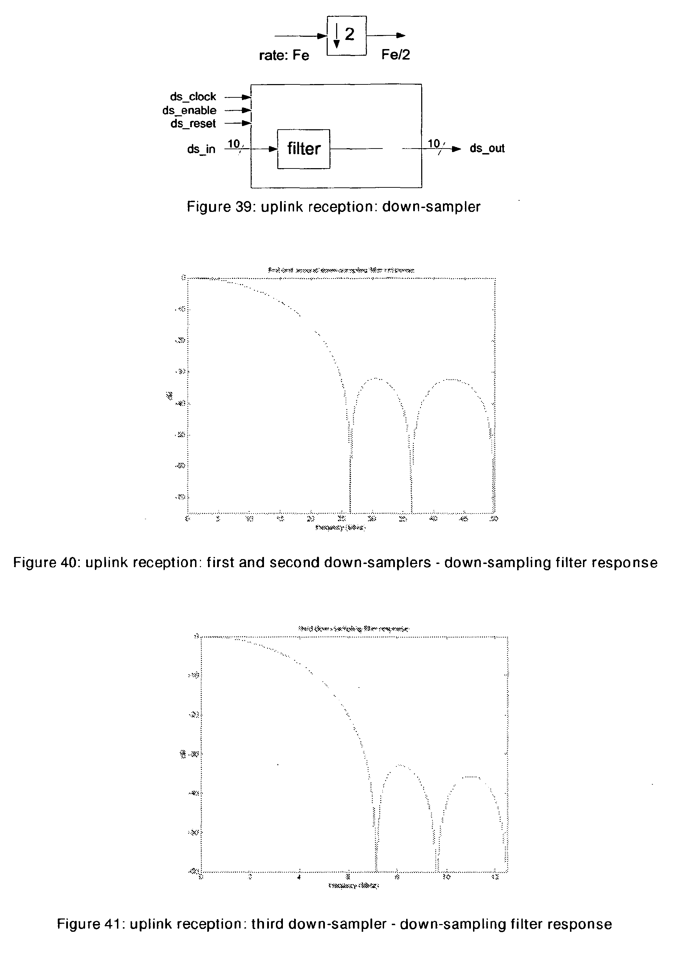

The down sampling blocks of Fig 36 are shown in detail on Fig 39. After the NCO block, the signal is down-sampled by step of 2. This block decreases the sampling rate by a factor of 2. A filter is applied just before the down sampling to avoid the aliasing effects. Three down-samplers are used between the NCO_Rx and the SRRC filter. The signal is a baseband signal, whose max frequency is 1.525MHz.

The main purpose of the filter is to avoid the aliasing effects. It keeps only the baseband frequency (between -1.55MHz and 1.55MHz) and attenuate all the other frequencies. The attenuation must be high for the frequencies above Fe/2, where Fe is the input sampling rate.

For the two first down-samplers, the filter's coefficients are: 136, 341, 511, 511, 341, 136. The frequency responses (magnitude) of the first and second over-sampling filter are shown on Fig 40.

For the third down-sampler, the filter's coefficients are: -13, 94, 316, 511, 511, 316, 94, -13. The frequency response (magnitude) of the third over-sampling filter is shown on fig 41.

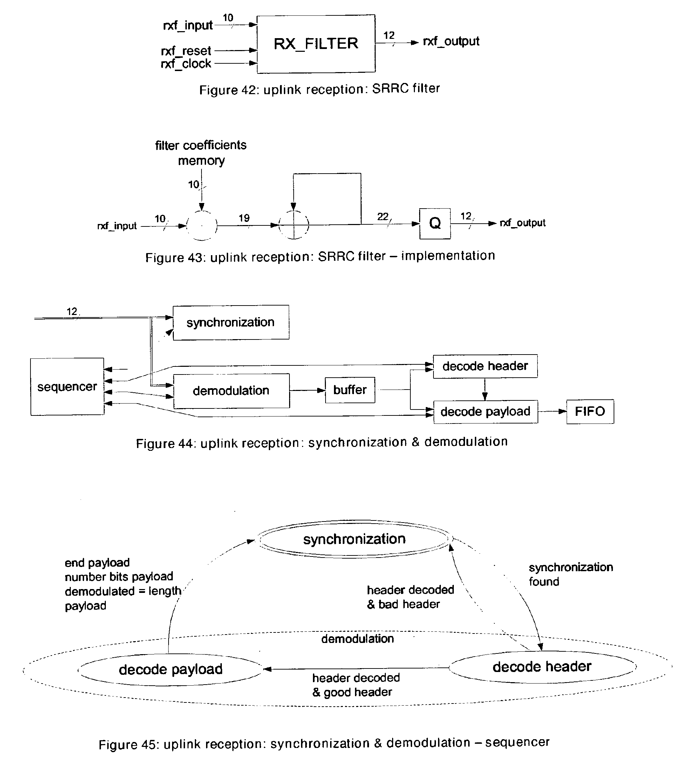

The Rx SRRC filter of Fig 36 are shown in principle and as an example on Fig 42 and 43 respectively. On the uplink reception side, there is a square root raised cosine filter. This filter performs the filtering of the digital input signal with a square root FIR raised cosine filter with a roll-off factor of 0.22. The filter's coefficients are stored into an internal memory (half filter is stored, due to symmetry) in a 10-bit fixed point format. The input and output data rate is symbol rate/5, that is 12.5MHz in uplink. The input signal is passed into the shift registers.

A *reset* signal is used to initialize the internal shift registers to the null value.

The number of filter's coefficient is : N_coef = 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |
| 0.44636778638057 | 0011100100 (228) |
| 0.16599777270489 | 0001010100 (84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

For the synchronization, demodulation and de-framing, once the signal is received, the CDMA frame must be decoded according to Fig 44. On the uplink reception side, first the signal is synchronized. Then the signal is demodulated. During the demodulation, the synchronization position and the phase of the channel are updated.First, the CDMA frame must be synchronized. To do this, the SOF flag is detected. This function is done by the *synchronization* block. This function allows to find the synchronization position and the phase of the channel.

Then, as soon as the SOF flag is detected, the signal is demodulated. During the demodulation, the synchronization position and the phase of the channel is updated.

Using the bits demodulated, the rest of the CDMA frame is decoded. First, the header is decoded using a Reed-Solomon decoder. Then, using the result from the header decoder, the payload is decoded by a Viterbi decoder. The result from this *payload decoder* is the ethernet frame transmitted to the external controller using the MII controller. The sequencer handle the succession of the operations.

The sequencer implements a state machine shown on Fig 45. In order to demodulate an uplink CDMA frame, first the synchronization (SOF field) is detected at the beginning of an uplink CDMA frame. This SOF sequence allows to estimate the synchronization position and the phase of the channel. Then, the header and the payload are demodulated. During this demodulation, the synchronization position and the phase of the channel are updated. First, the synchronization is found (state *synchronization*). Then, the data are demodulated. During this demodulation, first the header is decoded. This header contains key information like the frame length. Then, if the header is correct the payload is decoded. As soon as *length payload* bits from the payload are demodulated, a new synchronization pattern as to be found.

As the time to decode the header is longer than the length of the header, a buffer is used. In this buffer, the data from the payload demodulated are stored waiting for the result from the *header decoder* block. If the header is correct, then these bits stored in this buffer are delivered to the *payload decoder* block. If the header is incorrect, then this buffer is reset and a new synchronization pattern is searched (state *synchronization*).

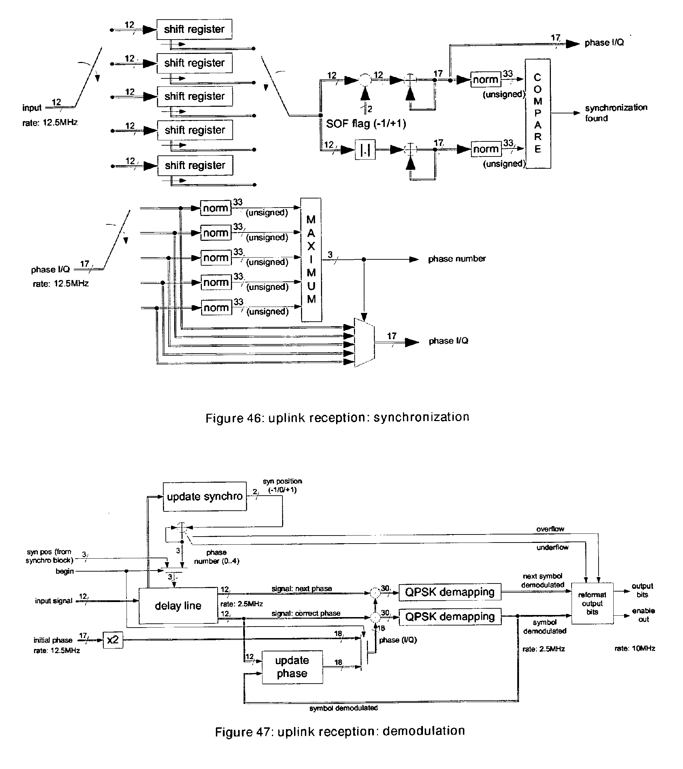

To do the synchronization of the Fig 44 circuit, according to Fig 46, a correlation between the SOF flag and the signal received sampled at the rate Tsymbol is done. In parallel, the sum of the absolute values of the input signal sampled at the rate Tsymbol is done. The result from this sum gives a level. If the norm of the result from the correlation is close to the norm of the level, then the SOF flag as been found.

The input signal is indeed over-sampled by a factor of 5 (one symbol is encoded on 5 consecutive samples), which implies that there are 5 phases.

In order to detect the synchronization sequence at the beginning of an uplink CDMA frame (SOF sequence), first a correlation between the input signal and the SOF sequence is done. Then, the result of this correlation is compared with the energy of the signal. If the result of the correlation is greater than 7/8 of the energy of the signal, then it is decided that a SOF sequence has been found. Then, among the current phase and the 4 consecutive phases, the best phase is found corresponding to the phase with the greatest correlation between the input signal and the SOF sequence.

This block allows to deliver a first estimate of the synchronization position and the phase of the channel.

The comparison between the level and the result from the correlation is: if

$$\frac{7}{8} ? \left| \frac{\text{correlatio n}}{\text{level}} \right| ? 1$$

then the SOF flag is found

After having found a synchronization position, the *synchronization* block is still enabled in order to find the optimum synchronization position. This block compares the norm of the correlation (*phase I/Q* signal) with the 4 consecutive norms of the correlation. The maximum of these norm will give the final synchronization position.

To do the demodulation of the Fig 44 circuit, according to Fig 47, first the signal is re-sampled at the rate 1/Tsymbol (2.5MHz). This is done by the *delay line* block. Then, the phase of the signal is corrected. Finally, the symbols are de-mapped.

During this demodulation process, the phase and the synchronization position are updated using the signal received and the symbols demodulated. These blocks computes the phase of the signal (on a window of 32 samples) or the synchronization position (on a window of 128 samples). At the really beginning, the phase and the synchronization position of the signal used are the phase and synchronization position delivered by the *synchronization* block.

The *update synchro* block actually delivers the synchronization position delta: -1, 0 or +1. Then, an adder computes the actual synchronization position (modulo 5). It generates as well two signals:

○ underflow: if the synchronization position reaches a minimum (-1) and becomes 4 (4 = -1 modulo 5)
○ overflow: if the synchronization position reaches a maximum (5) and becomes 0 (0 = 5 modulo 5)

If the signal *underflow* is set, then the demodulated sample has to be dropped. If the signal *overflow* is set, then the symbol *symbol demodulated* and the symbol *next symbol demodulated* has to be taken into account (2 symbols) in this order. To handle these two cases, the *delay line* block generates a signal (*signal: correct phase*) at the correct phase corresponding with the *phase number* input in order to generate the symbol *symbol demodulated* and one signal ( *signal: next phase*) at the phase number -1 in order to generate the symbol *next symbol demodulated* in case an underflow (signal *underflow* set).

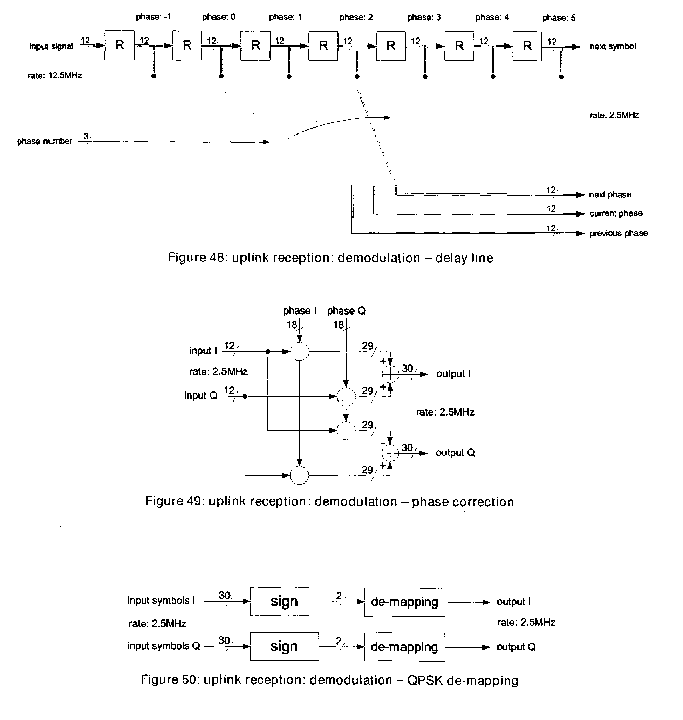

The goal of the *delay line* of Fig 47, shown in details on Fig 48 is to resample the input signal from 12.5MHz to 2.5MHz. After having detected the SOF sequence, the rest of the uplink CDMA frame is demodulated. First, using the current synchronization position, the signal is down-sampled by a factor of 5 (*delay line* block). Then, the phase of the signal is corrected using the computed phase of the channel.

Using the demodulated signal and the received signal, the synchronization position and the phase of the channel are updated.

The correct phase is given by the input *phase number.* The output signal *correct phase* is used to demodulate the symbols. The two others signals *previous phase* and *next phase* along with the signal *correct phase* are used to find if the synchronization position moved (signals used by the *update synchro* block) and represents indeed the previous phase and the next phase (from the current phase delivered on the *current phase* signal). The signal *next symbol* is used in order to handle the case when the synchronization position changes from 4 to 0.

Using the current synchronization position, the signal is down-sampled by a factor of 5.

The *phase number* represents the phase number of the signal. The *current phase* output signal is plugged on the *phase: phase number* signal. The *next phase* output signal is plugged on the *phase: phase number+1* signal. The *previous phase* output signal is plugged on the *phase: phase number-1* signal. These output signals symbol rate is 2.5MHz (5 times lower than the input signal symbol rate).

The signal phase has to be corrected according to the block of Fig 49. The phase of the signal is corrected using the computed phase of the channel. To correct this phase, an estimation of the channel's phase delivered by the *update phase* block is used.

Using the symbols after the phase correction, the symbols are then de-mapped. QPSK demapping of fig 47 is shown in details on Fig 50. To do this, first the sign of the signal I/Q is computed and then the following mapping is used:

+1 ? 0
-1 ? 1

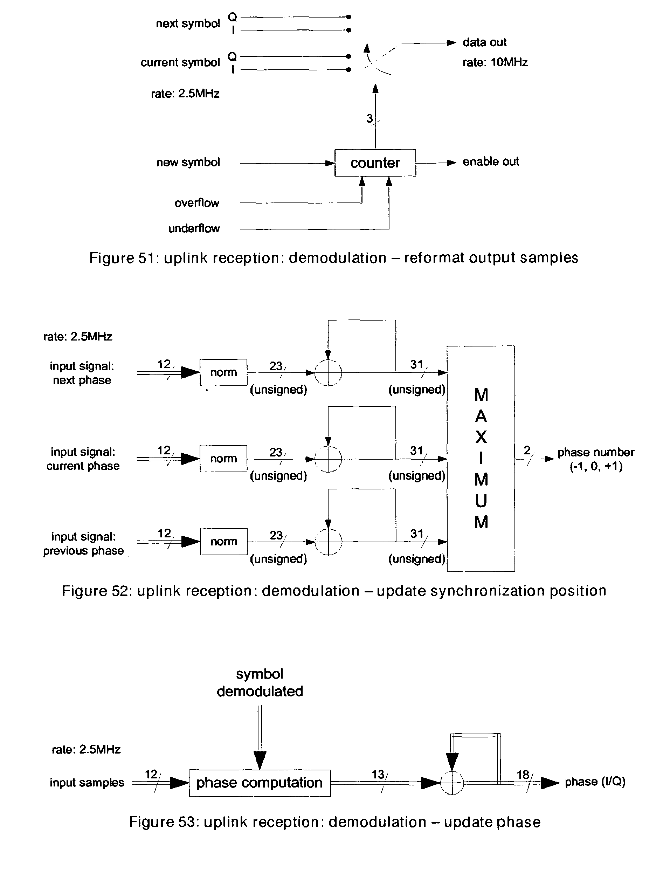

The reformat output bits block of Fig 47 is shown in detail on Fig 51. The input bits arrive at the rate 2.5MHz. When *new symbol* is set, then the data on the inputs *current symbol* and *next symbol* are valid. When neither the overflowsignal nor the *underflowsignal* are set, then only the *current symbol* is used and delivered to the *data out* (2 bits). When the *overflow* signal is set, then *current symbol* and *next symbol* are used and delivered to the *data out* (4 bits). When the *underflow* signal is set, then no bits are delivered to the *data out.*

To implement this, a mux and a counter is used. The counter gives the index of the input bits. The counter is reset to 0 when new symbols are valid (*new symbol* input signal is set). The counter upper limits is:

○ when the *underflow* signal is set: upper limit = 0
○ when the overflowsignal is set: upper limit = 4
○ when neither the *underflow* signal nor the *overflow* signal are set: upper limit = 2

The two LK12011 and LK12001 are not perfectly synchronized. Therefore, the position of the synchronization has to be updated. The block *update synchro* of Fig 47, shown in details on Fig 52, has to follow the position of the synchronization. To do this, an accumulation of the norm of the signal is done. Using the results from this accumulation, the optimum synchronization position is found. Then this synchronization position is used by the *delay line.* The delta between the old synchronization position and the new synchronization position is constrained to be -1, 0 or +1. In order to update the synchronization position, the energy of the signal on the current phase is compared with the energy of the signal on the two adjacent phases. The phase, which maximizes the energy of the signal is chosen.

To do the synchronization position update, a window of 128 symbols is used. The assumption used is that, during this window, the synchronization position is the same (a change of the synchronization position is only due to noise).

The update the phase block of Fig 47 is shown in details on Fig 53. The phase of the signal can change rapidly due to: the channel and the un-accuracy of the clocks. Therefore, the phase value has to be updated. The approximation used is: during a window of 32 samples, the phase of the signal is constant.

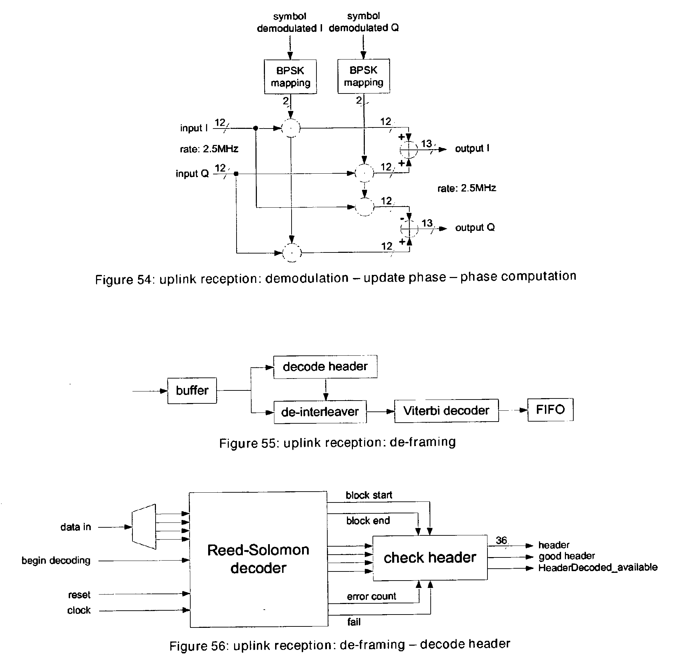

The phase computation is given by the Fig 54 circuit. Using the received signal and the demodulated symbols, the ideal phase of the channel is computed. Then, in order to stabilize this value of the phase of the channel, the mean value is taken over a window of 32 samples.. Remark: the BPSK mapping corresponds to the following mapping:

0 ? +1
1 ? -1

The deframing and the Viterbi decoding are performed according to Fig 55. After having demodulated the demodulated the data, the uplink CDMA frame is decoded. First the header is decoded. Then, the payload is un-interleaved and decoded.. After having detected the start of a frame by detecting the SOF flag, the header has to be decoded with the block of Fig 56. After having demodulated the demodulated the data, the uplink CDMA frame is decoded. First the header is decoded. Then, the payload is un-interleaved and decoded. The encoded header is 60-bit long. The Reed-Solomon decoder is used. The input of this block is 4-bit width bus. The result of this decoder is given on a 4-bit width bus. Then, the number of errors (number of bits) detected and corrected is counted. Afterwards, the resulting header (36 bits) has to be checked:

> ? the *kind of payload encoder* has to be 0 or 1 (4 bits)
> ? The scrambler initialization is not checked (4 bits)
> ? the *length of payload* has to be between 512 and 12144 (16 bits)
> ? the *undefined field* has to be 0 (12 bits)

If the number of errors is low enough (lower than 3 bits) and the resulting decoded header is correct, then the header is delivered with the output *good header* set to high. Otherwise, the *bad header* output is set to high.

First, the received data have to be de-interleaved. The time to process the header - *state 2: decode header* - is longer than the length of the header. Therefore, prior to this block, there is a buffer in order to store the data and wait for the result from the *Header decoder* block.

To do the de-interleaver operation, the same block as for the emission RENVFUSIONFORMAT is used except that, the reading and writing operations are switched: this block writes the data diagonally and read them line by line. Some extra outputs and extra inputs are added. An output - *data available* pin - indicates to the Viterbi decoder that new data are available. Two extra inputs - *kind of encoder* pin and *payload length* - gives information about the current frame and allow to compute the encoded payload length. These two last inputs are indeed the values of two fields' header of the actual frame. They allow to compute the length of the encoded payload - *Length PayloadEncoded* variable:

```
      if kind of encoder is 0,
   LengthPayloadEncoded = 2xLengthPayload+4;
      else,
   LengthPayloadEncoded = ceil (4/3xLengthPayload+5);
      end;
```

A ceil function finds the nearest integer towards +infinity. ex: ceil(2.3) = 3

As soon as *LengthPayloadEncoded* bits have been sent from the *de-interleaver* block to the *Viterbi decoder,* the *de-interleaver* block stops sending bits and reset its internal memory and set to high the output pin *last block read*.

Then, the data is decoded. The Viterbi decoder is used. There are two different decoders. The value of the header (the field *kind of encoder*) selects the correct decoder. The resulting bits are stored into the FIFO memory. During the processing, the pin *start decoder* stays high.

Using the values of the header's fields, the length of the encoded payload can be processed (variable *LengthPayloadEncoded).* After the *Payload Decoder* block has received *LengthPayloadEncoded* bits, all the data has been received by the *Payload Decoder* block. The *last block read* pin becomes high. The receiver have to change its state in order to search for a new SOF flag. Therefore, the pin *start* decoder becomes low. After having process the whole payload - the number of bits of the payload before encoding is given inside the header, *constraint length* bits set at "0" are sent to the Viterbi decoder, where *constraint length* is the constraint length of the Viterbi decoder.

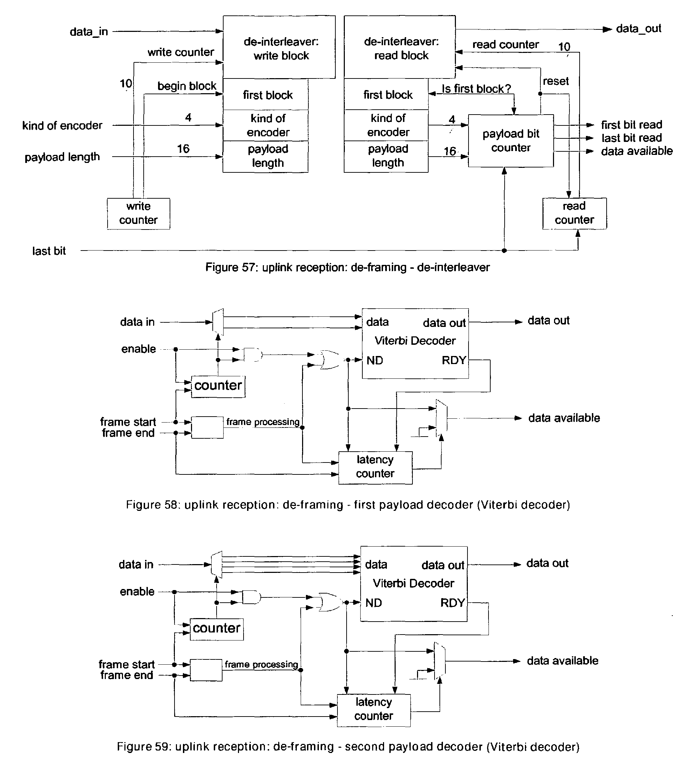

A possible implementation of the de-interleaver of Fig 55 is given in details on Fig 57. The payload field is de-interleaved.

The incoming data - *data_in* pin - are stored in the write memory block. The *write counter* manages the address where the data are stored in. When there is a beginning of a frame - *first data* pin high, the *write counter* is reset and a "1" is stored in the *first block* memory. The *Kind of encoder* and the *payload length* are stored into their associated memory blocks. As soon as the last bit is written, then the input *last bit* becomes high.

In the same time, data are read from the read memory block and placed to the output *data_out* pin. The *read counter* manages the address where the data are read from. The counter *payload bit counter* counts the number of bits which have been sent from the *de-interleaver* block to the *Viterbi decoder* block. As soon as this number reaches its maximum, *encoded payload length,* which depends on the *kind of encoder* and *payload length* values, the both counter - *payload bit counter* and *read counter* - are reset and no more bits are sent to the *Viterbi decoder* until a new block begins. If the *first block* memory block is set to "1", it indicates the beginning of a new frame. Then this memory block is set to "0" and the counters *read counter* and *payload bit counter* are reset, the *encoded payload length* is computed. Two output pins indicates if it is the first output bit - *first bit read* output pin - or the last bit read - *last bit read* output pin.

As soon as the *write counter* and *read counter* reaches their maximum - normally at the same time, which is 1024, the write block memory with its associated *first block* is switched with the read block memory with its associated *first block, kind of encoder* and *payload length* memory blocks and the both counters - *write counter* and *read counter*-are reset.

Then, the data is decoded. The Viterbi decoder is used. There are two different decoders shown on Fig 58 and 59. After the de-interleaver operation, the data are decoded using a Viterbi decoder. The value of the header - the field *kind of encoder* - selects the correct decoder. The resulting bits are stored into the FIFO memory.

After the *Payload Decoder* block has received *LengthPayloadEncoded* bits, all the data has been received by the *Payload Decoder* block. The receiver have to change its state in order to search for a new SOF flag. After having process the whole payload - the number of bits of the payload before encoding is given inside the header, all the internal memories are reset.

In order to increase the speed of the Viterbi decoder, the bit rate between the *de-interleaver* block and the *Viterbi decoder* is increased. Therefore, the time needed to decode a 1024-bit block is lower than 1024 bits.

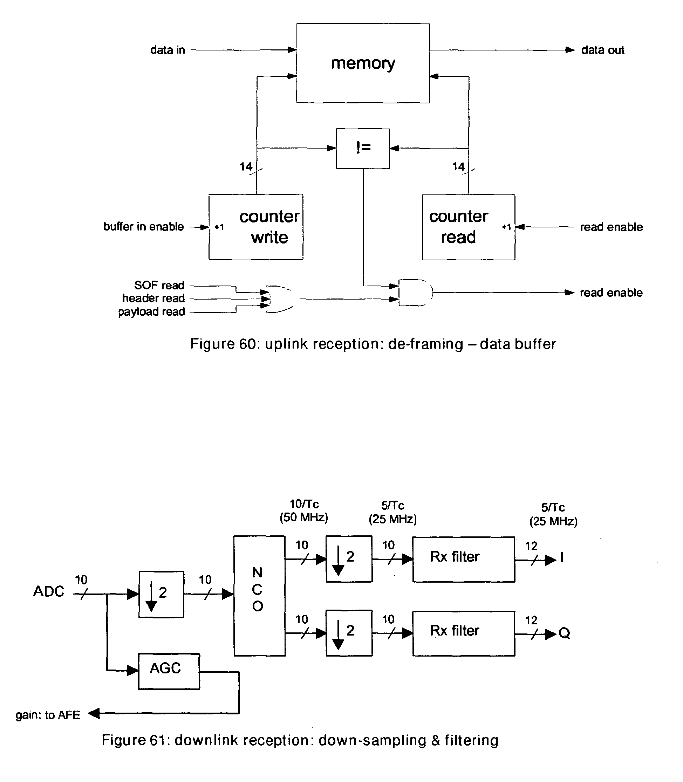

The data are buffered in a block shown on Fig 60. As the time to process the header is longer than the length of the header. Therefore, this buffer allows not to lose payload data, while waiting for the result of the *decode header* block.

Furthermore, if a wrong SOF is detected, this memory allows to search for a new SOF, which could be just after the wrong SOF. Indeed, after receiving the result from the *header decoder* block that the header is incorrect, the *data buffer* has to read again previous data and send them to *SOF detect* block.

The memory is a 18-kbit long FIFO. The memory is a dual port memory. The addresses - for writing and reading - are managed by two counters.

The *counter write* and the *counter read* are a 0 to 16383 counter. These counters are increased by 1 after each read or write operation (indicated by the signals *buffer in enable* and *read enable*). After having read the header, the *counter read* waits for the end of *header decoder* and delivers the payload to the *payload decoder.*


SLAVE LK12011 DOWNLINK RECEPTION CHIP

Now is given a detailed specification of the LK12011 Network Slave.

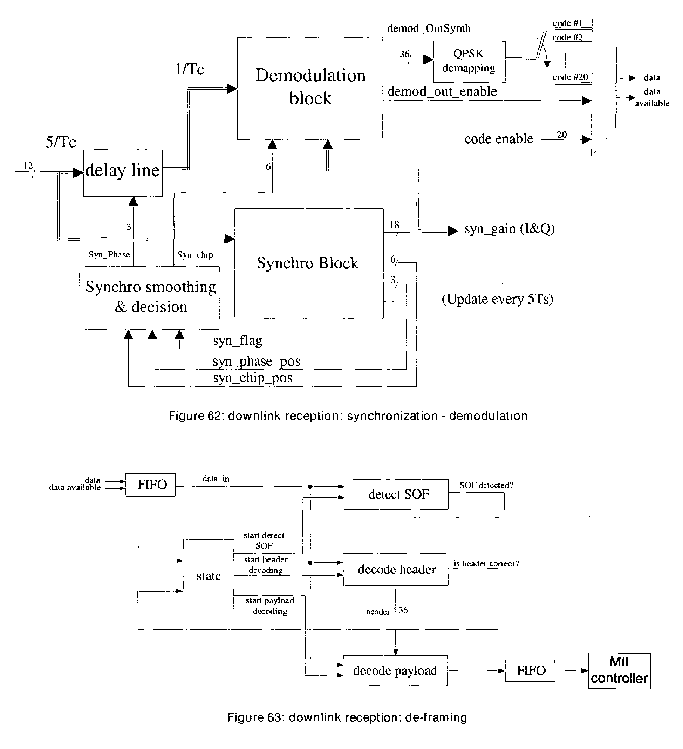

The principle of the downlink reception is shown on Fig 61, while synchronization-demodulation and deframing thereof are shown on Fig 62 and 63 respectively.

The block MII controller of the LK12011 chipset is the same as for the LK12001.

Fig 63 shows the synchronization and demodulation on the downlink reception side.

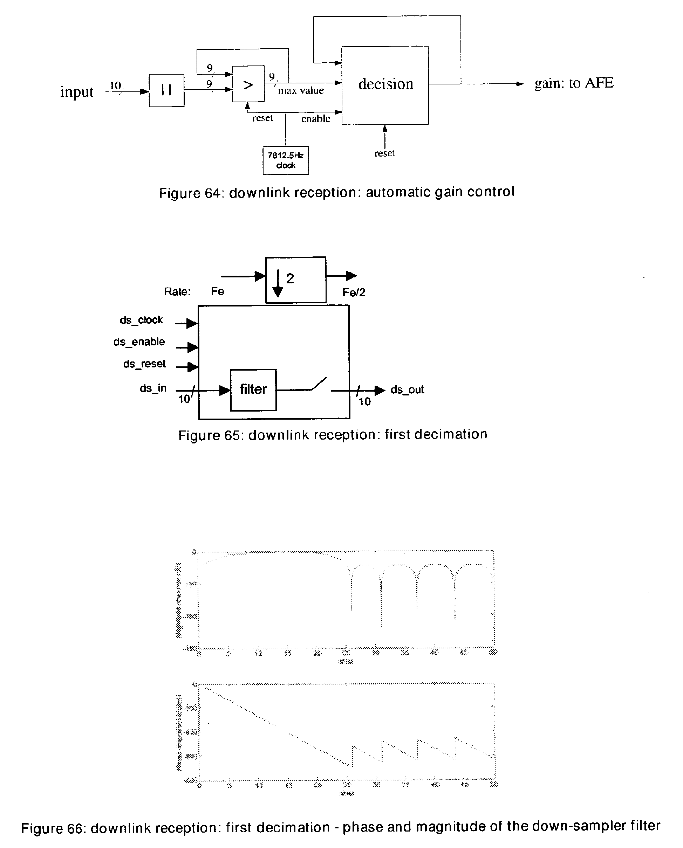

Before doing any process, the gain value must be checked by the automatic gain control (AGC), of Fig 61. It is shown in detail on Fig 64. This block is used to control the gain of the amplifier on the analogue part prior to the ADC (analogue to digital converter). The gain is adapted in order to maximize the amplitude of the input signal without clipping the signal.This block is used to control the gain of the amplifier on the analogue part prior to the ADC (analogue to digital converter). The gain is adapted in order to maximize the amplitude of the input signal without clipping the signal. It ensures that the signal has a significant level for a correct demodulation. It prevents from any overflows. The number of samples taken into account in order to compute the gain corresponds to a time duration of 10Ts - 128$\mu$s - which is 12800 samples, which corresponds to a frequency of 7812.5Hz. Therefore, every 128ps, the *MaxBlock* block is reset and a decision is taken.

First, the maximum absolute value on a window of 12800 samples. Using this maximum value, a gain is computed (*decision* block) and transmitted to the AFE.

The output gain is coded on 4 bits. This output codes the amplification (in dB): 0001 corresponds to 1 dB, 0010 corresponds to 2dB, ...

The policy for the *decision* block is:

- if *MaxValue* is lower than 58, add 7dB to the current gain
- if *MaxValue* is between 58 and 73, add 6dB to the current gain
- if *MaxValue* is between 73 and 92, add 5dB to the current gain
- if *MaxValue* is between 92 and 115, add 4dB to the current gain
- if *MaxValue* is between 115 and 145, add 3dB to the current gain
- if *MaxValue* is between 145 and 183, add 2dB to the current gain
- if *MaxValue* is between 183 and 230, add 1 dB to the current gain
- if *MaxValue* is between 230 and 289, do not change the gain value
- if *MaxValue* is between 289 and 364, subtract 1 dB to the current gain
- if *MaxValue* is between 364 and 458, subtract 2dB to the current gain
- if *MaxValue* is greater than 458, subtract 3dB to the current gain


Just after reset the gain value is set to 0.

For the signal processing, a first down sampler by 2 of Fig 61 is shown in detail on Fig 65. The received signal is first down-sampled using a linear down-sampler. This block decreases the sampling rate by a factor of 2. A filter is applied just before the down sampling to avoid the aliasing effects. This down-sampler is used just before the NCO. The signal is centered around the frequency 15MHz. The signal's bandwidth is 6.1 MHz. Its sampling rate is 100MHz.

The main purpose of the filter is to avoid the aliasing effects. It keeps only the band around the carrier frequency, 15MHz (between 11.95MHz and 18.05MHz) and attenuate all the other frequencies, which are higher than 25MHz.

The filter is a Remez FIR filter. Its coefficients are:

-89 6 24 -85 -245 -197 151 511 511 151 -197 -245 -85 24 6 -89

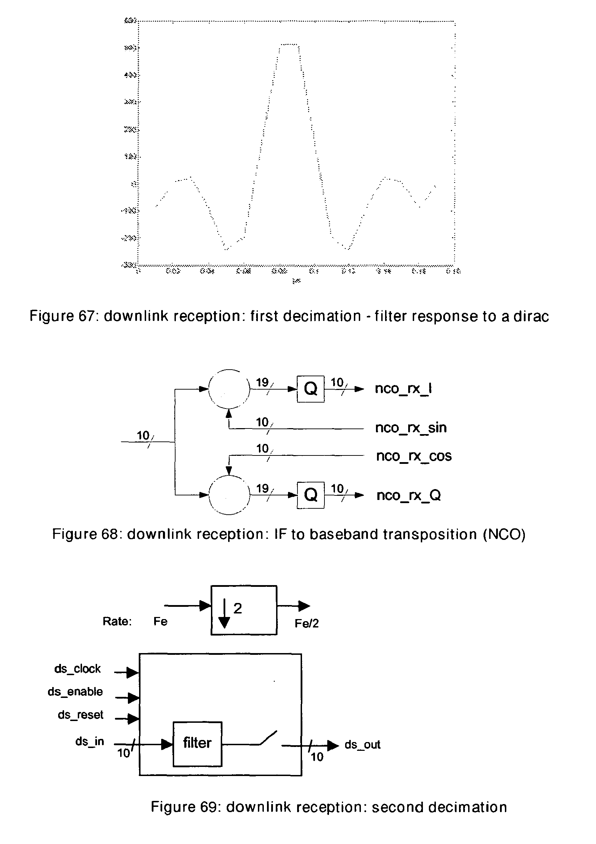

The filter obtained has a magnitude and a phase response shown on Fig 66 and a Dirac response shown on Fig 67.

The input signal is generated by the DAC with a sampling rate of 100MHz. The input and output signals are :

| Name | Description |
|---|---|
| ds_reset | Active low state input : initializes the internal state of the filter (null values for the shift register) |
| ds_clock | Processing clock |
| ds_enable | Active low state input: specify the active state of the filter |
| ds_in[m-1..0] | Input data. It is coded on m bits. |
| ds_out[0..m+1] | Output signal : the output signal is coded on m+2 bits. |

The NCO_Rx block of Fig 61; shown in details on Fig 68, delivers the in-phase and in-quadrate signals calculated from the input carrier signal. The received signal is translated from the center frequency to the baseband.Considering the PLNIC side, Rx is downlink. The carrier frequency is defined at 15 MHz for Rx downlink. The input and output sampling rate is 50MHz.

The input signal is generated by the down-sampler and is quantified on10 bits. The input data rate is 50Mhz.

Tabulated values of the sine and cosine functions are given in the table below. These values are stored into an internal memory. Carrier frequency is set to 15MHz for the RX Downlink and values are generated for a 50 MHz sample rate and quantified using a signed 10-bit format.

To compute these values:

$$\text{Cos table}(k) = \cos(2p?_c(k/F_s)) = \cos(2pk.3/10)$$
$$\text{Sin table}(k) = \sin(2p?_c(k/F_s)) = \sin(2p?k.3/10)$$

where:

$?_c$, the carrier frequency (15 MHz)
$F_s$, the sampling frequency (50 MHz)

Only one period and a half is stored into the internal memory. To compute three periods:

$$\text{Cos}(k) = \text{Cos table}(k) \text{ if } k? [[0; 4]]$$
$$\text{Cos}(k) = -\text{Cos table}(k-5) \text{ if } k? [[5; 9]]$$

where: Cos table(k) the tabulated values of the cosine stored into the internal memory
Sin(k) = Sin table(k) if k? [[0; 4]]
Sin(k) = -Sin table(k-5) if k? [[5; 9]]
where: Sin table(k) the tabulated values of the sine stored into the internal memory

As the cosine and the sine are periodical functions with of period of 2?, only these values are useful : Sin(k+10) = Sin(k) and Cos(k+10) = Cos(k)

Then, the result is: out(k) = I(k).Sin(k)+Q(k).Cos(k)

| Cos (real) | Cos (fixed point) | Sin (real) | Sin (fixed point) |
|---|---|---|---|
| 1.00000000000000 | 0111111111 (511) | 0 | 0000000000 (0) |

(continued)

| Cos (real) | Cos (fixed point) | Sin (real) | Sin (fixed point) |
|---|---|---|---|
| -0.30901699437495 | 1101100010 (-158) | 0.95105651629515 | 0111100110 (486) |
| -0.80901699437495 | 1001100011 (-413) | -0.58778525229247 | 1011010100 (-300) |
| 0.80901699437495 | 0110011101 (413) | -0.58778525229247 | 1011010100 (-300) |
| 0.30901699437495 | 0010011110 (158) | 0.95105651629515 | 0111100110 (486) |

Two second linear down sampler by 2 of Fig 61, shown in details on Fig 69, decrease the sampling rate by a factor of 2. A filter is applied just before the down sampling to avoid the aliasing effects. This down-sampler is used just before the *shaping filter*. The signal is a baseband signal, whose max frequency is 3.05 MHz. The sampling frequency of the input signal is 50MHz.

The main purpose of the filter is to avoid the aliasing effects. It keeps only the baseband frequency (between -3.05MHz and 3.05MHz) and attenuate all the other frequencies. The attenuation must be high for the frequencies above Fe/2.

The filter is a Remez FIR filter. Its coefficients are:

? 102 349 511 511 349 102

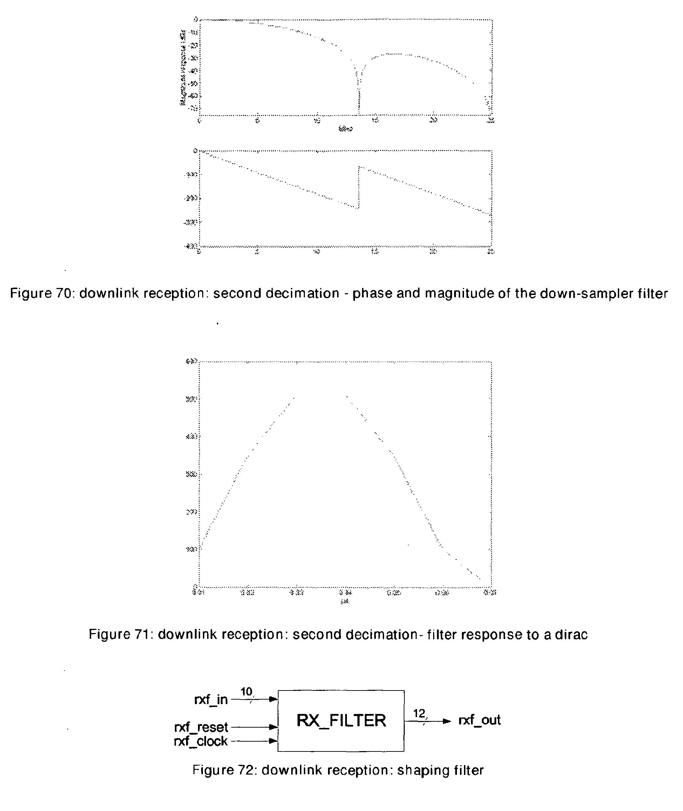

The filter obtained has a magnitude and phase response shown on Fig 70 and a response to a Dirac shown on Fig 71.

The signals input in and output from these second down sampler are :

| Name | Description |
|---|---|
| ds_reset | Active low state input : initializes the internal state of the filter (null values for the shift register) |
| ds_clock | Processing clock |
| ds_enable | Active low state input: specify the active state of the filter |
| ds_in[m-1..0] | Input data. It is coded on m bits. |
| ds_out [0..m+1] | Output signal : the output signal is coded on m+2 bits. |

The RX FIR filter (Rx_FILTER) of Fig 61, shown in details on Fig 72, performs the filtering of the digital input signal with a square root FIR raised cosine filter with a roll-off factor of 0.22. The filter's coefficients are stored into an internal memory (half filter is stored, due to symmetry) in a 10-bit fixed point format. The input and output data rate is chip rate/5, that is 25 MHz in downlink. The input signal is passed into the shift registers.

A *reset* signal is used to initialize the internal shift registers to the null value.

Their input and output signals are :

| Name | Description |
|---|---|
| rxf_reset | Active low state input : initializes the internal state of the filter (null values for the shift register) |
| rxf_clock | Processing clock (25MHz) |
| rxf_enable | Active low state input : specify the active state of the filter |
| rxf_in[9..0] | Input data |
| rxf_out[0..11] | Output signal : the output signal is coding the modulated and spread signal on 12-bits signed integers. |

The output data rate is Tc/5 MHz. The output data are formatted in a 12-bit fixed point format.

The number of filter's coefficient is : N_coef = 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |
| 0.44636778638057 | 0011100100 (228) |
| 0.16599777270489 | 0001010100 (84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

The input and output data rate is Tc/5 (25 Mhz).

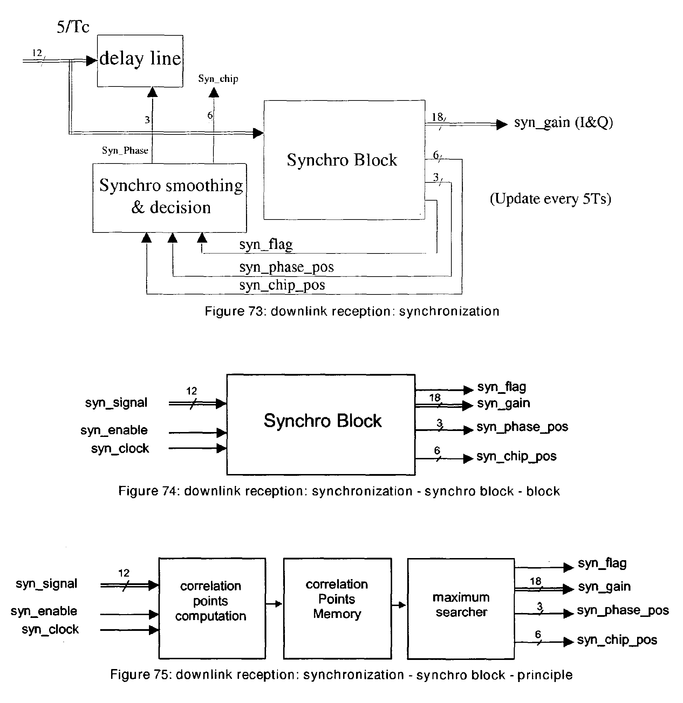

The synchronization and demodulation block of Fig 62 on the downlink reception side is again shown on Fig 73. The signal is synchronized. The *synchro block* computes the raw synchronization position. The synchronization position is filtered (*synchro smoothing & decision* block). Using this filtered synchronization position, the signal is down-sampled (*delay line* block). The *synchro block* performs the synchronization process. The accuracy of this synchronization is Tc/5 (0.04μs). It finds the chip synchronization position without any prior. This synchronization is based on the estimation of a correlation window defined at the rate of 25MHz (i.e. Tc/5 in downlink) and with duration of one symbol (64-Tc period), and is estimated through the synchronization's codes (S0). The *synchro block* computes all the correlation points in 5 Symbol Period (5Ts), finds the maximum within the estimated points, and deduces from it the chip synchronization position.

A whole window contains 64.5=320 points. The estimation of such window is done in five runs. Each run do the computation for a window of length Ts (64.Tc) but defined at rate 1/Tc and with a shift on the input signal of n.Tc/5 with n between 0 and 4.

After these calculations, the correlation peak is searched. It corresponds to the maximum of the magnitude of all the points previously computed (complex numbers). Its position corresponds to the synchronization position. To avoid any perturbations on this position due to the background noise on the channel or the Inter Symbol Interference (ISI), this position is filtered (*synchro smoothing & decision* block). The result of this calculation is then used to delay the signal (*delay line* block) of *syn_phase* Tc/5-defined samples, and to shift the demodulated spreading codes of *Syn_chip*.

The synchronization process uses two steps to demodulate the signal, there :

? synchronization acquisition : there is no previously acquired synchronization position. The *synchro block* have to be run several times until the synchronization position computed settles down.

? synchronization tracking and demodulation: the synchronization position has been already acquired and has to be updated. The *synchro block* is used to compute the new synchronization position value and then this value is filtered and used to delay the input signal.

The synchro block of Fig 62, shown on Fig 74, has, as a purpose, to compute all the correlation points for a correlation window of duration 1Ts defined at rate of 5/Tc (5.64=320 points) and to find from these points the maximum value and its position. The signal is synchronized. First, the raw synchronization position is computed.. All the correlation points (320 points) are computed in 5.Ts (5 Tc-defined windows are consecutively estimated for each Tc/5 phase in 1 Ts). The background noise is also computed by estimating a mean correlation point computed on each 64 Tc-defined correlation window and by selecting the minimum value over the 5 consecutive windows . If the correlation peak is well above (4 or 5 times higher) than the estimated background noise, then it is assumed that a synchro signal is present, otherwise, noise only is assumed. The principle of this synchro block is shown in detail on Fig 75. In order to compute the raw synchronization position, a correlation between the received signal and the synchronization codes is done. The raw synchronization position corresponds to the position of the peak of this correlation function.

Thus, first the correlation function points are computed (*correlation points computation* block), these points are stored (*correlation points memory*) and the peak point of this correlation function is searched (*maximum searcher* block), which corresponds to the raw synchronization position.

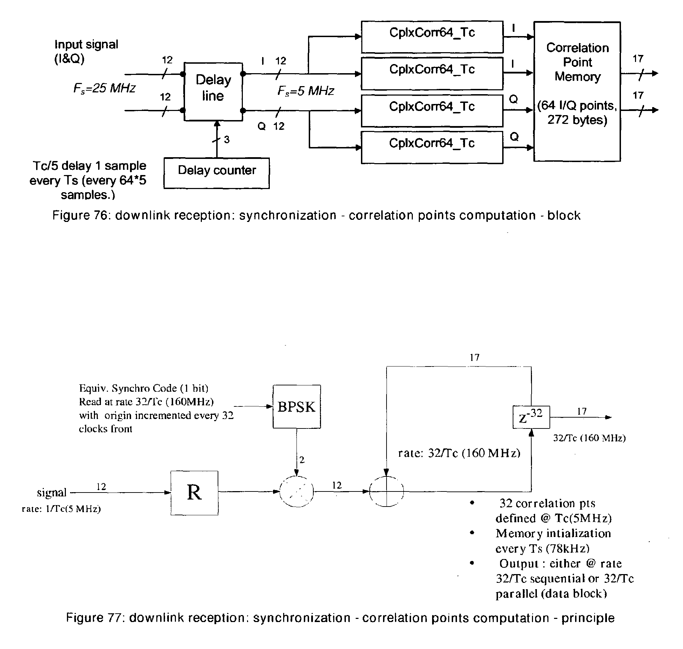

Fig 76 shows the correlation points computation block of Fig 75. All the correlation points (320 points) are computed in 5.Ts : the whole estimation process is split into 5 consecutive steps (each of duration 1 Ts). Only a phase of the 5 Tc/5-defined polyphase components of the whole window is estimated during 1 Ts. A window of length Ts and defined at rate 1/Tc (64 correlation points) is thus estimated in Ts. From a window (Tc-defined) to a consecutive one, the input signal is delayed of Tc/5 and the calculation is done again leading to a new Tc/5 phase. Therefore, after 5 runs, the whole window defined at the rate of 5/Tc is computed, the maximum value can be found and the position of this value is delivered at the output pins.

The estimation of Tc-defined windows is performed thanks to two blocks *CplxCorr64_Tc*, each of these blocks is computing 64 correlation points for either the I channel or the Q channel. As half of the synchronization code's chips are null (the 32 last chips), in order to compute one correlation point only 32 multiplication-accumulations are needed. Therefore, 32 correlation points are computed in Ts/2. Then, each block compute the whole Tc-defined window in Tc. After the computation, all the correlation points are stored into a memory block and then delivered to the *maximum searcher* block.

The *CplxCorr64_Tc* block of Fig 76, which performs the correlations, is defined in Fig 77.

The value of the synchronization code's chips is -2, or 0 or 2. The null chips are the 32 last chips. The purpose of the synchronization block is to find the maximum of the correlation points. Therefore, the chips divided by two can be used. Then, the value of the chips used to compute the correlation points are -1 or 0 or 1.

Thanks to this block, the half window defined at the rate of 1/Tc is computed in Ts, either for the I channel or for the Q channel of the input signal. The resulting correlation points are stored into a memory block. With 4 blocks like this one, a whole window (length: Ts) of correlation points defined at the rate 1 /Tc is computed (for the I channel and the Q channel).

Then, correlation point of maximum amplitude and its position has to be found by the *maximum searcher* block (see below).

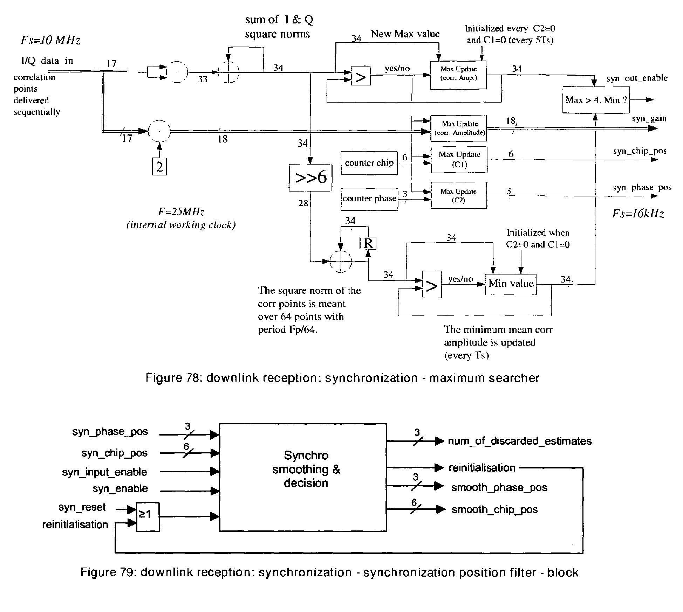

The maximum searcher of the synchro block of Fig 75 is shown on Fig 78. Using the correlation points (from the correlation function between the received signal and the synchronization codes), the peak point is found corresponding to the raw synchronization position. The max has to be searched within the 320 estimated correlation points. As monophase windows defined at rate Tc are estimated sequentially, the max only need to be updated when a new Tc-defined window is in memory. After 5.Ts, the entire window defined at the rate 5/Tc has been computed, and the maximum value and its position can be delivered.

A register C2 counts the Tc/5 phase of the current window and is incremented when a new Tc-defined window is in memory : this register is the delay of the input signal between 0 and 4Tc/5, and is incremented at each Ts (modulo 5). A register C1 counts the chip index of the correlation point under examination (modulo 64).

The outputs of this block are:

? the position of the synchronization. It divided into two fields: the position within a chip, *syn_phase_pos* output, (between 0 and 4) and the synchronization position in number of chips (between 0 and 63), *syn_chip_pos* output.
? *syn_flag* output: the result of the comparison between the maximum value and the noise level (minimum of the 5 mean values). If high, then the chip synchronization position is valid.
? the value of the correlation peak. This value is used to demodulate the signal.

The correlation points are computed for a window (length: Ts) defined at the rate 1/Tc (64 points). The maximum value and its position are then updated between two consecutive window (the position is stored within the registers C1 and C2).

Note also that the mean value of the 64 correlation points of the current window is calculated. This value is used to find an estimate of the noise level . The minimum of the 5 consecutive means is used as a rough estimate of the noise level. If the maximum correlation point amplitude is 4 times higher than the criterion, it is then assumed that a synchronization signal is present on the channel otherwise, noise only is assumed.

The background noise and the Inter Symbol Interference (ISI) can altered the computation of this synchronization's position. Therefore, this position has to be filtered in order to minimize the effect of the noise.

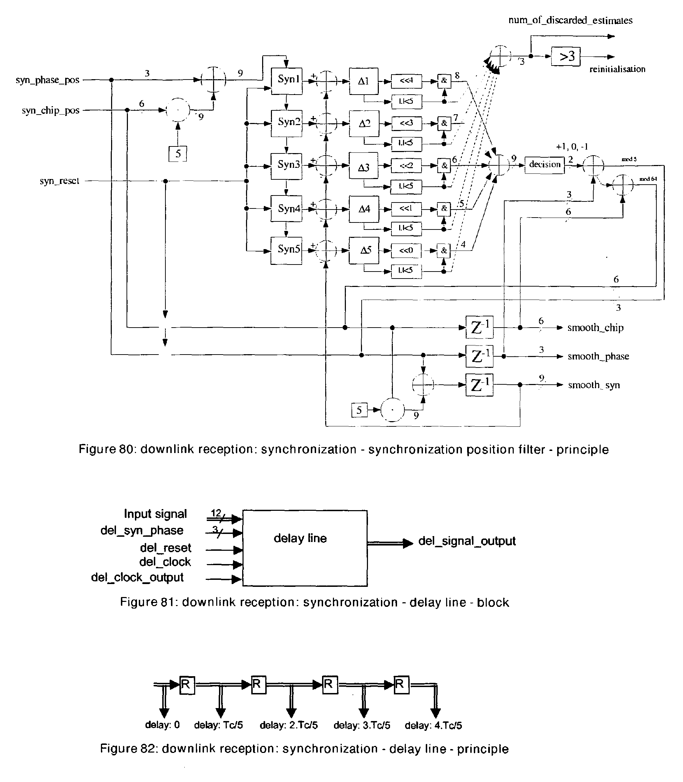

The synchro smoothing and filtering of Fig 73 is shown functionally on Fig 79 and in details on Fig 80. The synchronization position filtering consists in a smoothing process with forgetting factor of 0.5. This process allows to minimize the effects of impulsive noise, which could introduce a wring synchronization position computation. Then the raw synchronization position is filtered. This filtering process helps to diminish the effects of the impulsive noise.

In order to minimize the effect of the noise, the synchronization position has to be filtered. The input pins are the two fields for the synchronization position:

? *syn_chip_pos:* the position of the synchronization in number of chips (between 0 and 63).
? *syn_phase_pos:* the position of the synchronization within a chip (between 0 and 4).

The synchronization update is constrained to be -Tc/5 or 0 or Tc/5. This policy limits the effects of the impulsive noise. The synchronization update filtering consists in a smoothing process with forgetting factor of 0.5.

$$syn\_pos\_update = 1/2 \cdot syn\_pos(t) + 1/4 \cdot syn\_pos(t-1) + 1/8 \cdot syn\_pos(t-2)$$
$$+ 1/16 \cdot syn\_pos(t-3) + 1/32 \cdot syn\_pos(t-4)$$

Actually, the synchronization positions are not directly filtered. First, the difference between the current synchronization estimate and the *syn_pos* numbers (computed by the previous block) are computed. This difference (aka *deltas*) is filtered.

If the magnitude of this *delta* is too high (i.e. greater than 5), this value is discarded. Typically, this indicates the presence of high level of noise.

Then, all the deltas are added together. This value is compared with the value 0.5: if it is higher than 0.5 then the delta value is 1, if it is lower than -0.5, then the delta value is -1, otherwise the delta value is 0.

Finally, the new value of the synchronization position is computed by adding the delta value found with the previous value of the synchronization position. This value is divided into 2 fields: *smooth_chip_pos* and *smooth_phase_pos*.

The output of this block is the synchronization position updated and the number of value discarded *(num_of_discarded_estimates)*. If the number of value discarded is too high(higher than 3), it can indicates a loss of the synchronization or a bad initialization and therefore the signal has to be resynchronized.

The output fields of the synchronization position is then used by two different blocks:

? *smooth_phase_pos* is the position of the synchronization within a chip. It is used by a delay line, which delays the signal. The delay can be between 0 and 4.Tc/5 with a step of Tc/5.
? *smooth_chip_pos* is the position of the synchronization in number of chips. The demodulation block uses this number. The CDMA user codes (used to demodulate the signal) are delayed by this number.

Initialization Period :

When syn_reset is low, an initialization of the module is performed. This initialization consists in :

? Resetting all sync buffers (syn1,...,syn5) and the output registers to zeros.
? Propagating the first incoming synchronization value (when syn_input_enable is set to high). This initial value must be propagated into all sync buffers and into the output registers. Thus, all the deltas registers are initialized to zero.

Enable Period :

When signal syn_enable is high the module can perform synchro filtering, and when low, the module is frozen.

The aim of the delay line block of Fig 73 shown on Fig 81 is to delay the signal. The delay can be between 0 and 4Tc/5 by step of Tc/5. It is a 5 registers line as shown on Fig 82. Then, using the computed synchronization position, the received signal is down-sampled.

The input signal is defined at a rate of 5/Tc (25MHz). This block is used also to resample the signal at the rate of 1 /Tc (5MHz).

The output of this block depends on the value of the input *del_syn_phase*. This value indicates where the output signal has to be plugged:

For example: if *del_syn_phase*=1, then the output is plugged onto the signal *delay: Tc/5*.

Then, the value is hold during Tc. Therefore the output signal is sampled at the rate of 1 /Tc (5MHz). The clock of the output signal is given by the input *del_clock_output*.

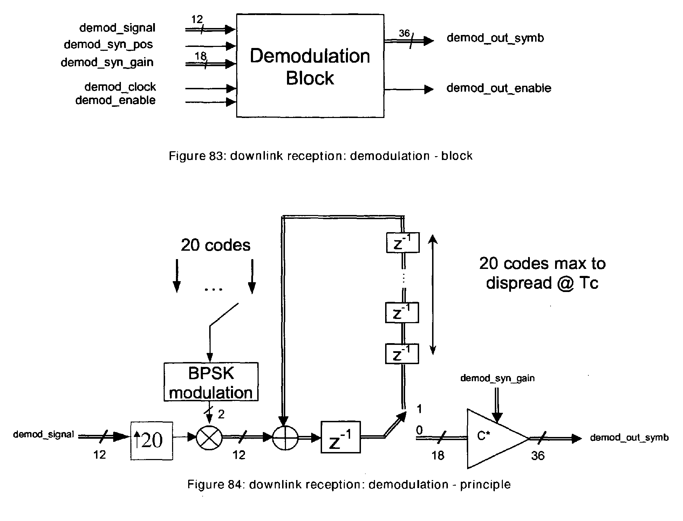

The demodulation block of Fig 77 is functionally shown on Fig 83 and with its principle on Fig 84. To do the demodulation, the signal is correlated with the corresponding transport CDMA codes. This block can demodulate up to 20 CDMA transport code in parallel. Then, the phase of the demodulated symbol is corrected using the computed phase of the channel. The phase of the channel corresponds with the correlation between the received signal and the synchronization codes.. After the synchronization, the signal is demodulated.. Once the synchronization was acquired, the signal can be demodulated. To do this, two kind of information are used:

? the *smooth_chip_pos* number that gives the position of the synchronization in number of chips (between 0 and 63) and is used to delay the CDMA codes.
? the *syn_gain* value that gives the gain of the channel (complex number). Only the phase of this gain is used.

The input signal is sampled at the rate of 1/Tc. This signal is correlated with the CDMA user codes(for every active CDMA codes). The CDMA codes are BPSK modulated (-1/+1). These codes are stored as binary codes (0/1). The BPSK modulation block corresponds to the following mapping: 0 ? 1 and 1 ? -1.

The result from this correlation (a complex number) is multiplied by the conjugate of the gain of the channel (complex number):

let $corr_i$ the result from the correlation for the CDMA code i (complex number)
let *gain* the gain of the channel (complex number)

then the output symbol is:

$$\begin{aligned} demod\_out\_symb \quad &= corr_i \times gain^* \\ &= Re(corr_i) \times Re(gain) + Im(corr_i) \times Im(gain) \\ &+ j \, (Im(corr_i) \times Re(gain) - Re(corr_i) \times Im(gain)) \end{aligned}$$

The sign of this multiplication is the demodulated symbol: the real part corresponds to the I channel and the imaginary part corresponds to the Q channel.

This block can process up to 20 active codes at the same time. This is supposed to be the maximum number of active code for a specific user. To use the same structure for all the active codes, the processing frequency is increased (100 MHz) and all the operations are done sequentially. The input signal is read at the rate of 1/Tc (5MHz) and then, the sample is hold during Tc to do all the multiplications with the 20 active codes. The CDMA codes used are all the active CDMA codes delayed by the quantity *demod_syn_pos*. Then, the result from this multiplication is accumulated into the registers (one register per active code ? 20 registers). Finally, after 64.Tc, the correlation is done and all the 20 results are multiplied by the channel gain (*demod_syn_gain*) and then delivered to the output (the output *demod_out_ enable* is raised to indicate the presence of valid outputs).

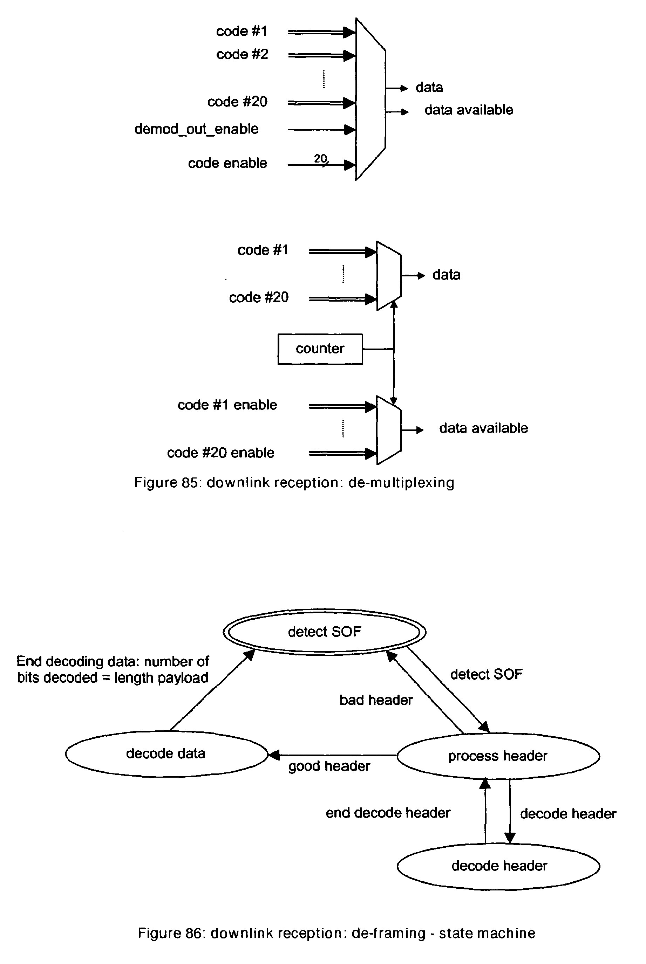

Fig 85 shows the downlink reception de-multiplexing block .The *demodulation block* demodulates 20 CDMA codes on both the I channel and the Q channel. This block enable data from the active codes and discard the data from the inactive codes. This block serialize the data too.

The principle of the state machine of downlink reception de-framing is shown on Fig 86. After having demodulated the signal, the downlink CDMA frames are decoded. First, the beginning of the downlink CDMA frame is detected using the SOF sequence. Then the header is decoded and the decoded header is checked. If the header is correct, then the rest of the frame (payload field) is decoded otherwise, another SOF is detected.

It decodes the CDMA frames. After having received and demodulated the signal, the CDMA frames have to be detected and decoded. To do this, a state machine is used. There are three different states:

? state 1: detect the Start Of Frame (SOF) flag.
? state 2: decode the header
? state 3: decode the payload

First, - *state 1: detect the Start Of Frame* - the beginning of a frame has to be detected. The beginning of a frame corresponds with the flag SOF (011010010110). A correlation between the bits received and the sequence is done. If the result is high enough (higher than 10), it states that it corresponds with the beginning of a frame and change the state to "*state 2: decode the header*".

Then, - *state 2: decoded the header* - the header has to be decoded. To do this, the Reed-Solomon decoder is used. The number of errors (number of bits) detected and corrected is counted. If this number is too high (higher than 3 bits), it states that the header is incorrect. Then the values of the header is checked:

? The kind of payload encoder field has to be 0 or 1 (4 bits)
? The scrambler initialization is not checked (4 bits)
? The length of the payload has to be between 512 and 12144 (16 bits)
? The unused field has to be 0 (12 bits)

If the header is correct, then the state becomes "*state 3:decode the payload'.* Otherwise the state becomes "*state 1: detect the Start Of Frame*".

Finally, - *state 3: decode the payload* - the payload has to be decoded. The data are de-interleaved. Then, the resulting data are decoded using a Viterbi decoder.

The resulting algorithm is:

```
// ceil function finds the nearest integer towards +infinity
// ex: ceil(2.3) = 3;
// Initialization:
state = 1;
SOF detected = 0;
for(;;) // infinite loop
{
        switch(state)
        {
                case 1:// look for the SOF flag
                        SOF detected = Detect SOF flag();// run the
                        Detect SOF flag block
                        If SOF detected == 1       // look the outputs
```

```
                {
                        state = 2;// SOF detected => go to state 2
                        CountBitsHeader = 0;
                        Reset decode header internal memories();
                        // reset the internal memory of the decode
                        header block
                }
                break;
        case 2:// decode the header
                Place the received bit on the input data_in pin of
                the header decoder block();
                CountBitsHeader++;
                // CountBitsHeader = number of bits received and
                placed on the input of
                // the header decoder block;
                if (CountBitsHeader == 1)
                {
                        Place an impulse signal on the input pin
                        begin decoding of the header decoder
                        block();
                        // Begin to decode the header
                }
                // After having placed the 60-bit long header on
                the input of Decode
                // header block, begin to process the payload
                if(CountBitsHeader >= 60)
                {
                        while(HeaderDecoded _available == 0)
                        {
                                Store received data();
                                // in order not to lose the received
                                data while waiting for
                                // result of the header decoding
                                header, store the received
                                // bits
```

```
}
// wait for the result from the header
decoder block
if (good_header == 1)
{
        // the header is correct, so do the
        payload decoding
        state = 3;
        // Compute the length of the encoded
        payload using the
        // fields of the header decoded
        if (KindOfEncoder == 0)
        {
                LengthPayloadEncoded =
                1024xceil((2xLengthPayload+
                4)/1024);
Select Viterbi decoder number 0();
                // Select the Viterbi decoder
                number 0
        }
        if (KindOfEncoder == 1)
        {
                LengthPayloadEncoded =
                1024xceil((4/3xLengthPayload
                +5)/1024);
Select Viterbi decoder number 1();
                // Select the Viterbi decoder number
                1          .
}
CountBitsPayload = 0;
Reset decode payload interleaver internal
memories();
// reset the internal memory of the
interleaver.
// The interleaver has two blocks of
```

```
                    memory: one for
                    // writing and one for reading. Only the
                    block which is done
                    // for writing is reset.
            }
            else // bad header
            {
                    state = 1;
                    // The header was corrupted so stop the
                    payload
                    // processing and look for another SOF flag
              .
            }
    }
    break;
    case 3:               // decode the payload
            if (CountBitsPayload == 0)
            {
                    Wait four bits();
                    // Discard the first 4 bits
            }
            Place the received bit on the input data_in of the
            payload decoder block();
            CountBitsPayload++;
            // CountBitsPayload = number of bits received and
            sent to the input of
            // the payload decoder block;
            if (CountBitsPayload == 1)
            {
                    Place an impulse signal on the input first
                    data of the payload decoder block();
                    // begin to process the payload
            }
            if(CountBitsPayload >= LengthPayloadEncoded)
            {
                    state = 1;
```

```
                                       // received all the payload. The processing
                                       is not finished but it
                                       // does not need extra inputs.
                                       Reset Detect SOF internal memory();
                                       // Reset the internal memory of the detect
                                       SOF block in order to
                                       // process a new frame
                                   }
                               }
                           }
```

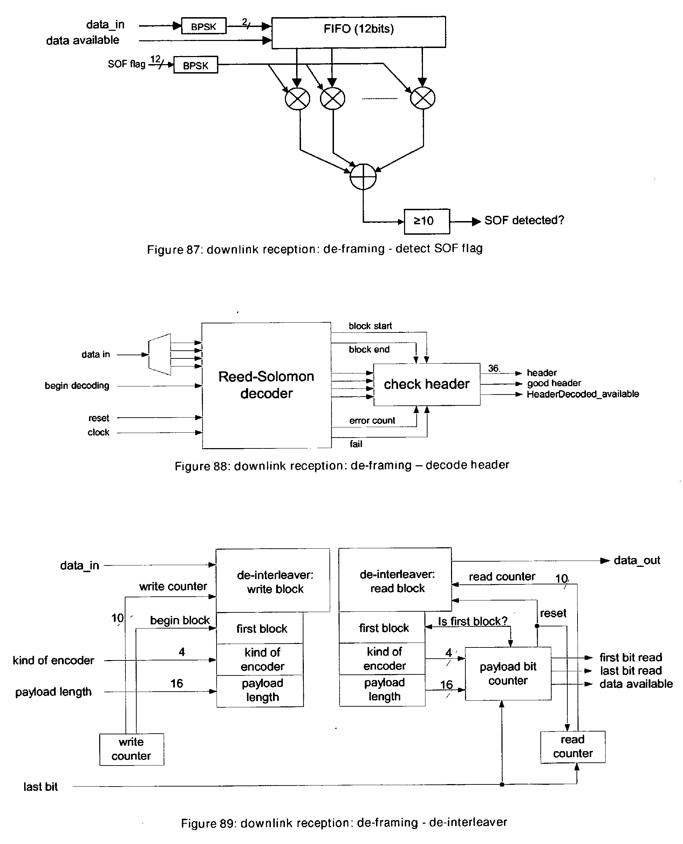

The detection of the start of frame flag is performed by block of Fig 87. First, the SOF sequence is detected. A correlation between the demodulated symbols and the SOF sequence (12 bits) is performed. If the result is greater than 10 (0 or 1 error on the SOF sequence), then a SOF sequence has been detected.

This block makes a correlation between the bits received and the SOF flag. The SOF flag is 011010010110. To do this, first the received bits are BPSK encoded:

$$0 ? +1$$
$$1 ? -1$$

Then, the result is multiplied with the corresponding BPSK encoded SOF flag bit and summed. As the BPSK encoded SOF flag bits are -1 or +1, the multiplication operation corresponds with a simple XOR operation and no BPSK encoding is needed. The sum of the results from the multipliers is compared with 10:

? if higher than 10: a SOF has been detected (*SOF detected* output set to high)
? otherwise: no SOF detected (*SOF detected* output set to low)

The decoding of the header is performed by circuit of Fig 88. After having detected the SOF sequence, the header is decoded and checked. If the header is correct, then the payload has to be decoded. If the header is not correct, then another SOF is searched. The starting position for the new SOF search is one bit after the beginning of the previous SOF sequence (which implied a wrong header).

After having detected the start of a frame, the header has to be decoded. The encoded header is 60-bit long. The Reed-Solomon decoder is used. The input of this block is 4-bit width bus. The result of this decoder is given on a 4-bit width bus. Then, the number of errors (number of bits) detected and corrected is counted. Afterwards, the resulting header (36 bits) has to be checked:

? the *kind of payload encoder* has to be 0 or 1 (4 bits)
? The scrambler initialization is not checked (4 bits)
? the *length of payload* has to be between 512 and 12144 (16 bits)
? the *undefined field* has to be 0 (12 bits)

If the number of errors is low enough (lower than 3 bits) and the resulting decoded header is correct, then the header is delivered with the output *good header* set to high. Otherwise, the *bad header* output is set to high.

The time to process the header is longer than the header: the header is 60-bit long and the time to process the header is at least 66 bits.

For decoding the payload, first, the received data have to be de-interleaved. The time to process the header - *state 2: decode header* - is longer than the length of the header. Therefore, prior to this block, there is a buffer in order to store the data and wait for the result from the *Header decoder* block.

To do the de-interleaver operation, the same block as for the emission is used except that, the reading and writing operations are switched: this block writes the data diagonally and read them line by line. Some extra outputs and extra inputs are added. An output - *data available* pin - indicates to the Viterbi decoder that new data are available. Two extra inputs - *kind of encoder* pin and *payload length* - gives information about the current frame and allow to compute the encoded payload length. These two last inputs are indeed the values of two fields' header of the actual frame. They allow to compute the length of the encoded payload - *LengthPayloadEncoded* variable:

```
if kind of encoder is 0,
      LengthPayloadEncoded = 2xLengthPayload+4;
 else,
      LengthPayloadEncoded = ceil (4/3xLengthPayload+5);
 end;
```

A ceil function finds the nearest integer towards +infinity. ex: ceil(2.3) = 3. As soon as *LengthPayloadEncoded* bits have been sent from the *de-interleaver* block to the *Viterbi decoder,* the *de-interleaver* block stops sending bits and reset its internal memory and set to high the output pin *last block read.*

Then, the data is decoded. The Viterbi decoder is used. There are two different decoders. The value of the header (the field *kind of encoder*) selects the correct decoder. The resulting bits are stored into the FIFO memory. During the processing, the pin *start decoder* stays high.

Using the values of the header's fields, the length of the encoded payload can be processed (variable *LengthPayloadEncoded*). After the *Payload Decoder* block has received *LengthPayloadEncoded* bits, all the data has been received by the *Payload Decoder* block. The *last block read* pin becomes high. The receiver have to change its state in order to search for a new SOF flag. Therefore, the pin *start* decoder becomes low. After having process the whole payload - the number of bits of the payload before encoding is given inside the header, *constraint length* bits set at "0" are sent to the Viterbi decoder, where *constraint length* is the constraint length of the Viterbi decoder.

A possible implementation of the de-interleaver is shown on Fig 89. After having found a correct header, the payload field is first un-interleaved and then decoded using a Viterbi decoder.

The incoming data - *data_in* pin - are stored in the write memory block. The *write counter* manages the address where the data are stored in. When there is a beginning of a frame - *first data* pin high, the *write counter* is reset and a "1" is stored in the *first block* memory. The *Kind of encoder* and the *payload length* are stored into their associated memory blocks. As soon as the last bit is written, then the input *last bitbecomes* high.

In the same time, data are read from the read memory block and placed to the output *data_out* pin. The *read counter* manages the address where the data are read from. The counter *payload bit counter* counts the number of bits which have been sent from the *de-interleaver* block to the *Viterbi decoder* block. As soon as this number reaches its maximum, *encoded payload length,* which depends on the *kind of encoder* and *payload length* values, the both counter - *payload bit counter* and *read counter* - are reset and no more bits are sent to the *Viterbi decoder* until a new block begins. If the *first block* memory block is set to "1", it indicates the beginning of a new frame. Then this memory block is set to "0" and the counters *read counter* and *payload bit counter* are reset, the *encoded payload length* is computed. Two output pins indicates if it is the first output bit - *first bit read* output pin - or the last bit read - *last bit read* output pin.

As soon as the *write counter* and *read counter* reaches their maximum - normally at the same time, which is 1024, the write block memory with its associated *first block* is switched with the read block memory with its associated *first block, kind of encoder* and *payload length* memory blocks and the both counters - *write counter* and *read counter-* are reset.

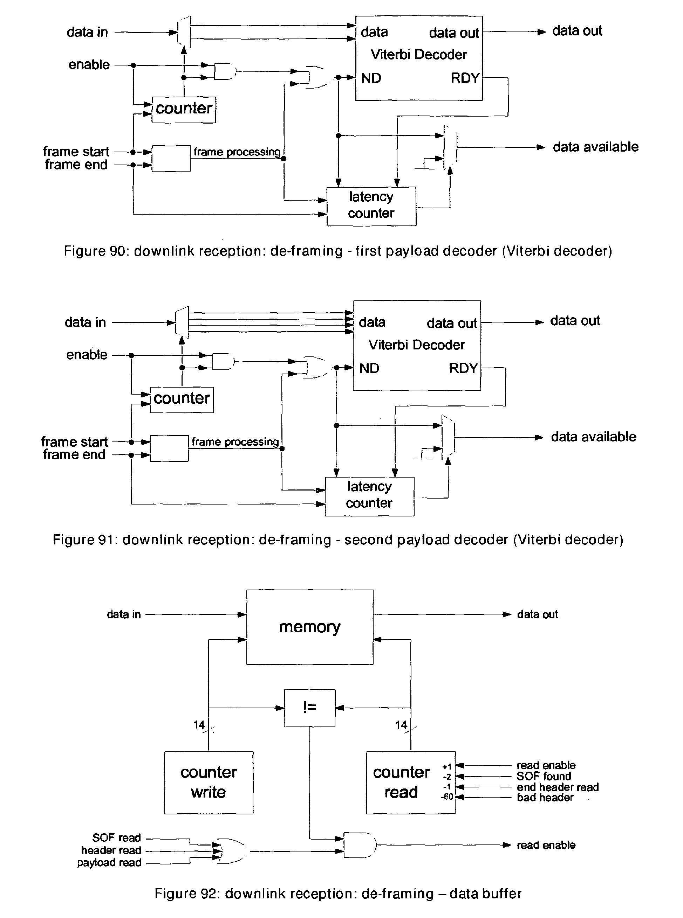

Then, the data is decoded. The Viterbi decoder is used. There are two different decoders shown on Fig 90 and 91 respectively. The value of the header - the field *kind of encoder* - selects the correct decoder. The resulting bits are stored into the FIFO memory.

After the *Payload Decoder* block has received *LengthPayloadEncoded* bits, all the data has been received by the *Payload Decoder* block. The receiver have to change its state in order to search for a new SOF flag. After having process the whole payload - the number of bits of the payload before encoding is given inside the header, all the internal memories are reset.

In order to increase the speed of the Viterbi decoder, the bit rate between the *de-interleaver* block and the *Viterbi decoder* is increased. Therefore, the time needed to decode a 1024-bit block is lower than 1024 bits.

The data are buffered in the block of Fig 92. As the time to process the header is longer than the length of the header. Therefore, this buffer allows not to lose payload data, while waiting for the result of the *decode header* block.

Furthermore, if a wrong SOF is detected, this memory allows to search for a new SOF, which could be just after the wrong SOF. Indeed, after receiving the result from the *header decoder* block that the header is incorrect, the *data buffer* has to read again previous data and send them to *SOF detect* block.

The memory is a 18-kbit long FIFO. The memory is a dual port memory. The addresses - for writing and reading - are managed by two counters.

The *counter write* and the *counter read* are a 0 to 16383 counter. These counters are increased by 1 after each read or write operation. When a SOF is found, the *counter read* is decreased in order to take the latency into account. When a bad header is found, the *counter read* is decreased by 60 in order to search for a new SOF.

SLAVE LK12011 UPLINK TRANSMISSION

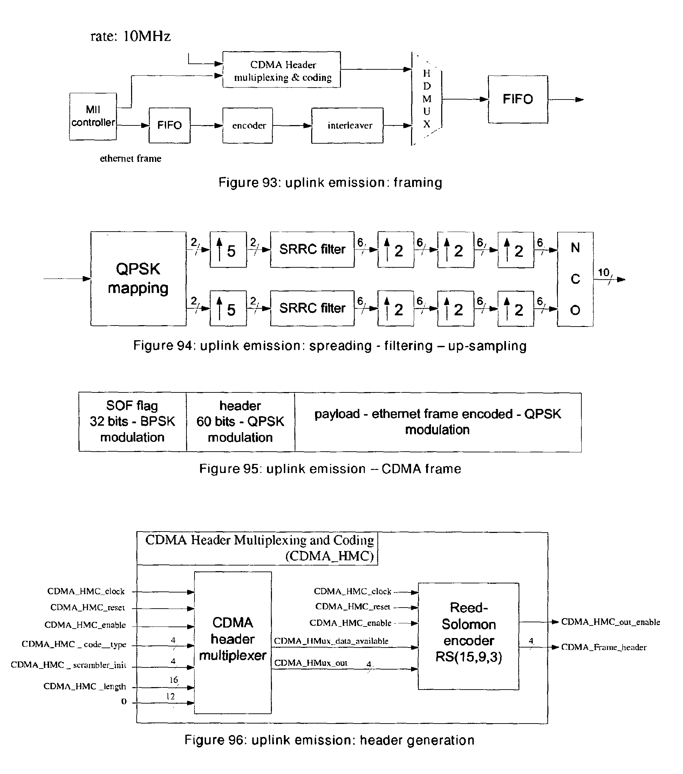

Below is given the description of the Uplink emission developped in the LK12011. The principle of the framing, spreading, filtering, up-sampling of the uplink emission are now shown on Fig 93 and 94. On the uplink emission side, the upload CDMA frame formation process. The LK12011 communicates with the gateway (LK12001) by sending some frames. The frames emitted on the PLC medium are CDMA frames.

The CDMA frame includes the three different fields: a start of frame flag (SOF), a header and a payload. The two latter are obtained from the MII controller or the system controller. These three frames are serially concatenated in this order (SOF first, then the header and finally the payload), and encoded so as to protect them against error bursts when transmitted.

Fig 95 shows uplink emission CDMA frame.

The Start of Frame Flag (SOF) is used at reception end to detect the beginning of a frame and to synchronize the gateway (LK12001). It is a specific pattern, which is modulated only on the I channel. Therefore, the modulation of the SOF flag is a BPSK modulation (on the contrary, the header and the payload are QPSK modulated). This SOF flag is not generated in the *framing* block. It is appended to the CDMA frame within the *QPSK mapping* block.

The header contains some key system information (data frame length, kind of payload encoding, initialization of the payload scrambler). This header is protected with a Reed-Solomon error correcting code and is sent directly on the channel without interleaving.

The payload encapsulates a whole Ethernet frame that is convolutionally encoded and interleaved (see Fig 94). On the uplink emission side, the filtering and the filtering in order to get the emitted signal.

Firstly, the header and the payload are concatenated by a multiplexer within the block *HDMUX* (see Fig 93, *HDMUX* block). Then, within the block *QPSK mapping,* the SOF flag is appended (seeRENVFUSIONFORMAT *QPSK mapping* block).

The generation of a CDMA frame is the same as for the downlink emission except that the *SOF flag* is not generated and concatenated with the header and payload of the CDMA frame. This will be done later during the *QPSK mapping.*

The CDMA Header multiplexing and coding block is shown on Fig 95. The uplink CDMA frame is the concatenation of a SOF flag, an header and a payload. The SOF is dedicated to, on the uplink reception side, detect the beginning of an uplink CDMA frame. This SOF allows to estimate a first estimate of the synchronization position and the phase of the channel. Therefore, in order to get better result, the SOF flag is a Gold sequence. This implies that the SOF sequence has a quasi-ideal auto-correlation property with a high main peak to side peaks ratio. Furthermore, the SOF flag is BPSK encoded in order to increase the distance between the points. This SOF flag is mandatory for a good synchronization without the use of blind demodulation.

Then, the header and the payload fields are QPSK encoded.The header is composed of 36 bits. This header includes the following fields :

1. the type of the forward error correcting code, used to protect the data (4 bits)
2. payload scrambler initialization (4 bits)
3. the length of the data frame (16 bits)
4. an unused field of 12 bits (for future use)

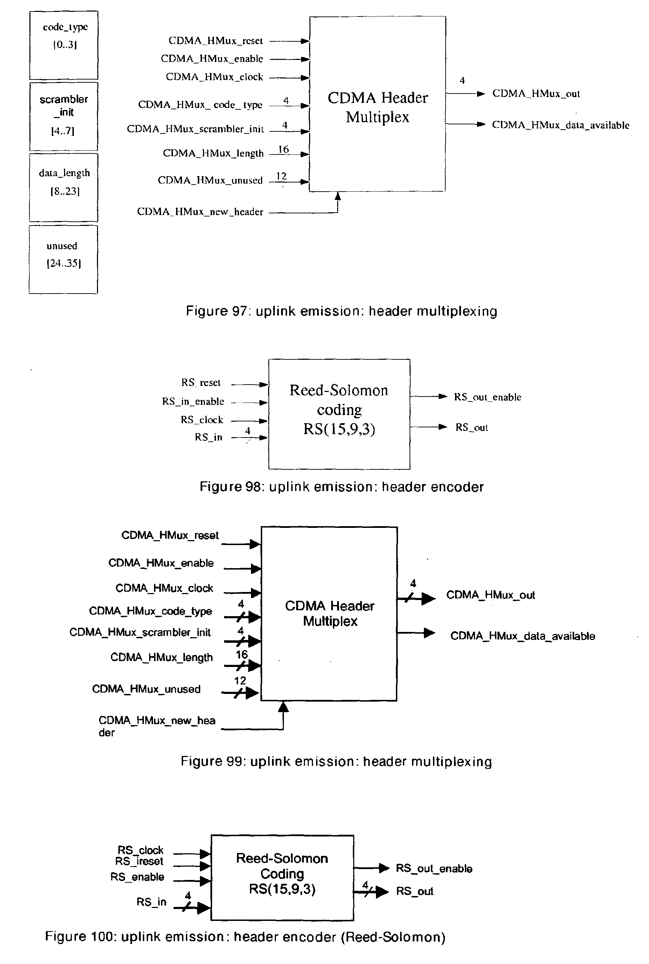

The header is received in parallel on a bus of size 36 bits and has to be sequentially output with 4-bit symbols. This is the role of the CDMA Header Multiplexer (CDMA_HMux). When multiplexed, the Header must be then encoded by a Reed-Solomon Encoder. As shown in the Fig 96, the Reed Solomon Encoder works with 4-bit information words (see next paragraph for details). The global structure is given on Fig 97 - 99. MA_HMux)

The goal of the CDMA Header Multiplexer is to sequentially output the header received on a 36-bit bus.

The Functional Behaviour of this multiplexer is the following : if(CDMA_HMux_reset is low)

```
    the internal register are set to 0
    CDMA_HMux_data_available = 0
    wait_for_new_header =1 // internal state
    deliver_data =0 // internal state
else
    if(CDMA_HMux_enable is high)
        if(CDMA_HMux_new_header is
```

```
     high)&(wait_for_new_header=1)
      read new header on input
     wait_for_new_header = 0
     deliver_data = 1
      count = 0
 end // if new_header
 if(deliver_data=1)
     deliver data on output
     CDMA_HMux_data_available =1
     count = count+1
     if(count=36)
         wait_for_new_header =1
         deliver_data =0
         end // if count
     else // deliver_data =0
         CDMA_HMux_data_available = 0
     end // if deliver_data
 elseif(CDMA_HMux_enable is low)
     CDMA_HMux_data available =0
 end // elseif enable
end // else reset
```

The header is protected against error bursts through the use of a (systematic) Reed-Solomon(15,9,3) encoder of Fig 100 whose parameters are :

| ? | m=4 | (dimension of the Galois Field GF(16)) |
|---|---|---|
| ? | $n=2^m-1=15$ | |
| ? | t=3 | (symbol-error correcting capability) |
| ? | k=n-2t | (number of information symbol) |
| ? | dmin=n-k+1 | (minimum distance) |

The Reed Solomon Encoder must be fed with 9 successive information symbols of m bits (m=4) on its input *RS_in*. The Encoder will output (on *RS_out*) the 9 input words (36 bits) as they are, and will produce 6 additional symbols of m bits leading thus to a an amount of 60 coded bits (structured as 4-bits words).

The representation of the encoder (see Fig 15) is based upon the extension Galois Field GF(16) created with the primitive polynomial $p(x) = x^4+x+1$ . The primary element of GF(16), denoted a, is a root of p(x), i.e. $p(a)= a^4+ a +1=0$ : the element a generates the Galois field GF(16) through the set of its powers :

GF(16) = {0,1, a , $a^2$,..., $a^{14}$}

where $14 = 2^m-2$. Let recall that the primary element satisfies $a^{15}=1$.

From p(a)=0 property, each element of GF(16) can be represented as a polynomial of a of degree less or equal to 3 (m-1) by taking the remainder of an element, considered as a power of a, modulo p(a). Equivalently we can take the binary coefficients of this polynomial representation so as to represent the elements of GF(16). For instance, as $a^4+ a +1=0$, we may write that $a^4 = a +1 =0. a^3 + 0. a^2 + 1.a +1. a^0$, or [0011]. Each element a? GF(16) thus writes :

$$a = a_0 + a_1.a + a_2. a^2 + a_3. a^3 = [a_3\ a_2\ a_1\ a_0]$$

with $a_i$, binary coefficients. We thus get the following binary representation table :

| Field element | Basis Representation [ $a^3\ a^2\ a\ a^0$ ] |
|---|---|
| 0 | [ 0000 ] |
| 1 | [ 0001 ] |
| a | [ 0010 ] |
| $a^2$ | [ 0100 ] |

(continued)

| Field element | Basis Representation [ $a^3$ $a^2$ $a$ $a^0$ ] |
|---|---|
| $a^3$ | [ 1000 ] |
| $a^4$ | [ 0011 ] |
| $a^5$ | [ 0110 ] |
| $a^6$ | [ 1100 ] |
| $a^7$ | [ 1011 ] |
| $a^8$ | [ 0101 ] |
| $a^9$ | [ 1010 ] |
| $a^{10}$ | [ 0111 ] |
| $a^{11}$ | [ 1110 ] |
| $a^{12}$ | [ 1111 ] |
| $a^{13}$ | [ 1101 ] |
| $a^{14}$ | [ 1001 ] |

This representation is useful for hardware representation. The binary representation of the elements of GF(16) is particularly convenient when performing sums of elements : only modulo-2 additions of the binary vector representation coefficients have to be performed (without considering any carry).

In the sequence, either the binary representation of the elements of GF(16) or their representation in terms of powers of a are indistinctly used.

The systematic RS(15,9,3) encoder is defined by the following polynomial :

$$g(x) = a^6 + a^9.x + a^6.x^2 + a^4.x^3 + a^{14}.x^4 + a^{10}.x^5 + x^6$$

A codeword c(x), seen as a polynomial of degree n-1 with coefficients in GF(16), associated with the information word m(x) (of degree k-1) may be expressed as :

$$c(x) = x^{n-k}.m(x) + ( x^{n-k}.m(x) \bmod g(x) )$$

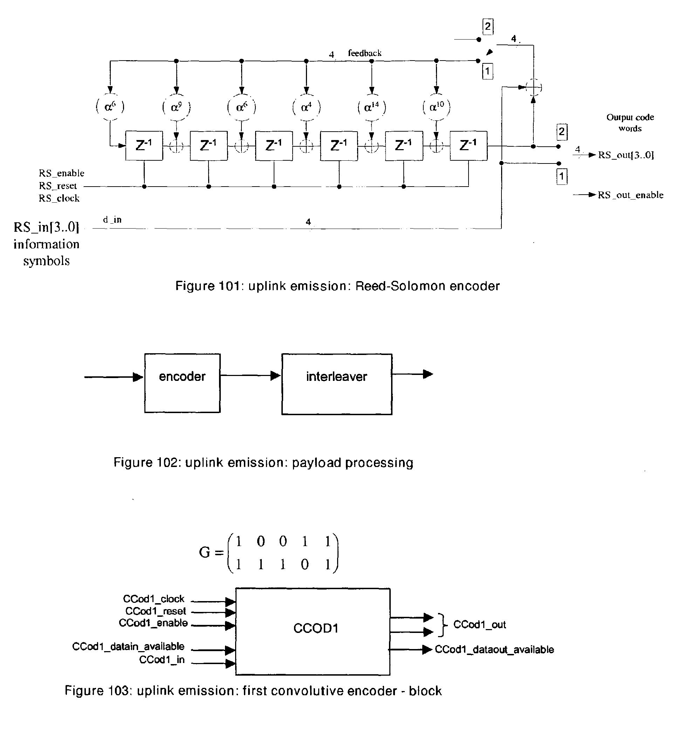

Thus, the codeword has n-k more symbols than the information message m(x). This encoder can be implemented according to the scheme of Fig 101 with 6 shift registers.

On position 1 (position 1 is set when reset is active), the information symbols from *RS_input[3..0]* are passed through the linear feedback shift registers (LFSR), but the result of the LFSR is not of interest : the information message feeds the output.

When the whole information message has fed the encoder, then position 2 is set : the remainder of the division of $x^{n-k}.m(x)$ by g(x) is contained in the LFSR and must be emptied to feed the output and complete the code word. At the same time, during position 2, the LFSR is fed back with null symbols.

The received Ethernet Frame, for payload processing is first convolutionally encoded, then interleaved with a diagonal interleaver. according to Fig 102. The payload field of a downlink CDMA frame is encoded and then interleaved. The encoding allows, on the reception side, to correct the transmission errors. The interleaver allows to spread the errors and, therefore, to avoid the burst of errors, which can introduce errors after the decoding process.

Different kind of convolutional encoders are used. A first encoder has the following parameters : k=1, n=2, ? =2, and its generator matrix is:

$$G = \begin{bmatrix} 1 & 0 & 0 & 1 & 1 \\ 1 & 1 & 1 & 0 & 1 \end{bmatrix}$$

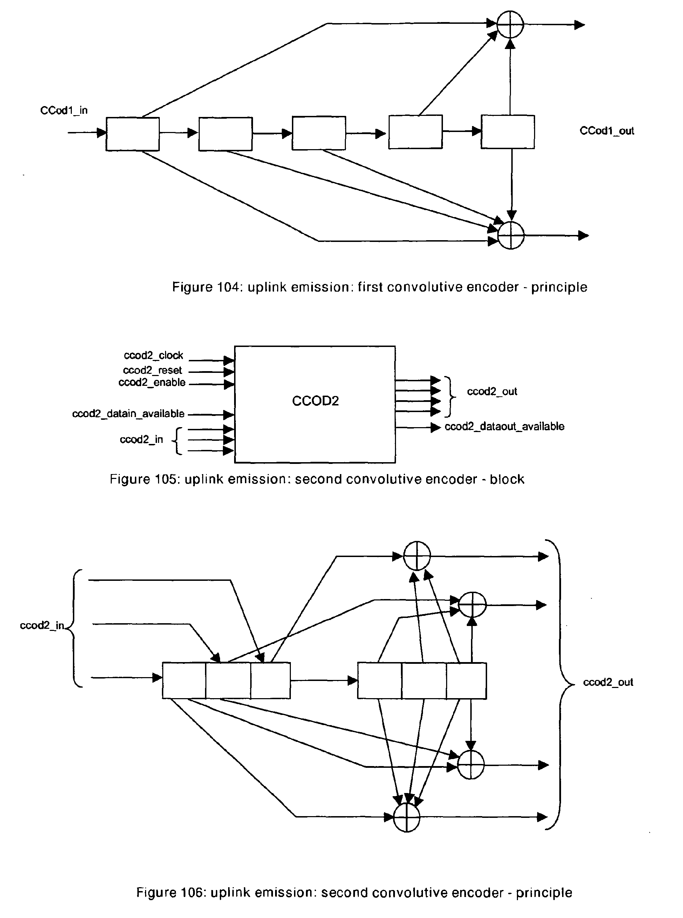

It is shown on Fig 103, its principle is shown on Fig 104. The payload field of a downlink CDMA frame is encoded and then interleaved. The encoding allows, on the reception side, to correct the transmission errors. The interleaver allows to spread the errors and, therefore, to avoid the burst of errors, which can introduce errors after the decoding process.

The data (1 bit) arrive bit per bit. The most recent data is stored into the first shift register. Then, it is shifted from the shift register to the next shift register (to the right side). The output data bits (2 bits) are computed using the content of the shift registers.

If the resetinput is high, then the registers' content are reset.

A second encoder has the following parameters : k=3, n=4, ?=2, and its generator matrix is:

$$G ? \begin{pmatrix} 0 & 0 & 1 & 0 & 1 & 1 \\ 0 & 1 & 0 & 1 & 0 & 1 \\ 1 & 1 & 0 & 0 & 0 & 1 \\ 1 & 0 & 0 & 1 & 1 & 1 \end{pmatrix}$$

It is shown on Fig 105, its principle is shown on Fig 106.

The data are stored per block of three bits into the first three shift registers. The most recent data is stored into the rightmost shift register. The output data are calculated using the content of the six shift registers. Then, the three leftmost registers are shifted to the three rightmost registers.

If the *reset* input is high, then the registers' content are reset.

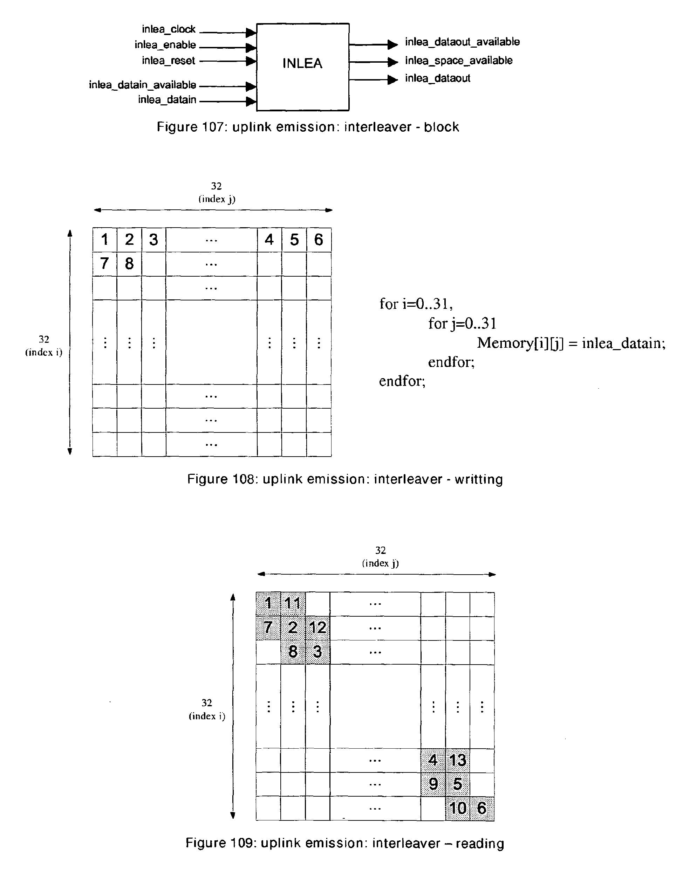

The block of Fig 102 comprises the interleaver of Fig 107. with an interleaving depth of 1024 bits.

The purpose of this block is to interleave a block of data of size 1024. It uses a memory (of the same size) in which the data are written linearly (sequentially) and read in another specific order.

The data are first read on the input and stored into the whole internal memory. While there is some space into the internal memory (the output *inlea_space_available* is high) and some data are available on the input (the input *inlea_data_available* is high), some data can be read from the pin *inlea_datain* and stored sequentially into the internal memory.

The input reading process is described in the Fig 23, where the matrix of Fig 108 represents the internal memory.

```
for i=0..31,
        for j=0..31
                Memory[i][j] = inlea_datain;
        endfor;
endfor;
```

When the memory is full, he output *inlea_space_available* is set at low level and he output signal *inlea_data_available* is set at high level. The data have to be interleaved and output onto the output signal *inlea_dataout*.

The data are read diagonally from the internal memory and set sequentially to the output in the following way :

The process to read the lower diagonal number d is :

```
read_lower_diagonal(d)
{
        for k=0..32-d,
```

```
        inlea_dataout = Memory[k+d][k];
    endfor
}
```

The first index denotes the line number (into the matrix form of the memory) and the second index denotes the column number.

To read the upper diagonal number d:

```
read_upper_diagonal(d)
{
    for k=0..32-d,
        inlea_dataout = Memory[k][k+d];
    endfor
}
```

The algorithm used to read the whole memory and put the data onto the output pin *inlea_dataout*, according to Fig 109, is :

```
read_upper_diagonal(0); // read the main diagonal
for d=1..31, // read the other diagonals
    read_lower_diagonal(d);
    read_upper_diagonal(d);
    endfor
```

When the reading is done - at the same time, the writing is done - then the two memory blocks - the one that stores the data read and the one that stores the data written - are switched. There is no reset done.

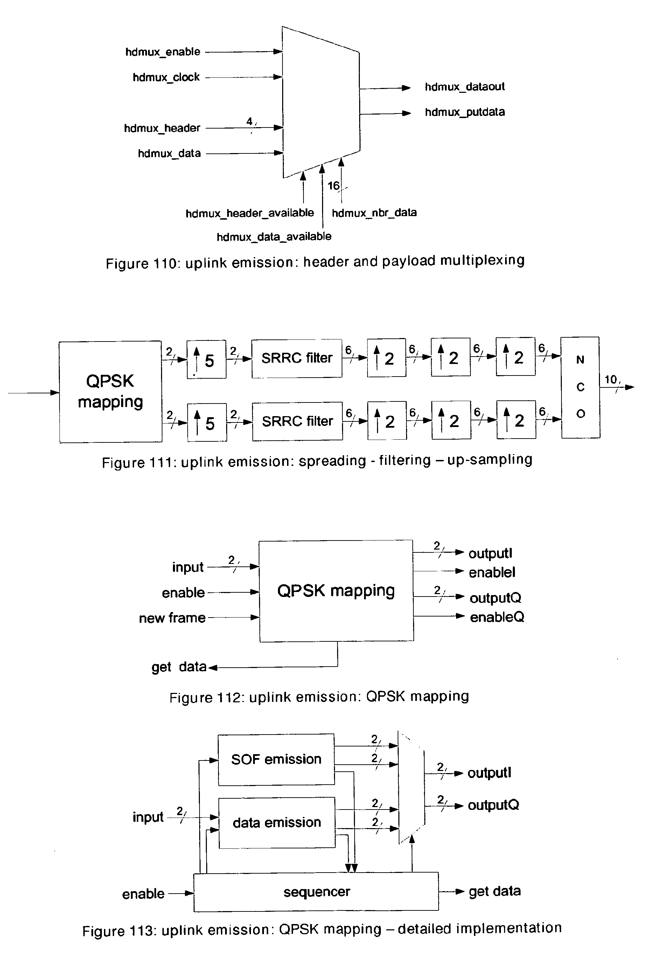

A Header Data Multiplexer (HDMUX), shown on Fig 110 has, as a purpose, to serially concatenate the frame header and the payload data (the SOF flag will be added later).

When a frame header is available - *hdmux_header_available* is high - then the multiplexer reads the 60-bit header per block of 4 bits. These data are placed onto the output - *dhmux_dataout* - and the pin *dhmux_putdata* is set high.

Finally, the data field is read. While the input *hdmux_data_available* is high, the multiplexer reads data from the *hdmux_data* input. The *hdmux_nbr_data* bits represent the length of the CDMA frame (header + data).

The goal of the blocks shown on Fig 111 is to first modulate the signal using a QPSK modulation, to add the SOF flag BPSK modulated. Then, the symbols generated are filtered and up-sampled. Finally, the signal is transposed from the baseband to the IF frequency - the center frequency $?_0$ is 20MHz.

The goal of the QPSK mapping block of Fig 112 is to modulate the input data (2 bits) using the QPSK modulation. The first bit of the *input* pin goes to the *outputl* pin and the second bit goes to the *outputQ* pin. It also add the SOF flag at the beginning of a frame - signaled by the *new frame* pin - BPSK modulated (only modulated on the I channel).

The SOF flag is, before BPSK modulation:

1, 1, 0, 1, 0, 1, 0, 1, 0, 0, 1, 1, 1, 1, 1, 0, 1, 0, 0, 1, 0, 0, 1, 1, 1, 1, 1, 1, 1, 1, 0, 0

To do this, the implementation of Fig 113 is used.
When this block is enabled, it generates the SOF flag BPSK modulated on the I channel. The Q channel remains at 0. The BPSK modulation consists into the following mapping:

0 ? +1
1 ? -1

The SOF flag is the following pattern:

1, 1, 0, 1, 0, 1, 0, 1, 0, 0, 1, 1, 1, 1, 1, 0, 1, 0, 0, 1, 0, 0, 1, 1, 1, 1, 1, 1, 1, 1, 0, 0

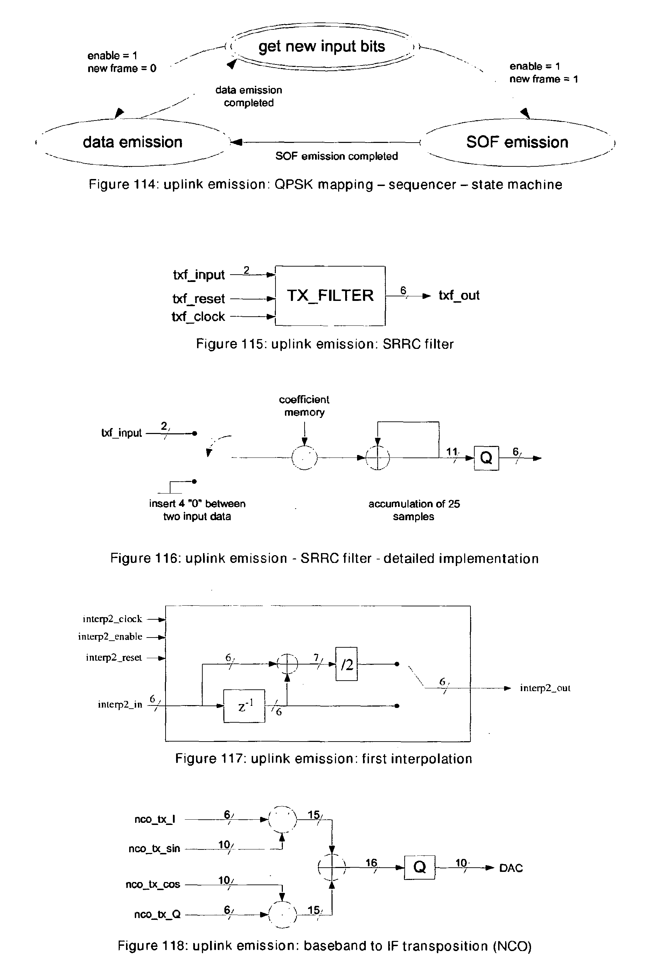

When this block is enabled, it emits the bits on the *input* pin, 2 bits. The bits are first BPSK modulated and then, the first BPSK symbol is placed onto the I channel and the second symbol is placed onto the Q channel.
The sequencer implements the state machine of Fig 114.
During the *get new inputs* state, the output pin *get data* is set during one bit period.
The Tx filter of Fig 115, shown in details on Fig 116, performs the filtering of the digital input data with a square root FIR raised cosine filter with a roll-off factor of 0.22. The filter's coefficients are stored into an internal memory (half filter is stored due to its symmetry) in a 10-bit fixed point format. The input data rate is 2.5Mhz and the output data rate is 12.5MHz. Thus, for a given input sample, 5 output samples are produced in the following time. The input data are first over-sampled by a factor 5 (insertion of 4 "0"s between two data), and then passed into the shift registers at rate 25 Mhz.
A *reset* signal is used to initialize the internal shift registers to the null value.
As a certain number of shift registers are zero valued at a given time, only the non-null valued shift registers will be processed at each time to compute the filter output. In other words, during a chip period, all the 5 phases components of the filter are processed sequentially and independently using the same state of the shift register.
The number of filter's coefficient is : N_coef = 13.
The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |
| 0.44636778638057 | 0011100100 (228) |
| 0.16599777270489 | 0001010100 (84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

Just after the *SRRC* filter block, the data are interpolated by a factor 2 by the block of Fig 117 in order to increase the sampling rate. The interpolator computes the mean sample between two consecutive input samples and insert this sample between these two samples to the output. Thus the output rate is twice the input rate.
On each channel (I or Q), there are 3 consecutive interpolators. The sampling rate just after the SRRC filter is 12.5MHz. Therefore, the output sampling rate after the 3 successive interpolations is 8x12.5MHz = 100MHz.

The block NCO Tx (nco_tx) of Fig 118 delivers an in-phase and in-quadrate carrier for the Tx path. Considering the PLNIC side, Tx is uplink. The carrier frequency is defined as 20 MHz. The input and output sampling rate is 100MHz.

Tabulated values of the sine and cosine functions are given in the table below. These values are stored into an internal memory. Carrier frequency is set to 20MHz and values are generated at rate 100MHz and quantified using a signed 10-bit format.

To compute these values:

Cos table(k) = $\cos(2p?_c(k/F_s))$ = cos(2pk/5)
Sin table(k) = $\sin(2p?_c(k/F_s))$ = sin(2pk/5)

where:

$?_c$, the carrier frequency (20MHz)
$F_s$, the sampling frequency (100MHz)

Only one period is stored into the internal memory. To compute this period:

Cos(k) = Cos table(k) if k? [[0; 4]]

where: Cos table(k) the tabulated values of the cosine stored into the internal memory
Sin(k) = Sin table(k) if k? [[0; 4]]
where: Sin table(k) the tabulated values of the sine stored into the internal memory

As the cosine and the sine are periodical functions with of period of 2?, only these values are useful : Sin(k+5) = Sin(k) and Cos(k+5) = Cos(k)

Then, the result is: out(k) = I(k).Sin(k)+Q(k).Cos(k)

| Cos (real) | Cos (fixed point) | Sin (real) | Sin (fixed point) |
|---|---|---|---|
| 1.00000000000000 | 0111111111 (511) | 0 | 0000000000 (0) |
| 0.30901699437494 | 0010011110 (158) | 0.95105651629515 | 0111100110 (486) |
| -0.80901699437495 | 1001100011 (-413) | 0.58778525229247 | 0100101100 (300) |
| -0.80901699437495 | 1001100011 (-413) | -0.58778525229247 | 1011010100 (-300) |
| 0.30901699437495 | 0010011110 (158) | -0.95105651629515 | 1000011010 (-486) |

Now is described a management of a CDMA chipset according to the invention. The problem to be solved with this management chipset is a problem of guarantee of transport rate. With the known solutions, particularly with audio or video transporting, a real time transporting for each slave device is not achieved. According to the invention this is achieved by sharing CDMA codes in a downlink transport, and by sharing time slots in an uplink transport.

The aim of this technology is to allow a communication between a master (the LK12001 device) and several slaves (LK12011) using the PLT medium. The communication between these two devices is bi-directional.

The communication from the master to the slaves is the downlink. The access technique used is the DS-CDMA. The different codes are assigned to the different slaves (up to 10 different users) Some particular codes are dedicated for the synchronization or for broadcasting. The assignment of the transport codes dedicated for a specific user will be specified later. On startup, each user uses the two codes for the synchronization (code #31 and code #63) and two codes for the broadcast channel (code #1 and code#2).

The communication from the different slaves to the master is the uplink. The access technique used is the CSMA-CA. The physical link is divided into time slots. The different times slots are assigned to the different users. The technique to manage the sharing of this resource will be specified later.

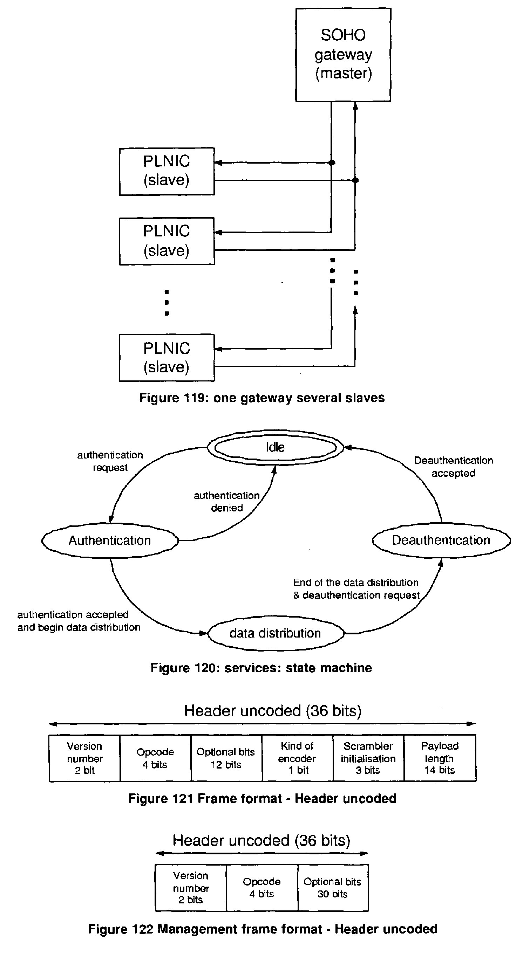

Figure 119 shows one gateway and several slaves.

Physical link

The link used is the PLC. This link is divided into two different physical links: the uplink and the downlink. The separation is done in the frequency domain: the band between 11.95MHz and 18.05MHz is dedicated to the downlink, the band between 18.475MHz and 21.525MHz is dedicated to the uplink

Logical link

On either the downlink or the uplink, the physical link is divided into several logical link. Each logical link allow to create a communication channel between the master to one slave (user).

Downlink

The access technique is the DS-CDMA. Therefore, some CDMA codes are assigned to each logical link. Among the different logical link, there are:

- *synchronization logical link*: dedicated to the synchronization.
- *broadcast logical link*: dedicated to transmit data from the master to all the slaves.
- *transport logical link*: dedicated to transport the data from the master to one specific slave.
- *management logical link*: dedicated to transmit management data from the master to all the slaves.

Uplink

The access technique used is the CSMA-CA. The physical link is divided into time slots. Each time slots are dedicated for one logical link. Among the different logical link, there are:

- *transport logical link*: dedicated to transport the data from one specific slave to the master
- *management logical link*: dedicated to transport data for the link management in order to share efficiently the physical link or to allow new users to enter on the network
- *new user declaration logical link*: dedicated to enable new users to enter the PLT network.

Overview of the services

The different services supported by the devices (LK12001 and LK12011) are:

- Authentication
- Deauthentication
- Privacy
- Data distribution
- Bandwidth negotiation

Authentication

This service allow a new user to be authenticated. When a new user enter the PLT network, it has to be authenticated to the master by giving its MAC address. If the authentication is successful, the master will give it a user number in order to exchange data.
The gateway is responsible to accept (or not) a new user. If the maximum number of active user reached a maximum, then all the new users will be refused. This decision is done locally without asking to any outside controller. The information of a refused user can be given to the outside controller.
If the number of active users hasn't reached a maximum, then the decision to accept (or not) a new user is taken by an outside controller.

Deauthentication

This service is called, when a user want to quit the PLT network or when the gateway want to de-authenticate a given user. This service allow to free the different resources dedicated to this given user.
The decision to leave the PLT network is taken by an outside controller and transmitted to the node (LK12001 or LK12011). The decision to make a user leave the PLT network is taken by the outside controller of the master (gateway) and transmitted to the master (LK12001).

Privacy

The PLT media can be received by non wanted users. In order to enable privacy within the PLT network, all the data transmitted on the network (*data distribution* service) must be encrypted. This is done using the AES algorithm (Advanced Encryption Standard).

The *encryption key* assigned to a particular user is done by an external controller. This encryption key can be changed from times to times by the external controller.

All the data transmitted on the *broadcast logical link* or the data transmitted before the assignment of the *private encryption key* (as for the *authentication* service), the key used is a common key for all the users. This key is called the *Default Encryption Key.* This *Default Encryption Key* is assigned by an external controller.

The data exchanged between the nodes and the external controller are not encoded.

Data distribution

As soon as a user is authenticated, this service can be called in order to exchange data (ethernet frame) between a master and one user.

Bandwidth negotiation

The physical link is shared between the different users. This service is used in order to share the resources and to guaranty to every user a minimum QoS to transmit their different kind of flows (voice, video, data, ...). The resources shared between all the users are:

- downlink: number of codes dedicated for a single user for the transport logical link
- uplink: for the transport logical link, during a *user data* time slot, several CDMA data frames can be emitted by a user. The shared resources corresponds to the number of CDMA data frames emitted by the users.

The outside controller (gateway) of the master node (LK12001) control the shared resources and assign these resources to every users considering its own QoS policy. The implementation of the QoS policy is out of the scope of this specification file.

Relationship between the different services

The succession of the different services follow the following state machine:

Figure 120 shows services: a state machine.

There are 4 different states. First, the user is idle. Then, it requires *authentication* to the master. If the *authentication* is accepted by the master, then the data can be exchanged between the user and the master. In the same time, the services *bandwidth negotiation* and *privacy* are run. These services allow to shape the *resource plan* and set to this authenticated user an encryption key. Finally, when no more data has to be exchanged between the user and the master, the user is *de-authenticated* (or when the master requires this user to quit the PLT network).

CDMA frames Description

There are two kinds of frames in order to handle the network access protocol:

- The data frames, which allow to transfer user data between the master and the slaves
- The management frames, which allow to manage the PLT network and do not transfer any actual data

CDMA frame fields

The frames are called CDMA frames. These CDMA frames encapsulate a whole ethernet frame and add some specific information in order to handle the protocol specified in this section. The frame is divided into three different fields:

- *SOF* (Start Of Frame): this field allow to detect the beginning of a CDMA frame.
- *Header* (60 bits): some specific information are added in this field in order to form a 36-bit word. This 36-bit in then encoded in order to form the 60-bit header.
- *Payload*: in the payload, a whole ethernet frame is encapsulated. In order to protect this ethernet frame, the payload is encoded.

There are two kind of frames. The first one is the transport frame where a user or the gateway encapsulates a whole ethernet frame. The second one is the management frames, which are frames emitted by a user or the gateway in order to handle the PLT network and allow the different services to be run properly. For this last format (management frame), there are no payload.

For the management frame, the different fields are:

- SOF
- Header

For the transport frame, the different fields are:

- SOF
- Header
- Payload

*Start of Frame (SOF)*

This field allow to detect the beginning of a CDMA frame. The content of this field is different for the uplink and downlink.

For the downlink, it is 12-bit field. It is QPSK encoded. The content of this field is 011010010110.

For the uplink, it is a 32-bit field. It is BPSK encoded. The content of this field is 11010101001111101001001111111100.

*Header*

This field is a 60-bit word. It contains the important information in order to handle the access protocol. These information form a 36-bit word. Then this 36-bit word is encoded order to form a 60-bit word.

Transport frame header

For the data frame transmitted on either the broadcast or transport logical link, the different fields of the header before encoding are:

- *Version number:* 2 bits
- *Opcode:* 4 bits
- *Optional bits*: 12 bits
- *Kind of encoder*: 1 bit
- *Scrambler initialization*: 3 bits
- *Payload length*: 14 bits

Figure 121 shows a frame format - Header uncoded

Management frame header

For the management logical link (downlink), the management frames emitted by the gateway will not have any payload and therefore, a different header can be used. The header contains only the fields:

- *Version number*: 2 bits
- *Opcode*: 4 bits
- *Optional bits*: 30 bits

Figure 122 shows a management frame format - Header uncoded Description of the different header's field

Version number

**[0411]** This field gives the version number. For this version, the field is hardcoded to 0. This ensures the ability to develop future versions with backward compatibility.

Opcode

This field specifies the operation done by the CDMA frame. Indeed, this opcode field gives the kind of frames. The different values of this field will be specified later.

Optional bits

This field gives some optional bits. This field is specific to each kind of frame (given by the *opcode* field). The contain of this field will be specified later.

Kind of encoder

The payload is encoded. There are 2 different convolutive payload encoders. The rate of the first payload encoder is ½. The rate of the second payload encoder is ¾. The choice between these two encoders is done considering the quality of the PLT link.
If this bit is unset (0), then the first encoder is used (rate ½ for a poor PLT link quality). If this field is set (1), then the second encoder is used (rate ¾ for a better PLT link quality).

Scrambler initialization

In order to whiten the data contained in the payload, a scrambler is used. The initialization of this scrambler is given in this field.

Payload length

The length of the payload is given in this field. The length corresponds indeed to the length of the ethernet frame (payload *before* encoding). This length is between 576 and 12208 (included). The length of the payload after encoding can be worked out using the *kind of encoder* field:

```
if kind of encoder is 0,
  payload length after encoding = 1024*ceil((2*(payload length+5))/1024)
if kind of encoder is 1 ,
  payload length after encoding= 1024*ceil((4/3*(payload length+6))/1024);
 Payload
```

There is a payload only for the transport frame. In the payload field, a whole ethernet frame is encapsulated. This ethernet frame is then encoded in order to form the final payload field.

*Summary*

There are two kinds of CDMA frames: one for transport, which encapsulates an ethernet frame in the payload and on for management, which does not have any payload. In the figure, the different fields of the transport frame are summarized:

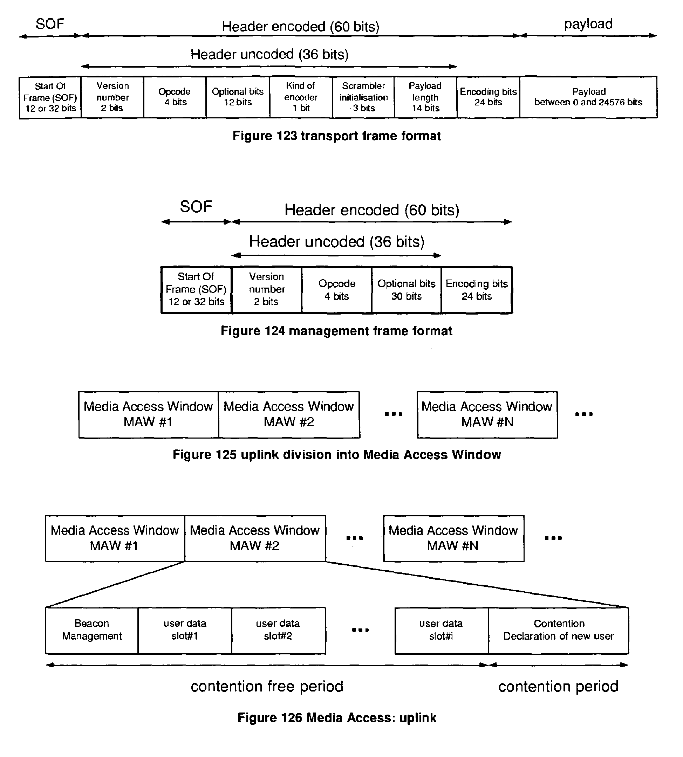

Figure 123 shows a transport frame format
For the management frame, the format is summarized in the figure 124 Access method

Introduction

In this section, the access method is specified. This access protocol is controlled by the master. Therefore, a master is always needed.
For the downlink, the broadcast logical link is always on. This logical link is used to transfer *management frames.* These management frames allow to:

- acknowledge frames
- (de-)authenticate users
- allocate transport codes for a specific user
- distribute the resources between the different users
- implement the privacy service

For the uplink, on startup, there are no logical link. The master must implement the access protocol in order to implement the logical links on the uplink. To do this, the uplink is divided into *transmission opportunities.*

Downlink

The downlink uses DS-CDMA. On startup of a given user, there are already two logical links: the *synchronization* logical link and the *broadcast* logical link. The master is responsible to allocate some CDMA codes for a specific user (*transport logical link*). Using these transport codes, the master sends CDMA frames continuously without more specific access protocol.

Uplink

The data transmitted on the uplink are time multiplexed. In order to allow all the users to transmit their data on a fair basis, the uplink must be divided into windows called *Media Access Window* (MAW).

Figure 125 shows an uplink division into Media Access Window

Each *Media Access Window* is divided into:

- *contention free,* where one and only one user can emit at a given time. During this period, there are no collision. The effective data are transferred during this period.
- *contention,* where several users compete to gain the channel. During this period, only new users (not identified by the gateway) try to gain the channel. These users try to enter the PLT network and be accepted and identified by the gateway.

The *contention free period* is divided into several fields:

- *beacon*: during this time slot, the gateway transfer some management frames in order to allocate the resources between the different users. Actually, the gateway transmit these data on the downlink during the beacon slot time and the users are idle (do not transmit any data): the uplink is idle during the beacon time slot.
- *user data slot* a specific user can transmit its own data (transport CDMA frame) or a *nothing to send* CDMA frame, which tells the gateway that this user does not have any CDMA frames to transmit. Further more, this time slot allows the user to run the de-authentication service (request a de-authentication or respond to a de-authentication request). On startup, no user is authenticated, therefore, this time slot is skipped.

In the absence of a *beacon* frame, a new *Media Access Window can* not begin. Therefore, the *contention time slot* keeps running until the *beacon* frame is received.

The different fields of the uplink are summarized in the figure au-dessous:

Figure 126 shows a Media Access: uplink

Time sequence

*Uplink*

The sequence of the different frames exchanged between the gateway and the different users is depictured in the figure au-dessous. This sequence is used in order to transmit user data on the uplink. The *management frames* as the *beginning beacon,* the *resource plan, clear to send,* ACK frames de-authentication request, response or confirm emitted by the gateway is done on the downlink using the broadcast logical link.

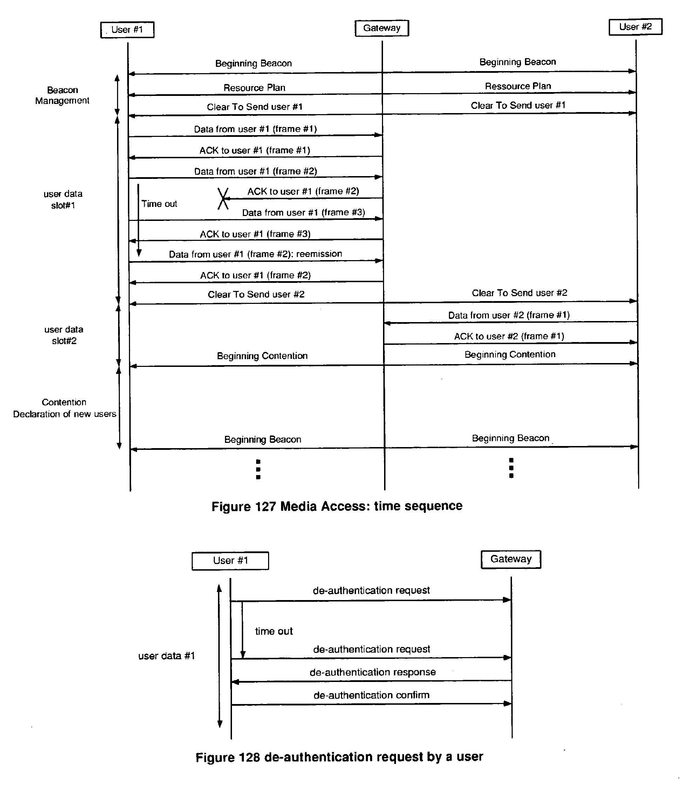

Figure 127 shows a Media Access: time sequence

Beacon management

This time slot is done to transfer from the gateway to every users the resource plan. This resource plan indicates:

- downlink: the CDMA codes allocated in order to transfer the data from the gateway to a specific user

User data

A user time slot begins with the emission by the gateway a *Clear To Send* frame, which allow a specific user to transmit some CDMA frames. If after a given time following the emission of the *Clear To Send* to the user j by the gateway, no CDMA frames are received from this user j (time out), then this time slot is skipped and the gateway sends to the next authenticated user a *Clear To Send* frame (or begin the *contention* time slot).

All the CDMA frames sent on the uplink by a specific user must be acknowledge by the gateway. If no acknowledgement is received by the user (time out), then the CDMA frame must be re-emitted.

If during the user transport time slot, a user receives a *Clear To Send* frame for a different user, then this given user has to stop any transmission and all the pending acknowledgement is assumed to be timed out.

On startup, there are no users are authenticated. Therefore, this time slot is skipped. This the case, when all the users were de-authenticated.

A special case is for the de-authentication service. As soon the de-authentication service is run, then no more data can be sent. The user can send a request to be de-authenticated and wait for a confirmation. If after a given time (time out), the gateway hasn't respond the de-authentication, then the de-authentication request must be sent again. The gateway can not deny the de-authentication request for a given user. Finally, the user has to confirm the de-authentication. If after a given time, the gateway has not received the confirmation, then the gateway send a another time the de-authentication confirmation.

Figure 128 shows a de-authentication request by a user

The gateway can request to de-authenticate a given user. The user must respond to the gateway and wait for a confirmation. If no response is received after a given time (time out), then the response must be re-emitted. The user can not deny a *de-authentication request* sent by the gateway. Finally the gateway has to confirm the de-authentication. If after a given time, the user has not received the de-authentication confirmation, then this user has to send another times the de-authentication response.

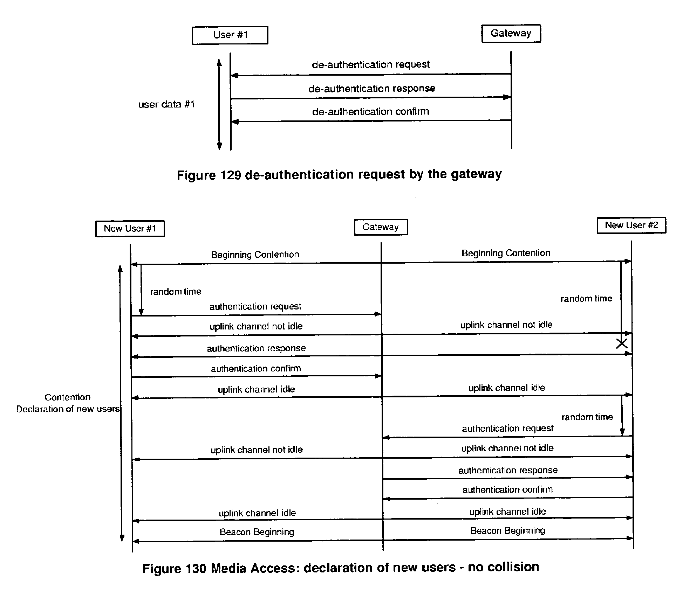

Figure 129 shows a de-authentication request by the gateway

The number of CDMA frames emitted by this specific user is given in the *Clear To Send* frame received at the beginning of a *user data* time slot. This number of frames emitted take into account:

- the CDMA frames emitted to the gateway
- the CDMA frames re-emitted to the gateway due to the non reception of an acknowledgement
- the CDMA frames emitted for the de-authentication service

If the timers reach their maximum after the end of the dedicated *user data* time slot, then the user (or the gateway) must assume a lack of acknowledgement (for transport frames) or lack of response or confirmation (for de-authentication) and the process will be undertaken another times during the next opportunity (next *user slot* time slot).

If, after emitting the *Clear To Send,* the gateway does not receive any CDMA frame from the authorized user after a given time (time out), then the present *user data* must be ended and the next *user data* (or the *contention* time slot or the *beacon management* time slot) must be started.

Contention - declaration of new users

This time slot begins with a *Beginning Contention* frame and ends with a *Beginning Beacon.* This time slot allows to new users to send a request for entering the PLT network to the gateway. During this time slot, every new users can transmit data and therefore, collisions can occur.

Remark: if the gateway can not accept new users on the PLT network (the number of active users reaches a maximum), then the *contention* time slot can be skipped. Therefore, the *user data* time slots ends with the *beginning beacon* frame.

No collision between new users

The first case is a successful authentication of one or several users without any collisions. At the beginning of the *contention* time slot, all the new users run a backoff algorithm. These new users compute a random number. Each user wait during this random number of time before sending a request to be authenticated. In this authentication request, the user sends to the gateway its own MAC address. As soon as the gateway starts to receive this request and find out that this is a valid CDMA frame, then the gateway sends to every users (authenticated and un-authenticated users) a management frame in order to signal that the uplink is not anymore idle and therefore, no *authentication request* frames can be send by others new users.

Then, the gateway sends an authentication response frame. In this response, the gateway gives a copy of the MAC address of the requesting user (received in the *authentication request* frame). The response can be positive or negative. The reasons for a negative response are:

- the maximum number of active users is reached on the PLT network
- the gateway does not recognize the requesting user (its MAC address is invalid)

When a user receives a negative response, this un-authenticated user must wait for several *Media Access Window* before sending a new request for authentication.

If the authentication is positive, then this user will receive a user number in order to exchange data. This user must send an *authentication confirm* frame in order to confirm the association between its MAC address and the user number delivered by the gateway. If after a time out, the *authentication confirm* is not received, then the *authentication response* is sent again by the gateway in order to get the *authentication response* by the authentication requesting user. If after 15 trials to get the *authentication confirm* frame (and *15 authentication response* frames has been sent), then the authentication process for the corresponding user is discarded and the user number allocated for this user is de-allocated.

Finally the gateway sends an *uplink channel idle* to all the users (authenticated or not) in order to allow new users to send an authentication request. Then the other new users must compute a new random number in order to access the uplink medium and send the authentication request to the gateway.

Figure 130 shows a Media Access: declaration of new users - no collision

Collision between two new users

When two new users try to send an authentication request at the same time, then a collision occurs. In this cases, there are two situations:

- the gateway does not receive a valid CDMA frame (authentication request) and the gateway does not send an authentication response
- the gateway receives a valid CDMA frame (authentication request) corrupted by the second user trying to be authenticated. Then, the gateway will send a response with an invalid MAC address of the requesting user.
- the user does not receive a valid authentication response due to a noisy PLT channel.

When each user sends an authentication request, then a timer is reset. When, after the timer reaches the *time out* and no authentication response is received from the gateway, then the user detect a collision (or the PLT channel was too noisy). When the authentication response contains a wrong MAC address, then the users detects a collision without waiting for the timer.

Then, each user involved in the collision compute a new random number and wait for this time. Each user involved in the collision increments the counter *NumberOfCollision.* As soon as the counter *NumberOfCollision* reaches a maximum, then the users must wait for a random number of *Media Access Window* before attempting for a new authentication request in order to lower the probability for a new collision (remark: in this case, the counter is not reset).

When, a user succeeds to send an authentication request (and receives an authentication response), then the *NumberOfCollision* counter has to be reset.

When the gateway receives a valid *authentication request.* The gateway make an association between the received requesting user's MAC address and a user number (positive authentication request response) and sends an authentication response to the user in order to notify the association (or the impossibility for the given user to enter the PLT network). As soon as the gateway sends an *authentication response* (only for positive response), the gateway reset a timer. Then, when the timer reaches *time out*, then the gateway assumes that the association between the MAC address and the user number was a bad association and therefore, release the resources taken (the user number is freed).

If the *beginning beacon* is received while a user is waiting for an *authentication response,* then, this given user must assume that no *authentication response* has been received and a new *authentication request* must be send during the next opportunity (*Contention* time slot) during the next *Media Access Window* (which is beginning with the received current *beginning beacon* frame.

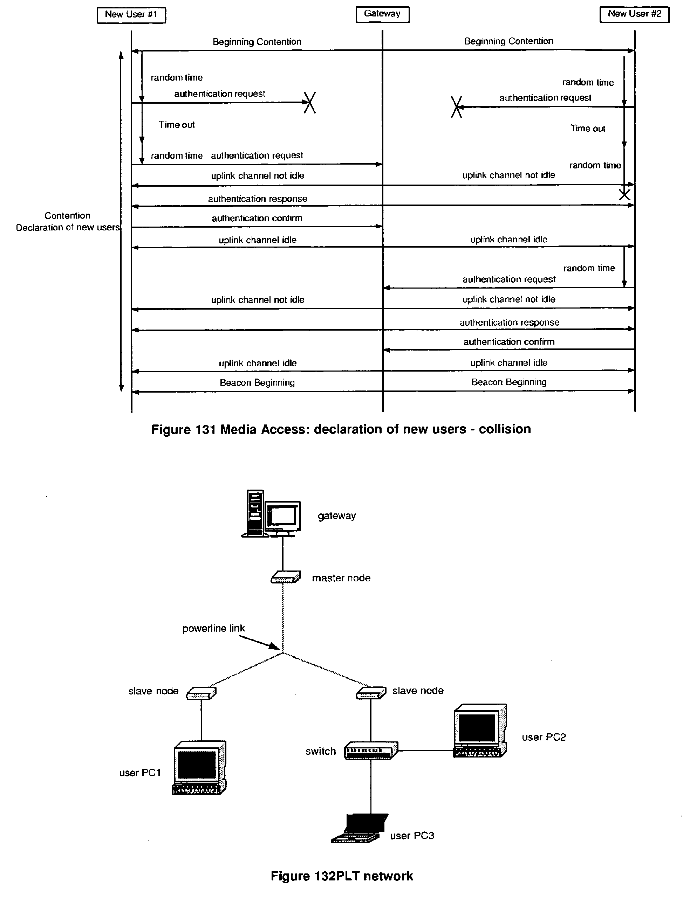

Figure 131 shows a Media Access: declaration of new users - collision

*Downlink*

On the downlink, there are no specific time sequence. This specific user uses some CDMA codes in order to enable the transport channel. The assignation of the transport channel is done during the *beacon* time slot. There is a *resource plan* frame emitted by the gateway, which gives the allocation of all the CDMA codes to all the users. The CDMA frames emitted on the downlink are not acknowledge on the uplink.

Frame format

In this section, the different fields of the different kind of frames are presented.

Downlink

In this paragraph, the frames involved in the transmission of the downlink data are presented.

*Beacon management time slot*

During the *beacon management* time slots, the gateway give to the different users the resource plan. The different frames transmitted are:

- beginning beacon
- resource plan

In order to improve the network throughput efficiency, the *resource plan* frame is piggybacked to the *beginning beacon* frame. Actually, these two frames form a unique frame called the *beacon* frame.
There are two different beacon frame:

- beacon with resource plan
- beacon without resource plan: no new users entered the PLT network or the CDMA codes were not re-allocated or the resource plan is not requested by any user

Beacon with resource plan

During the *resource plan,* the code allocation for the different users is given among the 64 different CDMA codes available (except those dedicated to the *synchronization* and *broadcast* logical links). The resource plan is 256 bit long. It is divided into 64 4-bit words. Each 4-bit word gives the user number (if 1111, then the code is not assigned to a specific user (CDMA code not used or assigned to the synchronization logical link or the broadcast logical link) otherwise, this word gives the user number) assigned for the corresponding CDMA code. Therefore, this *beacon* consists with 11 consecutive management frames. For the first 10 *beacon* management frame gives 24 bits of the resource plan, which corresponds with 6 CDMA codes. The last *beacon* management frame, the only 4 4-bit words are delivered, which corresponds with the 4 last CDMA codes.
The different characteristics of these *beacon* frames are:

- Frame format:       management frame (no payload)
- Version number:      00
- Opcode:      0000 (0)
- Optional bits:

  - resource plan presence:       1 (1 bit)
  - frame number:      4 bits
  - resource plan:      24 bits,which gives the resource plan
  - padding:      1 bit set to 0

The different characteristics of the CDMA frame:

- physical link:      downlink
- logical link:      management logical link
- sender: vgateway
- receiver:      all authenticated users

Beacon without resource plan

If the resource plan is not required, then the characteristics of the *beacon* frame is:

- Frame format:      management frame (no payload)

- **-** Version number: 00
- **-** Opcode: v0000 (0)
- **-** Optional bits:

  - **-** resource plan presence: 0 (1 bit)
  - **-** resource plan: 29 bits set to 0

The different characteristics of the CDMA frame:

- **-** physical link: downlink
- **-** logical link: management logical link
- **-** sender: gateway
- **-** receiver: all authenticated users

*User data*

The different frames involved in the user data distribution service are:

- **-** Clear To Send (CTS)
- **-** Data downlink
- **-** Acknowledgement (ACK)
- **-** De-authentication request
- **-** De-authentication response
- **-** De-authentication confirm

Clear to send

This frame indicates to a given user is allowed to send data on the uplink. The characteristics of this frames are:

- **-** Frame format: management frame (no payload)
- **-** Version number: 00
- **-** Opcode: 0001 (1)
- **-** Optional bits (30 bits):

  - **-** user number: 4 bits
  - **-** resources: 4 bits
  - **-** ack presence: 1 bit
  - **-** frame number: 3 bits
  - **-** fragment number: 2 bits
  - **-** padding: 16 bits set to 0

The user allowed to send data frame after this CTS frame is indicated in the *optional bits*. This user can send up to *resources* frames. This number takes into account the emission and re-emission of data frames or de-authentication frames.

The acknowledgement of the previous data of the previous user can be piggybacked to this CTS frame (if the ack presence bit is set). The optional bits *frame number* and *fragment number* are dedicated to this purpose (see below for further explanations).

The different characteristics of the CDMA frame:

- **-** physical link: downlink
- **-** logical link: management logical link
- **-** sender: gateway
- **-** receiver: all authenticated users

Data frames

This frame correspond with actual data emitted by the gateway to a specific user. The characteristics of the header of this frame are:

- Frame format: Data frame (the payload encapsulates an ethernet frame)
- Version number: 00
- Opcode: 0011 (3)
- Optional bits (12 bits):

  - frame number: 3 bits
  - fragment number: 2 bits
  - more frame: 1 bit
  - padding: 6 bits set to 0
  - Kind of encoder: 1 bit
  - Scrambler initialization: 3 bits
  - Payload length: 14 bits

The different characteristics of the CDMA frame:

- physical link: downlink
- logical link: transport or braodcast logical link
- sender: gateway
- receiver: a single authenticated user

The different fields of the *optional bits* will be explained. The other part of the header were explained in previous section.

Frame number

**[0480]** Each frame sent by the gateway to a given user is identified a specific number. This number will be used to trace this frame. The tuple (user number, frame number) identifies a unique data frame.
This option is not used in the current version.

Fragment number

**[0482]** If needed, the data frame can be split into several fragments (up to 4 fragments). Then, the gateway acknowledge only the fragments and the slaves only have, in necessary, to retransmit the non-acknowledge fragment. A fragment is identified by the tuple (user number, frame number, fragment number).
This option is not used in the current version.

More frame

When the data frame is split into several fragments, this bit identifies the last fragment. If this bit is set, then the current fragment is the last fragment.
This option is not used in the current version.

Acknowledgement

This frame is emitted by the gateway in order to acknowledge a data frame. The characteristics of the header of this frame are:

- Frame format: management frame (no payload)
- Version number: 00
- Opcode: 0100 (4)
- Optional bits (30 bits):

  - user number: 4 bits
  - frame number: 3 bits
  - fragment number: 2 bits
  - padding: 21 bits set to 0

The *optional bits* (*user number, frame number* and *fragment number*) allow to identify the data frame being acknowledge.

The different characteristics of the CDMA frame:

- physical link: downlink
- logical link: management logical link
- sender: gateway
- receiver: the user, who sent a data frame on the uplink.

De-authentication

In this section, all the frames involved in the de-authentication service are presented.

De-authentication request

This frames is issued by a given user in order to be de-authenticated by the gateway. A possible cause is the given user in the process to be turned off. The characteristics of the header of this frame are:

- Frame format: management frame (no payload)
- Version number: 00
- Opcode: 1001 (9)
- Optional bits (30 bits):

  - user number: 4 bits
  - operation: 00 (2 bits)
  - padding: 24 bits set to 0

The user requesting a de-authentication is given in the *user number* field.

The *operation* optional bits allow to make the difference between the *authentication request, authentication response* and *authentication confirm.*

The different characteristics of the CDMA frame:

- physical link: downlink
- logical link: transport logical link
- sender: a single authenticated user
- receiver: gateway

De-authentication response

This frames is issued in the response to a request of de-authentication sent by the gateway. The characteristics of the header of this frame are:

- Frame format: management frame (no payload)
- Version number: 00
- Opcode: 1001 (9)
- Optional bits (30 bits):

  - user number: 4 bits
  - operation: 01 (2 bits)
  - padding: 24 bits set to 0

The user responding to a de-authentication is given in the *user number* field.

The *operation* optional bits allow to make the difference between the *authentication request, authentication response* and *authentication confirm.*

The different characteristics of the CDMA frame:

- physical link: downlink
- logical link: transport logical link
- sender: a single user after reception of the authentication request frame from the gateway

- receiver: gateway

De-authentication confirm

This frames is issued in order to confirm a de-authentication to the gateway. The characteristics of the header of this frame are:

- Frame format: management frame (no payload)
- Version number: 00
- Opcode: 1001 (9)
- Optional bits (30 bits):

    - user number: 4 bits
    - operation: 10 (2 bits)
    - padding: 24 bits set to 0

The user responding to a de-authentication is given in the *user number* field.
The *operation* optional bits allow to make the difference between the *authentication request, authentication response* and *authentication confirm.*
The different characteristics of the CDMA frame:

- physical link: downlink
- logical link: transport logical link
- sender: a single user after reception of the authentication request frame from the gateway
- receiver: gateway

*Contention - declaration of new users time slot*

This kind of time slot is dedicated to the declaration of new users. The different frames transmitted on the downlink physical link are:

- Contention beginning
- Authentication response
- Uplink channel status

Contention beginning

This frame indicates the beginning of the contention period. The characteristics of the header of this frame are:

- Frame format: management frame (no payload)
- Version number: v00
- Opcode: 0110 (6)
- Optional bits v(30 bits):
- padding: 30 bits set to 0

The different characteristics of the CDMA frame:

- physical link: downlink
- logical link: management logical link
- sender: gateway
- receiver: all users (authenticated or not)

Authentication

In this section, all the frames involved in the authentication service are presented. Indeed, only authentication response frames are involved in the downlink transmission.

Authentication response

This frame is sent by the gateway following an authentication request by an un-authenticated user. In this frame, the MAC address of the requesting user is indicated (copied from the *authentication request* frame). Therefore, as for the *authentication request* frame, there must be two management frames. The characteristics of the header of this frame are:

- Frame format:    management frame (no payload)
- Version number:    00
- Opcode:    0111 (7)
- Optional bits (30 bits):

  - frame number:    1 bit
  - operation:    01 (2 bits)
  - MAC address:    24 bits
  - user number:    2 bits
  - response:    1 bit

The MAC address is split into two: the first part is done with the 24 MSB of the MAC address and for this part, the *frame number* is set to 0. The 24 LSB of the MAC address are sent into the second management frame (the *frame number* is set to 1 for this part).
The *operation* optional bits allow to make the difference between the *authentication request, authentication response* and *authentication confirm.*
The response is given in the *response* field (1: positive authentication and 0: negative authentication).
The different characteristics of the CDMA frame:

- physical link:    downlink
- logical link:    management logical link
- sender:    gateway
- receiver:    an un-authenticated user, who requested an authentication

Uplink channel status

This frames is used to indicates the status of the uplink channel to every users (authenticated or not). This frame is sent by the gateway. It is an aggregation of the two frames *uplink channel idle* and *uplink channel not idle.* The characteristics of the header of this frame are:

- Frame format: management frame (no payload)
- Version number:    00
- Opcode:    1000 (8)
- Optional bits (30 bits):

  - status:    1 bit
  - padding:    29 bits set to 0

If the bit *status* is set, then the gateway indicates that the uplink channel is not idle. Otherwise (bit *status* is not set), the gateway indicates that the uplink channel is idle.
The different characteristics of the CDMA frame:

- physical link:    downlink
- logical link:    management logical link
- sender:    gateway
- receiver:    all users (authenticated or un-authenticated)

Uplink

In this paragraph, the frames involved on the uplink physical link are presented.

*User data time slot*

During this time slot, the data frames are emitted by a specific user to the gateway. The different frames transmitted on the uplink physical link are:

- Data uplink
- Last data frame
- De-authentication request
- De-authentication response
- De-authentication confirm

Data frames

This frame correspond with actual data emitted by a specific user to the gateway. The characteristics of the header of this frame are:

- Frame format: Data frame (the payload encapsulates an ethernet frame)
- Version number:          00
- Opcode:          0010(2)
- Optional bits (12 bits):

    - user number:          4 bits
    - frame number:          3 bits
    - fragment number:          2 bits
    - more frame:          1 bit
    - last frame:          1 bit
    - retry:          1 bit
    - Kind of encoder:          1 bit
    - Scrambler initialization:          3 bits
    - Payload length:          14 bits

The different characteristics of the CDMA frame:

- physical link: uplink
- logical link: transport logical link
- sender: a single authenticated user
- receiver: gateway

The different fields of the *optional bits* will be explained. The other part of the header were explained in previous sections.

User number

**[0519]** This field match the user number, which sends the data frame to the gateway.

Frame number

**[0520]** Each frame sent by a user is identified by a specific number. This number will be used to trace this frame. Especially, this frame number will be used for acknowledgement. The tuple (user number, frame number) identifies a unique data frame. Therefore, while waiting for the acknowledgement of a specific frame, a new frame can be transmitted by the same user using a different frame number.

Fragment number

**[0521]** If needed, the data frame can be split into several fragments (up to 4 fragments). Then, the gateway acknowledge only the fragments and the slaves only have, in necessary, to retransmit the non-acknowledged fragment. A fragment is identified by the tuple (user number, frame number, fragment number).
This option is not used in the current version.

More frame

When the data frame is split into several fragments, this bit identifies the last fragment. If this bit is set, then the current fragment is the last fragment.

This option is not used in the current version.

Last Frame

If this bit is set, it tells to the gateway that the current user do not have any more data frame to transmit. Therefore, the gateway can end the *user data* time slot for the current user.

Indeed, this option corresponds with the data frame piggybacked with a *last data frame* frame.

Retry

If this bit is set, it indicates that the current data frame is a retransmission of a previous data frame, which hasn't been acknowledged yet. The non-acknowledgement of a data frame can be due to:

- non-reception of the data frame by the gateway
- reception of the data frame by the gateway but the acknowledgement of this data frame were lost. Therefore, the data frame will be sent again to the gateway, acknowledge by the gateway and thrown away by the gateway.

This field is not taken into account within this version. Therefore, this field remains at 0.

Last data frame

This frame is emitted by a user in order to indicate to the gateway that the user does not have any more data frame to send. The characteristics of the header of this frame are:

- Frame format: management frame (no payload)
- Version number: 00
- Opcode: 0101 (5)
- Optional bits (30 bits):

  - user number: 4 bits
  - padding: 26 bits set to 0

The user, who sends this frame is identified by the *user number* field. This frame is not acknowledged with a dedicated *acknowledgement* frame. Indeed a CTS or *contention beginning* or a *beginning beacon* - in the case where the contention time slot is skipped - are considered as an implicit acknowledgement.

The different characteristics of the CDMA frame:

- physical link: uplink
- logical link: transport logical link
- sender: a single authenticated user
- receiver: gateway

De-authentication

In this section, all the frames involved in the de-authentication service are presented.

De-authentication request

This frames is issued by a given user in order to be de-authenticated by the gateway. A possible cause is the given user in the process to be turned off. The characteristics of the header of this frame are:

- Frame format: management frame (no payload)
- Version number: 00
- Opcode: 1001 (9)

- Optional bits (30 bits):

  - user number: 4 bits
  - operation: 00 (2 bits)
  - padding: 24 bits set to 0

The user requesting a de-authentication is given in the *user number* field.

The *operation* optional bits allow to make the difference between the *authentication request, authentication response* and *authentication confirm.*

The different characteristics of the CDMA frame:

- physical link: uplink
- logical link: transport logical link
- sender: a single authenticated user
- receiver: gateway

De-authentication response

This frames is issued in the response to a request of de-authentication sent by the gateway. The characteristics of the header of this frame are:

- Frame format: management frame (no payload)
- Version number: 00
- Opcode: 1001 (9)
- Optional bits (30 bits):

  - user number: 4 bits
  - operation: 01 (2 bits)
  - padding: 24 bits set to 0

The user responding to a de-authentication is given in the *user number* field.

The *operation* optional bits allow to make the difference between the *authentication request, authentication response* and *authentication confirm.*

The different characteristics of the CDMA frame:

- physical link: uplink
- logical link: transport logical link
- sender: a single user after reception of the authentication request frame from the gateway
- receiver: gateway

De-authentication confirm

This frames is issued in order to confirm a de-authentication to the gateway. The characteristics of the header of this frame are:

- Frame format: management frame (no payload)
- Version number: 00
- Opcode: 1001 (9)
- Optional bits (30 bits):

  - user number: 4 bits
  - operation: 10 (2 bits)
  - padding: 24 bits set to 0

The user responding to a de-authentication is given in the *user number* field.

The *operation* optional bits allow to make the difference between the *authentication request, authentication response* and *authentication confirm.*

The different characteristics of the CDMA frame:

- physical link:    uplink
- logical link:    transport logical link
- sender:    a single user after reception of the authentication request frame from the gateway
- receiver: gateway

*Contention - declaration of new users time slot*

This kind of time slot is dedicated to the declaration of new users. The different frames transmitted on the uplink physical link are:

- Authentication request
- Authentication confirm

Authentication

In this section, all the frames involved in the authentication service are presented. Indeed, only authentication request and authentication confirm frames are involved in the uplink transmission.

Authentication request

This frame is sent in order to request to the gateway an authentication. The user sends its own MAC address. A MAC address is 48-bit long. Therefore, the authentication request consists with two management frames. The characteristics of the header of this frame are:

- Frame format:    management frame (no payload)
- Version number:    00
- Opcode:    0111 (7)
- Optional bits (30 bits):

    - frame number:    1 bit
    - operation:    00 (2 bits)
    - MAC address:    24 bits
    - padding:    3 bits set to 0

The MAC address is split into two: the first part is done with the 24 MSB of the MAC address and for this part, the *frame number* is set to 0. The 24 LSB of the MAC address are sent into the second management frame (the *frame number* is set to 1 for this part).
The *operation* optional bits allow to make the difference between the *authentication request, authentication response* and *authentication confirm.*
The different characteristics of the CDMA frame:

- physical link:    uplink
- logical link:    new user declaration logical link
- sender:    an un-authenticated user
- receiver:    gateway

Authentication confirm

This frame is sent by a user in order to confirm the association between its own MAC address and the user number affected by the gateway. The characteristics of the header of this frame are:

- Frame format: management frame (no payload)
- Version number:    00
- Opcode:    0111 (7)
- Optional bits (30 bits):

    - frame number:    1 bit
    - operation:    10 (2 bits)

- MAC address:     24 bits
- user number:     2 bits
- padding:     1 bit set to 0

In order to fill the MAC address, the same strategy as the *authentication request* frame is used. The user number received by the user from the gateway in the *authentication response* is given in the *user number* field the same strategy is applied as for the *authentication response* management frame).

The *operation* optional bits allow to make the difference between the *authentication request, authentication response* and *authentication confirm.*

Remark: in the case, where the MAC address received in the *authentication response* is invalid (not the same as the user's MAC address), then no *authentication confirm* frame is sent.

The different characteristics of the CDMA frame:

- physical link:     uplink
- logical link:     new user declaration logical link
- sender:     an un-authenticated user, who become an authenticated user
- receiver:     gateway

Link with an outside controller

There is a link between an outside controller (the gateway or an end-user) and the master node (LK12001) or the different slave nodes(LK12011). This link allows to:

- control the nodes, which are present on the PLT network (for the authentication or de-authentication service)
- give a default encryption to all the different nodes (privacy service). This encryption key can be different for all the nodes.
- control the different resources affected for each different node. It allows to control the overall QoS for the different users.
- have access to the network/node statistics parameters
- set/get the local parameters

Behind every node (gateway or user), there is at least a computer, which is dedicated to control the node. The computer is not necessarily physically next to the node and the different nodes can be controlled remotely. There must be only one computer which is controlling the master node. The link between a node and the different end users (computer, printers, webcam, ...) is an ethernet network.

Indeed, this link will be used in the *authentication, de-authentication, bandwidth negotiation* and *privacy* services. For this services, some parameters are fixed by the external controller of the node (the node does not take all the decision alone).

Figure 132 shoows a PLT network

Ethernet frames to control a single node

The method to control the different nodes is to send to the dedicated node an ethernet frame. Each node is identified by a unique MAC address. In order to control the node, the computer sends to the dedicated node an ethernet frame with a destination address corresponding to the MAC address of the node being controlled.

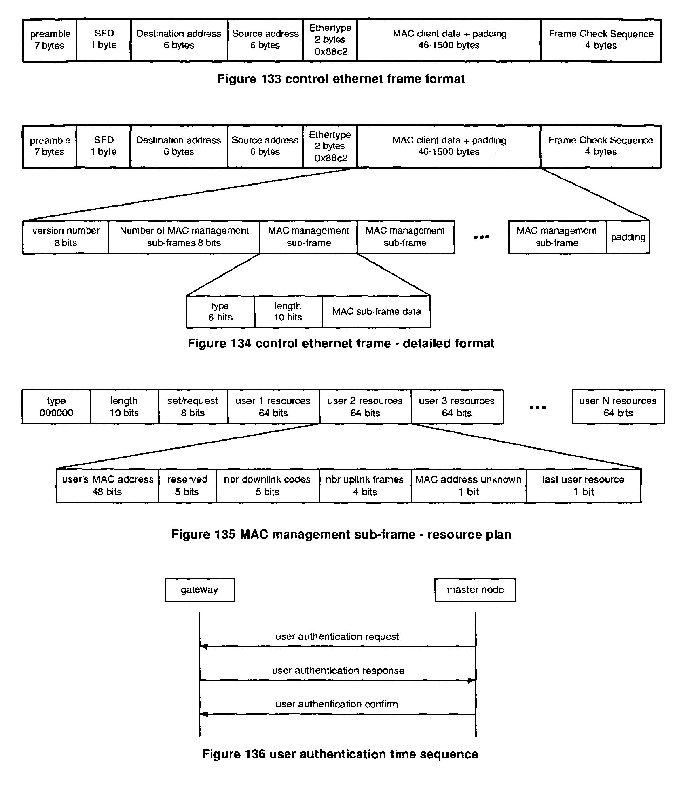

Figure 133 shows a control ethernet frame format

The different fields of the ethernet frames are:

- preamble + sfd: unique sequence defined in the IEEE802.3 norm. The sequence is: 10101010 10101010 10101010 10101010 10101010 10101010 10101010 10101011.
- destination address: the MAC address of the node being controlled
- source address: the MAC address of the computer sending the ethernet frame in order to control the node
- ethertype: the LEA's ethertype assigned by the IEEE corporation (Ox88c2)
- MAC client data: specific data to control the node
- FCS: sequence to control the integrity of the ethernet frame

The ethernet control frame allow to (MAC service):

- set/request a network encryption key
- set/request the different resources
- request/accept/deny user authentication
- request/give the parameters and the statistics of the node
- request/give the parameters and the statistics of the network
- set/get the local parameters
- power on/off

*the MAC client data*

The MAC client data can be divided into several MAC management sub-frames. Each MAC management sub-frame implement one of the MAC services. The number of MAC management sub-frame is given at the beginning of the MAC client data field.

Figure 134 shows a control ethernet frame - detailed format

The version field at the beginning of the MAC client data gives the version of the protocol used. For the present version, this field is hardcoded to 0.

The different fields of the MAC management sub-frame are:

- type: the type of operation done by the sub-frame. If the first bit of this field is set, then the management ethernet frame has to be emitted on the PLT medium using the management logical link.
- length: the length of the sub-frame (in number of bits). The type and length field are included in it.
- MAC sub-frame data: the specific data for the MAC management sub-frame

*Description of the different kind of MAC management sub-frame*

The different kind of MAC management sub-frame are:

- set/request the different resources (type=0)
- request/accept/deny/confirm user authentication/de-authentication (type=1)
- power on/off (type=2)
- set/request a network encryption key (type=32)
- request/give the parameters and the statistics of the node (type=33)
- request/give the parameters and the statistics of the network (type=34)
- set/get the local parameters (type=35)

Resource plan

The resource plan is managed by the external controller (gateway) of the master node (LK12001). This resource plan can be set or requested by the gateway. In this resource plan, there are the values for the different shared resources for one or several slave nodes.

Figure 135 shows a MAC management sub-frame - resource plan

For each slave node addressed, there are one *user i resource* field. The maximum number of slave nodes is 10. Therefore, the maximum length of the resource plan is 64x10+10+6+1=657 bits.

The different fields are:

- set/request: this field is set either to 1 or 0. The 7 first bits are reserved. If set to 1, then the following data represents the resource plan to be set. If set to 0, then the gateway request the resource plan in response and there are no more data after this field.
- user's MAC address: give the MAC address of the slave node. The following resource scheme will be applied to this node
- nbr downlink codes: give the number of downlink CDMA code in order to transport from the gateway to the slave node (whose MAC address is the MAC address given in the previous field). The effective CDMA codes used for this slave node is affected by the master node (LK12001) and communicated to every users using the *beacon* management frame. The maximum number for this particular resource is 20.
- nbr uplink frames: give the number of frame that a single can transmit during one *user data* time slot. This number will be communicated to the intended user using the *clear to send* management frame. The maximum number for this resource 15.
- MAC address unknown: when the master node can not identify the MAC address given in previous field, then the master node sends a management ethernet frame to the gateway (external controller) with this bit set.
- last user resource: if set, then the current user resource represents the last user resource field.
- reserved: this field must be set at 0.

The values of the different resources (uplink or downlink) allow to shape the uplink and downlink bit rate in order to guaranty the QoS policy.

User authentication/de-authentication

User authentication

This frame allow a master node to request to the gateway if a particular user can be authorized (authenticated) to enter the PLT network. First the master node sends a *user authentication request* frame to the gateway giving the MAC address of the requesting user to enter the PLT network. Then, the gateway decides if this particular user can enter the PLT network. The reasons to accept or deny a user to be authenticated is out of the scope of this specification file. Then, the gateway sends to the master node its decision using an *user authentication response.* If the response is positive, then the master must emit a confirmation (or not if there are no enough internal resources to accept this new user) using an *user authentication confirm* frame.
Figure 136 shows a user authentication time sequence
The MAC management sub-frame format of the user authentication is given in the figure below:

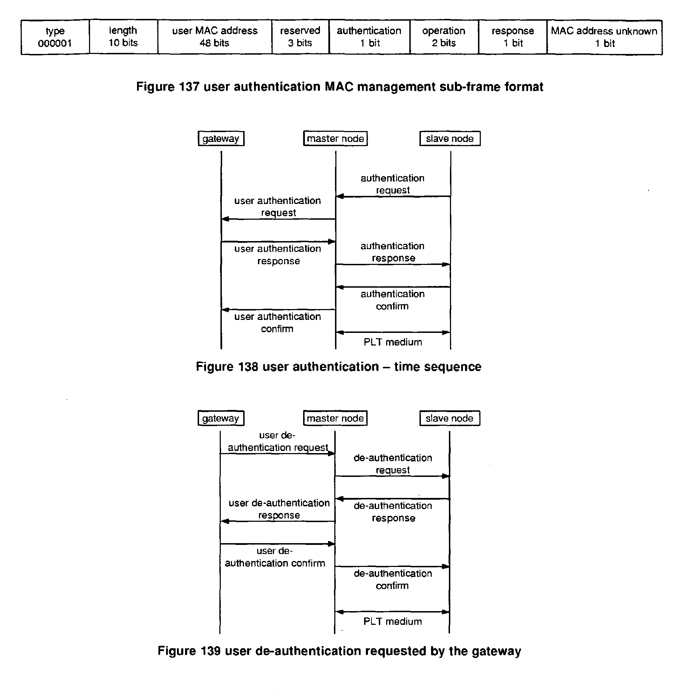

Figure 137 shoows a user authentication MAC management sub-frame format

The different fields of this MAC management sub-frame are:

- type (6 bits): the specific type for the *user authentication,* which is 1
- length (10 bits): the length of the MAC management sub-frame. This field is set to 72.
- user MAC address (48 bits): the MAC address of the requesting node to be authenticated on the PLT network.
- reserved (3 bits): this field must be set at 0
- authentication (1 bit):the frame is an authentication frame. This field is set to 1.
- operation (2 bits): the operation done by this MAC management sub-frame (00: request frame, 01: response frame, 10: confirm frame).
- response (1 bit): for the authentication response frame, gives the response from the gateway. If set the response is OK. For the other kind of authentication, this field is unset.

MAC address unknown (1 bit): when the master node can not identify the MAC address given in previous field, then the master node sends a management ethernet frame to the gateway (external controller) with this bit set.
The time scheduling of the different *user authentication* depends on the behavior of the slave node as well.
Figure 138 shows a user authentication - time sequence

User de-authentication

This frame allows to de-authentication a slave node. The request can come from a slave node or from the gateway. When the gateway sends a request for de-authentication to a slave node, then the given slave node must respond to this request on the PLT medium and finally, the gateway confirm the de-authentication of this user.
Figure 139 shows a user de-authentication requested by the gateway
When a slave node requests to be de-authenticated, then the master node transmit the request to the gateway. The gateway must respond to this request positively. Finally, the slave node confirm the de-authentication.

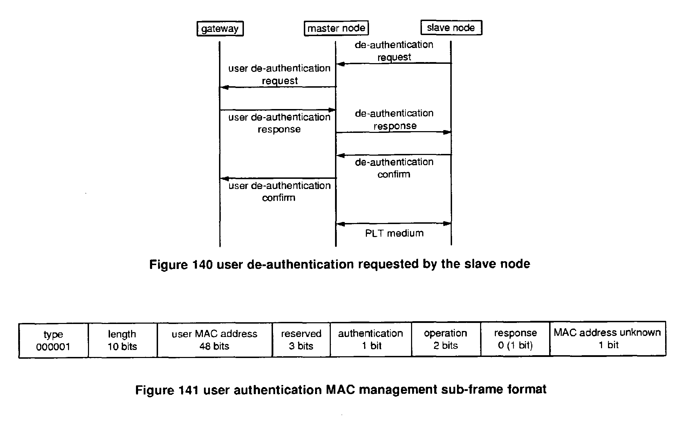

Figure 140 shows a user de-authentication requested by the slave node
The MAC management sub-frame format of the user de-authentication is given in the figure below:
Figure 141 shows a user authentication MAC management sub-frame format
The different fields of this MAC management sub-frame are:

- type (6 bits): the specific type for the *user authentication,* which is 1
- length (10 bits): the length of the MAC management sub-frame. This field is set to 72.
- reserved (3 bits): this field must be set at 0
- user MAC address (48 bits): the MAC address of the slave node to be de-authenticated on the PLT network.
- authentication (1 bit): the frame is a de-authentication frame. This field is set to 0.

- operation (2 bits): the operation done by this MAC management sub-frame (00: request frame, 01: response frame, 10: confirm frame).
- response (1 bit): not used for de-authentication. This field is unset.

MAC address unknown (1 bit): when the slave node can not identify the MAC address given in previous field, then the master node sends a management ethernet frame to the gateway (external controller) with this bit set.

Can be otherwise defined the power on/off, the network encryption key, the parameters and the statistics of the node, parameters and the statistics of the network, and the local parameters.

Transparent bridging

On start-up, after the authentication process, the master node does not know which computer is behind all the slaves nodes. Indeed, when a new frame is received by the master node from the gateway, the master node is not aware to which node this frame has to be sent in order to reach to intended final user. Therefore, the *transparent bridging* is used in order to learn the MAC address of the computer behind each node.

The gateway keeps alive a translation table in order to translate the MAC address to the user number in order to reach the intended slave node, which can reach the end user. When the master node receives from the external controller (gateway) an ethernet frame with an unknown MAC address, then the gateway sends this frame to every slave nodes. When the master node receives a CDMA frame from a slave node (identified by its *user*):

○ if the source MAC address of the encapsulated ethernet frame is not known by the gateway in the translation table, then the gateway must add an entry to its translation table to indicate the relation between the *source MAC address* and the *user number*.
○ if the source MAC address of the encapsulated ethernet frame is known by the gateway in the translation table, then the *user number* is updated even if the old *user number* stored in the translation table and the new *user number* received are different. Then the new *user number* received is stored into the translation table.

Each entry of the translation table (between the destination MAC address and the user number) contains the destination MAC address, the user number (of the slave node in order to reach this MAC address) and a TTL number. This TTL number gives the time this entry will remain alive. If a CDMA frame is received from a slave node with a tuple (source MAC address which emitted the ethernet frame, user number) matching an entry of the translation table, then the TTL number of this entry is reset to the maximum.

| MAC address | user number | TTL |
|---|---|---|
| MAC address 1 | user i | TTL |
| MAC address 2 | user j | TTL |
| . . . | . . . | . . . |

The following pseudo-code is done to illustrate the concept given previously

```
void ReceiveEthernetFrameFromGateway(SourceMACAddress,
DestinationMACAddress, MACData)
  {
    TranslateTableEntry* entry;
  entry = TranslateMACAddress(DestinationMACAddress);
    if entry.UserNumber == unknown,
         SendEthernetFrame(AllUsers);
    else,
         SendEthernetFrame(UserNumber);
  }
void ReceiveCDMAFrameFromSlaveNode(CDMAFrame)
  {
    TranslateTableEntry* entry;
    EthernetFrame = TranslateCDMAToEthernet(CDMAFrame);
    SourceMACAddress = GetSourceMACAddress(EthernetFrame);
    entry = TranslateMACAddress(SourceMACAddress);
    if entry.UserNumber == unknown,
```

```
    AddEntryToTranslateTabie(SourceMACAddress, UserNumber);
else,
    entry.UserNumber = UserNumber;
    entry.TTL = 255;
}
```

**Claims**

1. A method for the management of a network wherein

   - data are sent between slave devices and a master device,
   - a management of a transport of these data is performed by the master device,

   **characterized in that**

   - the master device performs a disymmetrical transport logical link,
   - said disymmetrical transport logical link comprising an allocation of time slots for an uplink data transport from each slave device to said master device, and
   - said disymmetrical transport logical link comprising an allocation of codes for a downlink data transport from said master device to each user device.

2. A method according to claim 1 **characterised in that**

   - said management comprises a management logical link during a period,
   - during said management logical link period all the slave devices listen to the master device.

3. A method according to any of the claims 1 to 2, **characterised in that**

   - the master device performs a synchronisation logical link, and or a broadcast logical link, and or a transport logical link.

4. A method according to any of the claims 1 to 3, **characterised in that**

   - the master device performs an allocation of time slots for an uplink data transport from a slave device to said master device by sending on the network a clear to send order, before the transport of data from said slave device, said clear to send order comprising a resource indication allocated to said slave device.

5. A method according to any of the claims 1 to 4, **characterised in that**

   - a slave device sends to the master device a request for transport of data on the network,
   - the master device allocates to said slave device time slots for transporting said data according to priority parameters memorised for said slave device in the master device.

6. A method according to any of the claims 1 to 5, **characterised in that**

   - the data are encrypted before transport.

7. A method according to any of the claims 1 to 6, **characterised in that**

   - a slave device is authenticated by said master device before a transport of data, and
   - said slave device is de-authenticated by said master device after said transport of data.

8. A method according to any of the claims 1 to 7, **characterised in that**

   - the data are transported after a sending of a start of frame signal,
   - said start of frame signal is different for the uplink and the downlink.

9. A method according to any of the claims 1 to 8, **characterised in that**

 - the logical link comprises, for a data transport uplink, from a slave device to said master device, an information relative to a kind of encoder for modifying a rate of a payload data transmission.

10. A method according to any of the claims 1 to 9, **characterised in that**

 - a downlink transmission is CDMA and QPSK modulated.

11. A method according to any of the claims 1 to 10, **characterised in that**

 - the logical link comprises 64 bits code words for CDMA coding of data to be sent by the master device to a slave device,
 - of which two codes, 31 and 63, are designed for transmitting a synchronising signal,
 - of which two codes, codes 1 and 2 are designed for transmitting a managing signal,
 - of which 59 codes are designed for transmission of data to the slave devices.

12. A method according to any of the claims 1 to 11, **characterised in that**

 - a gateway is connected to said master coupler,
 - said gateway sends to said master coupler an ethernet frame according to a defined format with a M AC address unknown bit field, said frame comprising a destination address in a field corresponding to a slave coupler,
 - when the master coupler can not identify the destination address given in said address field, the master coupler sends a management ethernet frame, according to the same defined format, to the gateway, with a M AC address unknown bit set.

13. A method according to any of the claims 1 to 11, **characterised in that**

 - said transport logical link comprising an specific data to control a slave device
 - said specific data being divided into several management sub-frames
 - each management sub-frame implementing one service
 - a number of management sub-frame is given at the beginning of the slave device data field.

**Patentansprüche**

1. Methode zum Verwalten eines Netzwerks, bei der

 - Daten zwischen Slave-Baugruppen und einer Master-Baugruppe verschickt werden,
 - eine Übertragung dieser Daten von der Master-Baugruppe verwaltet wird, **dadurch gekennzeichnet, dass**
 - die Master-Baugruppe eine logische Verbundsteuerung zur asymmetrischen Datenübertragung ausführt,
 - die besagte logische Verbundsteuerung zur asymmetrischen Datenübertragung eine Zuordnung von Zeitfenstern für eine Uplink-Datenübertragung von jeder Slave-Baugruppe zur besagten Master-Baugruppe enthält, und
 - die besagte logische Verbundsteuerung zur asymmetrischen Datenübertragung eine Zuordnung von Codes für eine Downlink-Datenübertragung von der besagten Master-Baugruppe zu jeder Benutzerbaugruppe enthält.

2. Methode nach Anspruch 1, **dadurch gekennzeichnet, dass**

 - die besagte Verwaltung für einen bestimmten Zeitraum eine logische Verbundsteuerung für die Verwaltung enthält,
 - während des besagten Zeitraums der logischen Verbundsteuerung für die Verwaltung alle Slave-Baugruppen auf die Master-Baugruppe hören.

3. Methode nach irgendeinem der Ansprüche 1 bis 2, **dadurch gekennzeichnet, dass**

 - die Master-Baugruppe eine logische Verbundsteuerung zum Synchronisieren und/ oder eine logische Verbundsteuerung zum Senden und/ oder eine logische Verbundsteuerung zur Datenübertragung ausführt.

**4.** Methode nach irgendeinem der Ansprüche 1 bis 3, **dadurch gekennzeichnet, dass**

- die Master-Baugruppe eine Zuordnung von Zeitfenstern für eine Uplink-Datenübertragung von einer Slave-Baugruppe zur besagten Master-Baugruppe durch das Versenden eines Auftrags zur Übertragungsfreigabe ins Netzwerk vor der Datenübertragung von der besagten Slave-Baugruppe ausführt, wobei der besagte Auftrag zur Übertragungsfreigabe eine Ressourcenangabe enthält, die der besagten Slave-Baugruppe zugeordnet wird.

**5.** Methode nach irgendeinem der Ansprüche 1 bis 4, **dadurch gekennzeichnet, dass**

- eine Slave-Baugruppe der Master-Baugruppe eine Anforderung zur Datenübertragung im Netzwerk sendet,
- die Master-Baugruppe der besagten Slave-Baugruppe Zeitfenster zum Übertragen der besagten Daten entsprechend den Prioritätsparametern zuordnet, die für die besagte Slave-Baugruppe in der Master-Baugruppe abgelegt sind.

**6.** Methode nach irgendeinem der Ansprüche 1 bis 5, **dadurch gekennzeichnet, dass**

- die Daten vor der Übertragung verschlüsselt werden.

**7.** Methode nach irgendeinem der Ansprüche 1 bis 6, **dadurch gekennzeichnet, dass**

- eine Slave-Baugruppe vor einer Datenübertragung von der besagten Master-Baugruppe authentifiziert wird, und
- die besagte Slave-Baugruppe nach der besagten Datenübertragung von der besagten Master-Baugruppe entauthentifiziert wird.

**8.** Methode nach irgendeinem der Ansprüche 1 bis 7, **dadurch gekennzeichnet, dass**

- die Daten nach dem Senden eines Rahmenstartsignals übertragen werden,
- das besagte Rahmenstartsignal beim Uplink und beim Downlink unterschiedlich ist.

**9.** Methode nach irgendeinem der Ansprüche 1 bis 8, **dadurch gekennzeichnet, dass**

- die logische Verbundsteuerung für eine Uplink-Datenübertragung von einer Slave-Baugruppe zur besagten Master-Baugruppe eine Information in Bezug auf die Art des Codierers zum Verändern einer Nutzdatenübertragungsrate enthält.

**10.** Methode nach irgendeinem der Ansprüche 1 bis 9, **dadurch gekennzeichnet, dass**

- eine Downlink Übertragung CDMA- oder QPSK-moduliert ist.

**11.** Methode nach irgendeinem der Ansprüche 1 bis 10, **dadurch gekennzeichnet, dass**

- die logische Verbundsteuerung 64-Bit-Codeworte für die CDMA-Codierung der Daten enthält, die von der Master-Baugruppe zu einer Slave-Baugruppe gesendet werden sollen,
- von denen zwei Codes, 31 und 63, dazu bestimmt sind, ein Synchronisierungssignal zu übertragen,
- von denen zwei Codes, 1 und 2, dazu bestimmt sind, ein Verwaltungssignal zu übertragen,
- von denen 59 Codes für die Datenübertragung zu den Slave-Baugruppen bestimmt sind.

**12.** Methode nach irgendeinem der Ansprüche 1 bis 11, **dadurch gekennzeichnet, dass**

- ein Gateway an den besagten Master-Koppler angeschlossen ist,
- der besagte Gateway dem besagten Master-Koppler mit einer MAC Adresse eines unbekannten Bit-Feldes einen Ethernet-Rahmen entsprechend einem definierten Format zusendet, wobei der besagte Rahmen eine Destinationsadresse in einem Feld entsprechend einem Slave-Koppler enthält,
- wenn der Master-Koppler die Destinationsadresse, die im besagten Adressfeld angegeben wird, nicht identifizieren kann, der Master-Koppler dem Gateway mit einer MAC Adresse eines unbekannten Bit-Feldes einen Verwaltungs-Ethernet-Rahmen entsprechend demselben definierten Format zukommen lässt.

**EP 1 432 139 B1**

**13.** Methode nach irgendeinem der Ansprüche 1 bis 11, **dadurch gekennzeichnet, dass**

- die besagte logische Verbundsteuerung für die Übertragung spezielle Daten zur Kontrolle einer Slave-Baugruppe enthält
- die besagten Sonderdaten in verschiedene Verwaltungs-Subframes unterteilt werden,
- jeder Verwaltungs-Subframe einen Dienst in Gang setzt
- zu Beginn des Datenfelds der Slave-Baugruppe eine Verwaltungs-Subframe-Nummer übergeben wird.

**Revendications**

**1.** Procédé de gestion d'un réseau dans lequel

- des données sont envoyées entre des dispositifs esclaves et un dispositif maître,
- une gestion d'un transport de ces données est effectuée par le dispositif maître, **caractérisé en ce que**
- le dispositif maître effectue une liaison logique de transport dissymétrique,
- ladite liaison logique de transport dissymétrique comprenant une attribution de créneaux temporels pour un transport de données de liaison montante depuis chaque dispositif esclave audit dispositif maître, et
- ladite liaison logique de transport dissymétrique comprenant une attribution de codes permettant un transport de données de liaison descendante depuis ledit dispositif maître vers chaque dispositif d'utilisateur.

**2.** Procédé selon la revendication 1 **caractérisé en ce que**

- ladite gestion comprend une liaison logique de gestion au cours d'une période,
- au cours de ladite période de liaison logique de gestion, tous les dispositifs esclaves écoutent le dispositif maître.

**3.** Procédé selon l'une quelconque des revendications 1 à 2, **caractérisé en ce que**

- le dispositif maître effectue une liaison logique de synchronisation, et/ou une liaison logique de diffusion, et/ou une liaison logique de transport.

**4.** Procédé selon l'une quelconque des revendications 1 à 3, **caractérisé en ce que**

- le dispositif maître effectue une attribution de créneaux temporels permettant un transport de données de liaison montante depuis un dispositif esclave jusqu'audit dispositif maître en envoyant sur le réseau une instruction d'émission transparente, avant le transport de données depuis ledit dispositif esclave, ladite instruction d'émission comprenant une indication de ressources attribuée audit dispositif maître.

**5.** Procédé selon l'une quelconque des revendications 1 à 4, **caractérisé en ce que**

- un dispositif esclave envoie au dispositif maître une requête pour le transport de données sur le réseau,
- le dispositif maître attribue des créneaux temporels audit dispositif esclave pour le transport desdites données selon les paramètres de priorité mémorisés pour ledit dispositif esclave dans le dispositif maître.

**6.** Procédé selon l'une quelconque des revendications 1 à 5, **caractérisé en ce que**

- les données sont cryptées avant le transport.

**7.** Procédé selon l'une quelconque des revendications 1 à 6, **caractérisé en ce que**

- un dispositif esclave est authentifié par ledit dispositif maître avant un transport de données, et
- ledit dispositif maître supprime l'authentification dudit dispositif esclave après ledit transport de données.

**8.** Procédé selon l'une quelconque des revendications 1 à 7, **caractérisé en ce que**

- les données sont transportées après un envoi d'un démarrage d'un signal de trame,
- ledit démarrage de signal de trame est différent pour les liaisons montante et descendante.

**9.** Procédé selon l'une quelconque des revendications 1 à 8, **caractérisé en ce que**

- la liaison logique comprend, pour une liaison montante de transport de données, depuis un dispositif esclave audit dispositif maître, une information relative à un type de codeur permettant de modifier une vitesse d'une transmission de données de charge utile.

**10.** Procédé selon l'une quelconque des revendications 1 à 9, **caractérisé en ce que**

- une transmission de liaison descendante est modulée par CDMA et QPSK.

**11.** Procédé selon l'une quelconque des revendications 1 à 10, **caractérisé en ce que**

- la liaison logique comprend des mots de code de 64 bits pour le codage par CDMA de données à envoyer par le dispositif maître à un dispositif esclave.
- dont deux codes, 31 et 63, sont conçus pour permettre la transmission d'un signal de synchronisation,
- dont deux codes, 1 et 2, sont conçus pour permettre la transmission d'un signal de gestion,
- dont 59 codes sont conçus pour la transmission de données aux dispositifs esclaves.

**12.** Procédé selon l'une quelconque des revendications 1 à 11, **caractérisé en ce que**

- une passerelle est connectée audit coupleur maître,
- ladite passerelle envoie audit coupleur maître une trame Ethernet selon un format défini, accompagnée d'un champ de bit inconnu d'adresse MAC, ladite trame comprenant une adresse de destination dans un champ correspondant à un coupleur esclave,
- lorsque le coupleur maître ne peut identifier l'adresse de destination donnée dans ledit champ d'adresse, le coupleur maître envoie une trame Ethernet de gestion, selon le même format défini, à la passerelle accompagnée d'un ensemble de bits inconnus d'adresse MAC.

**13.** Procédé selon l'une quelconque des revendications 1 à 11, **caractérisé en ce que**

- ladite liaison logique de transport comprenant des données spécifiques pour contrôler un dispositif esclave
- lesdites données spécifiques étant divisées en plusieurs sous-trames de gestion
- chaque sous-trame de gestion mettant en place un service
- un nombre de sous-trame de gestion est fourni au début du champ de données de dispositif esclave.

Figure 1: System configuration

Figure 2: Spectrum occupancy

rate: 10MHz

2. TX_NB_CODE_U0/Ts

start of frame flag

CDMA Header
multiplexing & coding

ethernet frame user #i

MII
controller → FIFO → encoder → interleaver

H
D
M
U
X

FIFO
user #0

FIFO
user #9

D
E
M
U
X

code #1
⋮
code #TX_NB_CODE_MAX-1

} I

code #1
⋮
code #TX_NB_CODE_MAX-1

} Q

FIFO free space

parameters:
TX_NB_CODE_MAX = 61 : maximum number of spreading codes
TX_NB_USER : number of active users
TX_NB_USER_MAX = 10: maximum number of active users
TX_NB_CODE_Ui: number of active codes for the user i

Figure 3: downlink emission: framing

code #31 +
code #63

1

code #1

I

code
#TX_NB_CODE_MAX

Downlink Spreader
I

1/Tc
(5MHz)

7

Tx FIR Filter

5/Tc
(25 MHz)

10

10/Tc
(50 MHz)

↑2

10

Hadamard Sequence
Generation

N
C
O

10

↑2

10

DAC

code #31 +
code #63

code #1

Q

code
#TX_NB_CODE_MAX

Downlink Spreader
Q

1/Tc
(5MHz)

7

Tx FIR Filter

5/Tc
(25 MHz)

10

10/Tc
(50 MHz)

↑2

10

Figure 4: downlink emission: spreading - filtering – up-sampling

75

Figure 5: MII controller

Figure 6: MII controller: state machine

| interframe gap | preamble | sfd | data | interframe gap |
|---|---|---|---|---|

Figure 7: ethernet frame format

| | PRE | ST | OP | PHYAD | REGAD | TA | data | idle |
|---|---|---|---|---|---|---|---|---|
| read | 11....1 | 01 | 10 | AAAAA | RRRRR | Z0 | DDDDDDD | Z |
| write | 11....1 | 01 | 01 | AAAAA | RRRRR | 10 | DDDDDDD | Z |

Figure 8: MII interface: management frame

Figure 9: downlink emission: formation of a CDMA frame

Figure 10: downlink emission: SOF flag generation

Figure 11: downlink emission: header generation

Figure 12: downlink emission: header multiplexing

Figure 13: downlink emission: header encoder

CDMA_HMux_reset
CDMA_HMux_enable
CDMA_HMux_clock
CDMA_HMux_code_type — 4
CDMA_HMux_scrambler_init — 4
CDMA_HMux_length — 16
CDMA_HMux_unused — 12
CDMA_HMux_new_header

**CDMA Header Multiplex**

4 — CDMA_HMux_out

CDMA_HMux_data_available

Figure 14: downlink emission: header multiplexing

RS_clock
RS_ireset
RS_enable
RS_in — 4

**Reed-Solomon Coding RS(15,9,3)**

RS_out_enable

4 — RS_out

Figure 15: downlink emission: header encoder (Reed-Solomon)

$\alpha^6$ $\alpha^9$ $\alpha^6$ $\alpha^4$ $\alpha^{14}$ $\alpha^{10}$

2

4 feedback

1

$Z^{-1}$ $Z^{-1}$ $Z^{-1}$ $Z^{-1}$ $Z^{-1}$ $Z^{-1}$

RS_enable
RS_reset
RS_clock

RS_in[3..0]
information
symbols

d_in    4

Output code words

2

4 — RS_out[3..0]

1

RS_out_enable

Figure 16: downlink emission: Reed-Solomon encoder

Figure 17: downlink emission: payload processing

Figure 18: downlink emission: first convolutive encoder - block

Figure 19: downlink emission: first convolutive encoder - principle

Figure 20: downlink emission: second convolutive encoder - block

Figure 21: downlink emission: second convolutive encoder - principle

Figure 22: downlink emission: interleaver - block

```
for i=0..31,
        for j=0..31
                Memory[i][j] = inlea_datain;
        endfor;
endfor;
```

Figure 23: downlink emission: interleaver - writting

32
(index j)

Figure 24: downlink emission: interleaver - reading

Figure 25: downlink emission: SOF header and payload multiplexing

Figure 26: downlink emission: user to code demux - block

Figure 27: downlink emission: spreading - principle

Figure 28: downlink emission: Hadamard sequence generation

spr_C[0..62]   From spreading code generation

64

Downlink Spreader

c_0   ...   c_62

0/1

spr_reset

spr_clock

spr_enable

spr_in[0]

R

0/1

spr_in    63

spr_enable[0]

spr_enable    0/1

63

...

spr_in[62]

R

0/1

spr_enable[62]

1st node

Σ
(unsigned)    6 (unsigned)

2nd node

Σ
(unsigned)    6 (unsigned)

-   Σ
+   (signed)    spr_out

7 (signed)

binary exclusive or (XOR)

Σ
(unsigned)    unsigned integer adder (result on 6 bits)

Figure 29: downlink emission: spreader

txf_spr    7

txf_reset    TX_FILTER    10    txf_out

txf_clock

Figure 30: downlink emission: shaping filter

interp2_clock

interp2_enable

interp2_reset

11

/2

10

(2)

interp2_in    10

$z^{-1}$    10

(1)

10

interp2_out

Rate: 25MHz    Rate: 50MHz

Figure 31: downlink emission: first interpolation

Figure 32: downlink emission: baseband to IF transposition (NCO)

Figure 33: downlink emission: second interpolation

Figure 34: downlink emission: second interpolation - phase and magnitude of the up-sampler filter

Figure 35: downlink emission: second interpolation - filter response to a dirac

Figure 36: uplink reception: down-sampling & filtering

Figure 37: uplink reception: synchronization, demodulation & de-framing

Figure 38: uplink reception: IF to baseband transposition (NCO)

Figure 39: uplink reception: down-sampler

Figure 40: uplink reception: first and second down-samplers - down-sampling filter response

Figure 41: uplink reception: third down-sampler - down-sampling filter response

rxf_input —10—→ | RX_FILTER | —12—→ rxf_output
rxf_reset ——→
rxf_clock ——→

Figure 42: uplink reception: SRRC filter

filter coefficients
memory

10

rxf_input —10—→ ⊕ —19—→ ⊕ —22—→ | Q | —12—→ rxf_output

Figure 43: uplink reception: SRRC filter – implementation

12

synchronization

sequencer | demodulation → buffer → decode header

decode payload → FIFO

Figure 44: uplink reception: synchronization & demodulation

synchronization

end payload
number bits payload
demodulated = length
payload

synchronization
found

header decoded
& bad header

demodulation

decode payload ← decode header

header decoded
& good header

Figure 45: uplink reception: synchronization & demodulation – sequencer

Figure 46: uplink reception: synchronization

Figure 47: uplink reception: demodulation

Figure 48: uplink reception: demodulation – delay line

Figure 49: uplink reception: demodulation – phase correction

Figure 50: uplink reception: demodulation – QPSK de-mapping

Figure 51: uplink reception: demodulation – reformat output samples

Figure 52: uplink reception: demodulation – update synchronization position

Figure 53: uplink reception: demodulation – update phase

Figure 54: uplink reception: demodulation – update phase – phase computation

Figure 55: uplink reception: de-framing

Figure 56: uplink reception: de-framing – decode header

Figure 57: uplink reception: de-framing - de-interleaver

Figure 58: uplink reception: de-framing - first payload decoder (Viterbi decoder)

Figure 59: uplink reception: de-framing - second payload decoder (Viterbi decoder)

data in ⟶ memory ⟶ data out

buffer in enable ⟶ +1 | counter write

counter read | +1 ⟵ read enable

!=

14     14

SOF read
header read
payload read

⟶ read enable

Figure 60: uplink reception: de-framing – data buffer

ADC 10 → ↓2 → 10 → NCO

10/Tc (50 MHz)    5/Tc (25 MHz)    5/Tc (25 MHz)

10 → ↓2 → 10 → Rx filter → 12 → I

10 → ↓2 → 10 → Rx filter → 12 → Q

AGC

gain: to AFE ⟵

Figure 61: downlink reception: down-sampling & filtering

Figure 62: downlink reception: synchronization - demodulation

Figure 63: downlink reception: de-framing

Figure 64: downlink reception: automatic gain control

Figure 65: downlink reception: first decimation

Figure 66: downlink reception: first decimation - phase and magnitude of the down-sampler filter

Figure 67: downlink reception: first decimation - filter response to a dirac

Figure 68: downlink reception: IF to baseband transposition (NCO)

Figure 69: downlink reception: second decimation

Figure 70: downlink reception: second decimation - phase and magnitude of the down-sampler filter

Figure 71: downlink reception: second decimation- filter response to a dirac

rxf_in —10/→

rxf_reset —→  | RX_FILTER |  —12/→ rxf_out

rxf_clock —→

Figure 72: downlink reception: shaping filter

Figure 73: downlink reception: synchronization

Figure 74: downlink reception: synchronization - synchro block - block

Figure 75: downlink reception: synchronization - synchro block - principle

Input signal
(I&Q)

$F_s$=25 MHz

Delay
line

$F_s$=5 MHz

Tc/5 delay 1 sample
every Ts (every 64*5
samples.)

Delay counter

CplxCorr64_Tc    I

CplxCorr64_Tc    I

CplxCorr64_Tc    Q

CplxCorr64_Tc    Q

Correlation
Point
Memory

(64 I/Q points,
272 bytes)

Figure 76: downlink reception: synchronization - correlation points computation - block

Equiv. Synchro Code (1 bit)
Read at rate 32/Tc (160MHz)
with origin incremented every 32
clocks front

BPSK

$z^{-32}$

rate: 32/Tc (160 MHz)

32/Tc (160 MHz)

signal
rate: 1/Tc(5 MHz)

R

- 32 correlation pts
  defined @ Tc(5MHz)
- Memory intialization
  every Ts (78kHz)
- Output : either @ rate
  32/Tc sequential or 32/Tc
  parallel (data block)

Figure 77: downlink reception: synchronization - correlation points computation - principle

Figure 78: downlink reception: synchronization - maximum searcher

Figure 79: downlink reception: synchronization - synchronization position filter - block

Figure 80: downlink reception: synchronization - synchronization position filter - principle

Figure 81: downlink reception: synchronization - delay line - block

Figure 82: downlink reception: synchronization - delay line - principle

demod_signal

demod_syn_pos

demod_syn_gain

demod_clock

demod_enable

Demodulation
Block

demod_out_symb

demod_out_enable

Figure 83: downlink reception: demodulation - block

20 codes

...

20 codes max to
dispread @ Tc

BPSK
modulation

demod_syn_gain

demod_signal

C*

demod_out_symb

Figure 84: downlink reception: demodulation - principle

Figure 85: downlink reception: de-multiplexing

Figure 86: downlink reception: de-framing - state machine

data_in → BPSK → 2/ → FIFO (12bits)

data available →

SOF flag 12/ → BPSK →

⊗  ⊗  --------  ⊗

⊕

≥10 → SOF detected?

Figure 87: downlink reception: de-framing - detect SOF flag

data in →

begin decoding →

reset →

clock →

Reed-Solomon decoder

block start

block end

check header

36 →  header
→ good header
→ HeaderDecoded_available

error count

fail

Figure 88: downlink reception: de-framing – decode header

data_in →

write counter

de-interleaver: write block

de-interleaver: read block

read counter  10/

→ data_out

10 /  begin block

first block

first block

Is first block?

reset

kind of encoder →  4

kind of encoder

kind of encoder

4 /

payload bit counter

→ first bit read
→ last bit read
→ data available

payload length →  16

payload length

payload length

16 /

write counter

read counter

last bit

Figure 89: downlink reception: de-framing - de-interleaver

Figure 90: downlink reception: de-framing - first payload decoder (Viterbi decoder)

Figure 91: downlink reception: de-framing - second payload decoder (Viterbi decoder)

Figure 92: downlink reception: de-framing – data buffer

rate: 10MHz

Figure 93: uplink emission: framing

Figure 94: uplink emission: spreading - filtering – up-sampling

| SOF flag<br>32 bits - BPSK<br>modulation | header<br>60 bits - QPSK<br>modulation | payload - ethernet frame encoded - QPSK<br>modulation |
|---|---|---|

Figure 95: uplink emission – CDMA frame

Figure 96: uplink emission: header generation

code_type
[0..3]

scrambler
_init
[4..7]

data_length
[8..23]

unused
[24..35]

CDMA_HMux_reset →
CDMA_HMux_enable →
CDMA_HMux_clock →
CDMA_HMux_ code_ type →4
CDMA_HMux_scrambler_init →4
CDMA_HMux_length →16
CDMA_HMux_unused →12
CDMA_HMux_new_header →

CDMA Header
Multiplex

4 → CDMA_HMux_out
→ CDMA_HMux_data_available

Figure 97: uplink emission: header multiplexing

RS_reset →
RS_in_enable →
RS_clock →
RS_in →4

Reed-Solomon
coding
RS(15,9,3)

→ RS_out_enable
→ RS_out

Figure 98: uplink emission: header encoder

CDMA_HMux_reset →
CDMA_HMux_enable →
CDMA_HMux_clock →
CDMA_HMux_code_type →4
CDMA_HMux_scrambler_init →4
CDMA_HMux_length →16
CDMA_HMux_unused →12
CDMA_HMux_new_hea
der →

CDMA Header
Multiplex

4 → CDMA_HMux_out
→ CDMA_HMux_data_available

Figure 99: uplink emission: header multiplexing

RS_clock →
RS_ireset →
RS_enable →
RS_in →4

Reed-Solomon
Coding
RS(15,9,3)

→ RS_out_enable
4 → RS_out

Figure 100: uplink emission: header encoder (Reed-Solomon)

Figure 101: uplink emission: Reed-Solomon encoder

Figure 102: uplink emission: payload processing

$$G = \begin{pmatrix} 1 & 0 & 0 & 1 & 1 \\ 1 & 1 & 1 & 0 & 1 \end{pmatrix}$$

Figure 103: uplink emission: first convolutive encoder - block

Figure 104: uplink emission: first convolutive encoder - principle

Figure 105: uplink emission: second convolutive encoder - block

Figure 106: uplink emission: second convolutive encoder - principle

Figure 107: uplink emission: interleaver - block

32
(index j)

Figure 108: uplink emission: interleaver - writting

```
for i=0..31,
        for j=0..31
                Memory[i][j] = inlea_datain;
        endfor;
endfor;
```

32
(index j)

Figure 109: uplink emission: interleaver – reading

Figure 110: uplink emission: header and payload multiplexing

Figure 111: uplink emission: spreading - filtering – up-sampling

Figure 112: uplink emission: QPSK mapping

Figure 113: uplink emission: QPSK mapping – detailed implementation

Figure 114: uplink emission: QPSK mapping – sequencer – state machine

Figure 115: uplink emission: SRRC filter

Figure 116: uplink emission - SRRC filter - detailed implementation

Figure 117: uplink emission: first interpolation

Figure 118: uplink emission: baseband to IF transposition (NCO)

SOHO
gateway
(master)

PLNIC
(slave)

PLNIC
(slave)

PLNIC
(slave)

**Figure 119: one gateway several slaves**

Idle

authentication
request

Deauthentication
accepted

authentication
denied

Authentication

Deauthentication

End of the data distribution
& deauthentication request

authentication accepted
and begin data distribution

data distribution

**Figure 120: services: state machine**

Header uncoded (36 bits)

| Version number 2 bit | Opcode 4 bits | Optional bits 12 bits | Kind of encoder 1 bit | Scrambler initialisation 3 bits | Payload length 14 bits |
|---|---|---|---|---|---|

**Figure 121 Frame format - Header uncoded**

Header uncoded (36 bits)

| Version number 2 bits | Opcode 4 bits | Optional bits 30 bits |
|---|---|---|

**Figure 122 Management frame format - Header uncoded**

| Start Of Frame (SOF) 12 or 32 bits | Version number 2 bits | Opcode 4 bits | Optional bits 12 bits | Kind of encoder 1 bit | Scrambler initialisation ·3 bits | Payload length 14 bits | Encoding bits 24 bits | Payload between 0 and 24576 bits |

SOF | Header encoded (60 bits) | payload

Header uncoded (36 bits)

**Figure 123 transport frame format**

SOF | Header encoded (60 bits)

Header uncoded (36 bits)

| Start Of Frame (SOF) 12 or 32 bits | Version number 2 bits | Opcode 4 bits | Optional bits 30 bits | Encoding bits 24 bits |

**Figure 124 management frame format**

| Media Access Window MAW #1 | Media Access Window MAW #2 | ... | Media Access Window MAW #N | ... |

**Figure 125 uplink division into Media Access Window**

| Media Access Window MAW #1 | Media Access Window MAW #2 | ... | Media Access Window MAW #N | ... |

| Beacon Management | user data slot#1 | user data slot#2 | ... | user data slot#i | Contention Declaration of new user |

contention free period | contention period

**Figure 126 Media Access: uplink**

**Figure 127 Media Access: time sequence**

**Figure 128 de-authentication request by a user**

EP 1 432 139 B1

**Figure 129 de-authentication request by the gateway**

**Figure 130 Media Access: declaration of new users - no collision**

**Figure 131 Media Access: declaration of new users - collision**

**Figure 132PLT network**

EP 1 432 139 B1

| preamble 7 bytes | SFD 1 byte | Destination address 6 bytes | Source address 6 bytes | Ethertype 2 bytes 0x88c2 | MAC client data + padding 46-1500 bytes | Frame Check Sequence 4 bytes |
|---|---|---|---|---|---|---|

**Figure 133 control ethernet frame format**

| preamble 7 bytes | SFD 1 byte | Destination address 6 bytes | Source address 6 bytes | Ethertype 2 bytes 0x88c2 | MAC client data + padding 46-1500 bytes | Frame Check Sequence 4 bytes |
|---|---|---|---|---|---|---|

| version number 8 bits | Number of MAC management sub-frames 8 bits | MAC management sub-frame | MAC management sub-frame | ... | MAC management sub-frame | padding |
|---|---|---|---|---|---|---|

| type 6 bits | length 10 bits | MAC sub-frame data |
|---|---|---|

**Figure 134 control ethernet frame - detailed format**

| type 000000 | length 10 bits | set/request 8 bits | user 1 resources 64 bits | user 2 resources 64 bits | user 3 resources 64 bits | ... | user N resources 64 bits |
|---|---|---|---|---|---|---|---|

| user's MAC address 48 bits | reserved 5 bits | nbr downlink codes 5 bits | nbr uplink frames 4 bits | MAC address unknown 1 bit | last user resource 1 bit |
|---|---|---|---|---|---|

**Figure 135 MAC management sub-frame - resource plan**

gateway — master node

user authentication request

user authentication response

user authentication confirm

**Figure 136 user authentication time sequence**

121

| type 000001 | length 10 bits | user MAC address 48 bits | reserved 3 bits | authentication 1 bit | operation 2 bits | response 1 bit | MAC address unknown 1 bit |
|---|---|---|---|---|---|---|---|

**Figure 137 user authentication MAC management sub-frame format**

**Figure 138 user authentication – time sequence**

**Figure 139 user de-authentication requested by the gateway**

EP 1 432 139 B1

**Figure 140 user de-authentication requested by the slave node**

| type 000001 | length 10 bits | user MAC address 48 bits | reserved 3 bits | authentication 1 bit | operation 2 bits | response 0 (1 bit) | MAC address unknown 1 bit |
| --- | --- | --- | --- | --- | --- | --- | --- |

**Figure 141 user authentication MAC management sub-frame format**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9844651 A
- EP 0921658 A
- DE 19716011 A
- EP 0975097 A